# EUROPÄISCHE PATENTSCHRIFT

(11) **EP 2 417 561 B1**
(45) Veröffentlichungstag und Bekanntmachung des Hinweises auf die Patenterteilung: **14.08.2013**
(21) Anmeldenummer: 09779276.6
(22) Anmeldetag: 08.04.2009
(51) Int. Cl.: G06K 19/06

(54) **ZWEIDIMENSIONALER SYMBOLCODE UND VERFAHREN ZUM LESEN DES SYMBOLCODES**
TWO-DIMENSIONAL CODE AND METHOD
CODE A DEUX DIMENSIONS ET PROCEDE

(43) Veröffentlichungstag der Anmeldung: 15.02.2012
(73) Patentinhaber: Continental Teves AG & Co. oHG, 60488 Frankfurt (DE)
(72) Erfinder: BIETENBECK, Felix, 61348 Bad Homburg (DE); ZIMMERMANN, Herbert, 61381 Friedrichsdorf (DE); WEIS, Torben, 45481 Mühlheim (DE); PAULI, Josef, 47057 Duisburg (DE); HERWIG, Johannes, 47167 Duisburg (DE)
(74) Vertreter: Höer, Daniela
(86) Internationale Anmeldenummer: PCT/EP2009/054271
(87) Internationale Veröffentlichungsnummer: WO 2010/115464

(56) Entgegenhaltungen:
- US-A- 5 869 828
- US-A1- 2002 028 015
- US-B1- 6 220 333

## Beschreibung

Die Erfindung betrifft einen zweidimensionalen, insbesondere maschinenlesbaren Symbolcode zur Darstellung binärer Daten, der aus mehreren in vorzugsweise horizontaler und/oder vertikaler Richtung nebeneinander angeordneten grafischen Symbolen aufgebaut ist, wobei der Symbolcode aus genau zwei verschiedenen Symbolen gleicher Fläche gebildet ist, die sich in ihrer flächigen Helligkeitsverteilung unterscheiden und jeweils einen Wert eines binären Datenworts kodieren. Ferner werden erfindungsgemäß ein Verfahren zum Lesen dieses Symbolcodes, eine besonders bevorzugte Verwendung und eine geeignete Lesevorrichtung beschrieben.

Um die Fertigung und Qualitätsprüfung von Produkten zu automatisieren, werden einzelne Bauteile, die in einer Produktionsstraße hauptsächlich maschinell zu einem Gesamtprodukt montiert werden, mit maschinenlesbaren Symbolcodes bestehend aus grafischen Symbolen markiert. An Montage- oder Prüfstationen einer Fertigungsanlage sind Lesegeräte so positioniert, dass diese die aufgebrachten Symbolcodes erfassen, lesen und auswerten können. Abhängig von dieser Auswertung kann dann der weitere Produktionsablauf gesteuert werden, beispielhaft durch Ansprechen einer Produktionsweiche, Greifen des Objekts durch einen Roboterarm oder sonstige Maßnahmen.

Soll ein bestimmtes Bauteil mit einem maschinenlesbaren Symbolcode, nachfolgend auch vereinfachend als Code bezeichnet, markiert werden, haben sich zweidimensionale Matrixcodes etabliert. Verglichen mit eindimensionalen Barcodes (auch Strichcode oder Balkencode genannt) haben zweidimensionale Codes eine viel höhere Datendichte, d.h. es können mehr Dateninformationen bei gleichem Platzbedarf an äußerer Fläche des zu markierenden Objekts enkodiert werden.

Einfache zweidimensionale Codes können als Stapel eindimensionaler Codes verstanden werden. Zweidimensionale Matrixcodes hingegen speichern Datenworte flächenhaft. Verbreitete eindimensionale Codes sind: EAN (European Article Number, ISO/IEC 15420), IAN (International article numbering), JAN (Japanese article numbering), 2/5 Interleaved (ISO/IEC 16390), Code39 (ISO/IEC 16388), Code93 sowie Code128. Als gestapelte eindimensionale Codes sind bekannt: Codablock oder PDF417.

Verbreitete zweidimensionale Matrixcodes sind: QR Code (Quick Response Code, ISO/IEC 18004), DataMatrix (DIN V 66401), MaxiCode, Aztec Code, Dotcode/Punktcode, MicroGlyph, Panamarks, Semacode, UPCODE, Trillcode, Quickmark, Shotcode, connexto oder Beetagg.

Eindimensionale Barcodes werden nur dort zur Automatisierung eingesetzt, wo wenige Daten gespeichert werden sollen, die verfügbare Fläche zum Aufbringen der Markierung groß ist und keine Verschmutzungen zu erwarten sind. Üblicherweise ist eine solche Aufbringfläche mehrere Zentimeter groß und ein Vielfaches breiter als hoch. Da numerische oder alpha-numerische Ziffern durch Variation der Abstände von hellen und dunklen Balken zueinander und der Balkenbreite kodiert sind, ist in der Praxis ein Kontrast von 50 bis 60 Prozent für eine erfolgreiche Auswertung notwendig. Aus demselben Grund führt Verschmutzung zu nicht behebbaren Lesefehlern. Diese Barcodes weisen keine Möglichkeit zur Fehlerkorrektur auf, haben jedoch eingebaute Parity-Bits zur Fehlererkennung. Ein Lesefehler kann daher zwar bemerkt, aber nicht korrigiert werden, weshalb sie für den eingangs genannten Zweck nicht robust genug sind.

Gestapelte zweidimensionale Codes haben eine erhöhte Datendichte. Ein typischer Abdruck des PDF417-Codes ist 7 bis 15 cm² groß und erzielt eine typische Datendichte von 15,5 bis 46,5 Byte je cm². Die maximale Codegröße ist auf 2000 8-Bit (Byte) Zeichen begrenzt. Der PDF417-Code ist fehlerkorrigierend. Bei gestapelten Codes muss die Abtastlinie beim Lesevorgang jedoch genau über der äquivalenten grafischen Symbollinie liegen, was deren erreichbare Kompaktheit begrenzt. Die Codierung kann auf numerische, alphanumerische und binäre Daten optimiert erfolgen. Zweidimensionale Matrixcodes sind fehlerkorrigierend und kompakt, da die als Worte bezeichneten Datenwerte flächig gespeichert werden. Es werden also direkt die Binärdaten gespeichert und nicht zwischen numerischen oder alphanumerischen Werten unterschieden. Üblicherweise existieren jeweils ein grafisches Symbol, welches ein Eins-Wort, und ein zweites grafisches Symbol, welches ein Null-Wort charakterisiert. Bei einigen Matrixcodes, bspw. Data Matrix, besteht die Charakterisierung des Null-Worts auch durch das Nicht-Vorhandensein des Symbols für ein Eins-Wort an dieser Position. Dies erhöht jedoch die Fehleranfälligkeit, da das Nichterkennen eines Symbols zu der Annahme führen kann, dass dort das andere Symbol kodiert ist, auch wenn bspw. nur eine Verschmutzung oder Überblendung vorliegt. Bei einem Matrixcode wird ein Markierungsbereich gitterartig zeilen- und spaltenweise in meist gleich große Zellen unterteilt. In jede dieser Zellen wird ein Symbol geschrieben.

Ein zweidimensionaler Symbolcode wird dann entweder auf ein Etikett aus Papier gedruckt und dieses auf das zu markierende Objekt geklebt oder es wird nach dem sogenannten DPM-Verfahren (Direct Part Marking) direkt von insbesondere einem Laser auf das Objekt gebrannt bzw. allgemein aufgebracht. Wird Lasertechnik zum direkten Aufbrennen der graphischen Symbole eines solchen maschinenlesbaren Codes auf ein mechanisches oder elektronisches Bauteil angewandt, so müssen verfahrenstechnische Beschränkungen berücksichtigt werden, die Auswirkung auf die optische Qualität der aufgebrachten Markierungen haben und eine spätere Dekodierung der einzelnen Symbole durch ein Bildverarbeitungssystem beeinträchtigen.

Der Data Matrix Code ist eine quadratische oder rechteckige Symbolmatrix, die aus weißen (unbearbeitete Bereiche) und schwarzen (bearbeitete Bereiche) quadratischen Zellen besteht, welche jeweils den Wert eines einzelnen Bits kodieren. Er besitzt eine als "Finder Pattern" bezeichnete durchgehend schwarze Linie, die den Symbolbereich in X- und Y-Richtung vorgibt und mit der die Bildverarbeitung die Symbolmatrix lokalisieren und entzerren kann. An den jeweils gegenüberliegenden Seiten ist ein festes Muster zur Synchronisation angebracht, welches in einer Linie weiße und schwarze Quadrate in abwechselnder Reihenfolge enthält, die die Höhe bzw. Breite einer Zeile oder Spalte der Symbolmatrix angeben. Mehrere dieser Symbolmatrizen können direkt neben- und übereinandergelegt werden. Data Matrix unterstützt eine ECC200 Fehlerkorrektur nach Reed-Solomon mit bis zu 60% redundanter Information. Zwischen weißen und schwarzen grafischen Symbolen muss ein Kontrastunterschied von mindestens 20% bestehen.

Der QR-Code (Quick Response Code) ist von quadratischer Form und wurde zur Markierung von Baugruppen und Komponenten in der Automobilproduktion entwickelt. Der QR-Code hat zur einfachen Erkennung der Lage und seiner Ausrichtung vier spezielle Symbole, die als Anker bezeichnet werden. Diese dienen zur Lokalisierung und Entzerrung. Drei dieser Anker dienen als Hauptanker zur Positionserkennung und ein weiterer, kleinerer Anker dient zur Ausrichtung. Worte, d.h. die zugehören Datenwerte, sind in grafischen Symbolen kodiert, die schwarze ausgefüllte (bearbeitete Bereiche) und weiße weggelassene (unbearbeitete Bereiche) Quadrate darstellen, ähnlich Data Matrix. Zur Synchronisierung ist innerhalb der Symbolmatrix ein linienförmiges Muster von abwechselnd ausgefüllten und nicht ausgefüllten Quadraten für jede Richtungsachse enthalten. Der QR Code liegt in verschiedenen Typen und Formaten vor, wobei der Typ und das Format neben den drei Hauptankern fest codiert sind. Im Anschluss können die eigentlichen Datensymbole extrahiert und dekodiert werden. Der QR Code unterstützt bis zu 30% redundante Information durch Reed-Solomon Fehlerkorrektur.

Während Data Matrix und QR-Code spezielle grafische Muster zur Wiedergewinnung der Taktung in die grafische Symbolmatrix eingeflochten haben, ist der durch die Xerox Corporation entwickelte MicroGlyph-Code selbsttaktend und kommt ohne solche Synchronisationsmuster aus. Dieser Code ist beispielsweise in der US 5,862,271 beschrieben.

Die Eigenschaft der Selbsttaktung wird grundsätzlich dadurch erreicht, dass benachbarte grafische Symbole nicht miteinander verschmelzen, wie das etwa bei Data Matrix und QR der Fall ist, wenn jeweils mindestens zwei schwarze oder weiße quadratische Symbole direkte Nachbarn sind. Die grafischen Symbole werden hier als Glyphen bezeichnet und sind in vorbestimmter Verteilung von gekachelten Datenzellen auf eine Fläche gedruckt. Innerhalb einer Datenzelle befindet sich das grafisches Symbol, welches ein Wort kodiert. Eine dieser Datenzellen kann als Pixelbild aufgefasst werden, in das ein grafisches Symbol gezeichnet wird, wobei in den äußeren Randbereich einer Datenzelle möglichst nicht gezeichnet wird, um benachbarte Datenzellen voneinander trennbar zu halten.

Der Form eines solchen grafischen Symbols wird ein Wort zugeordnet. Eine solche Form hat dabei eine oder mehrere charakteristische Merkmale. Die bei einer speziellen Instanz eines solchen grafischen Symbols vorliegenden Ausprägungen der charakteristischen Formmerkmale geben in ihrer Gesamtheit das kodierte Wort an. Um ein Wort aus einem gegebenen grafischen Symbol zu dekodieren, werden in der Bildanalyse mehrere Filter auf das grafische Symbol angewandt, die jeweils auf ein einziges der möglichen vorgegebenen Formmerkmale besonders gut ansprechen und dabei zu allen anderen, möglicherweise zusätzlich vorliegenden Formmerkmalen möglichst keine Filterantwort erzeugen. Nachdem jeder Filter angewandt worden ist, wird aufgrund der Filterantworten aller Filter das Wort in serieller Vorgehensweise dekodiert.

Wird konkret ein Binärwort in grafischen Symbolen kodiert, so sind zwei charakteristische Formmerkmale und daher insgesamt zwei Filter nötig. Zur perspektivischen Entzerrung wird von einer rechteckigen oder quadratischen Symbolmatrix ausgegangen, sodass aus an Ecken befindlichen grafischen Symbolen oder aus drei Bezugspunkten mit ähnlicher Konfiguration die entsprechenden Parameter errechnet werden können. Daher ist die Anbringung nur auf möglichst ebenen Flächen möglich. Auch hier wird die Dekodierung durch eine Reed-Solomon Fehlerkorrektur der kodierten Binärworte unterstützt.

Bei MicroGlyph werden mehrere Filter angewandt und deren Antworten zweidimensional topologisch in einem Antwortbild gespeichert. Filterantworten sollten sich dabei an Positionen häufen, die einem Glyph zuzuordnen sind. Ähnliche Konzepte werden auch in anderen Verfahren verwandt, wobei sich das Problem ergibt, lokale Maxima der Filterantworten zu finden. Auch können die Filterantworten durch (teilweise) Beschädigung des zu filternden Originals des Symbolcodes stark in ihrer Ausprägung und Anzahl variieren. Zudem ist ihre topologische Lage auch im lokalen Bereich von erwarteten Nachbarn nicht exakt vorhersagbar. Daher ergeben sich mit den üblich verfolgten Ansätzen bzw. Analyseverfahren regelmäßig Probleme bei der Dekodierung, insbesondere wenn die äußeren Gegebenheiten beispielsweise durch Reflexionen oder gekrümmte Oberflächen nicht optimal sind.

Im Rahmen der bekannten Methoden kann auf ein gewonnenes Antwortbild durch absolute Schwellenwertbildung eine Pixelmenge definiert werden, die mit hoher Wahrscheinlichkeit ausschließlich Symbolmittelpunkte oder Pixel sehr nahe dieser Mittelpunkte enthält. Diese Punktemenge kann über die Minimierung der euklidischen Abstände der Entfernungen aller Punkte eines Clusters zu dessen eigenem Schwerpunkt in Untermengen aufgeteilt werden, die jeweils dem Einzugsbereich eines Symbols entsprechen. Dies kann beispielsweise mit dem K-Means Algorithmus erreicht werden. Der Pixel mit maximalem Antwortwert innerhalb einer jeden Untermenge beschreibt dann den wahrscheinlichsten Symbolmittelpunkt. Gemäß einer Alternative kann durch Schwellenwertbildung ein Schwellenwertbild erzeugt werden, welches nur Pixel einer Filterantwort mit Werten über einem gesetzten Schwellenwert enthält.

Der Pixel mit maximaler Filterantwort kann sicher als ein Symbolmittelpunkt angenommen werden. Ausgehend von diesem Startpunkt kann bei bekannter Schrittweite (der Seitenlänge einer Symbolvorlage) versucht werden, die weiteren Symbolmittelpunkte nach einem vorgegebenen Gittermuster oder adaptiv entsprechend der erwarteten Anordnung der Symbolzellen zu erwandern. Dabei werden aufeinanderfolgende Symbolmittelpunkte durch Inkrementieren von Koordinaten geschätzt und anschließend deren Position dadurch korrigiert, dass in einer kleinen lokalen Umgebung um diese Schätzung herum (von etwa 20 bis 25 Prozent der Seitenlängen der Symbolvorlage) ein maximaler Grauwert im Schwellenwertbild gesucht wird. Der zugehörige Pixel wird dann als Symbolmittelpunkt gesetzt, da anzunehmen ist, dass dieser eine verbesserte Schätzung der Position ist.

Beide zuvor angedeutete Verfahren zur Extraktion von Symbolmittelpunkten haben den Nachteil, dass nur Pixel mit Werten über einem globalen Schwellenwert als mögliche Symbolmittelpunkte in Betracht gezogen werden. Ist die Symbolmatrix in einem bestimmten Bereich stark verschmutzt, zerkratzt oder anderweitig zerstört, so werden die zuvor festgelegten Schwellenwerte ggf. nicht erreicht und die in diesem Symbolcodebereich enthaltene Information verworfen. Ist nämlich der globale Schwellenwert zu hoch gewählt, werden im beschädigten Bereich unter Umständen gar keine Symbolmittelpunkte vermutet. Wird der globale Schwellenwert in Reaktion darauf gesenkt, so können auch im beschädigten Bereich Evidenzen für mögliche Symbolmittelpunkte auftreten. Zugleich wird aber in unbeschädigten Bereichen eine Vielzahl Pixel zusätzlich als wahrscheinliche Symbolmittelpunkte klassifiziert, was das Lokalisieren wahrer Symbolmittelpunkte erschwert und zu fehlerhaften Schätzungen führt.

Bei der Anbringung eines grafischen Symbolcodes auf einem Bauteil mit stark reflektierender Oberfläche nimmt die Zuverlässigkeit bei der Erkennung und Dekodierung des Symbolcodes in Datenworte stark ab. Mit den gebräuchlichen Data Matrix und QR-Codes sowie bei MicroGlyph wird durch die in die zu kodierenden Binärworte eingebaute Fehlerkorrekturfunktion versucht, die Nichterfassung einzelner oder größerer Bereiche von grafischen Symbolen ignorierbar zu machen, die durch Spiegelung der Oberfläche in der Bildaufnahme überbelichtet und somit wertlos sind. Aber auch das Extrahieren korrekt belichteter Bildteile wird schwierig, da die Varianzen der Grauwerte aufgrund lokaler Helligkeitsunterschiede bedingt durch das reflektierende Material hoch sind. So müssen adaptive Verfahren in der Bildauswertung zur Vorverarbeitung angewandt werden, deren Erfolg wegen sprunghafter Änderungen in der lokalen Helligkeit ebenfalls begrenzt ist und möglicherweise sogar verwertbare Helligkeitsinformation zerstört. Es wird versucht eine möglichst homogene, diffuse Ausleuchtung des relevanten Bereichs zu erreichen, um die Bildverarbeitung zu unterstützen. Aus Platzmangel ist eine spezielle Beleuchtung jedoch nicht immer möglich.

Ist ein DPM (Direct Part Marking) Verfahren nicht unbedingt notwendig, so kann der Symbolcode auf ein Papieretikett gedruckt werden, welches anschließend auf das zu markierende Objekt geklebt wird. Das ermöglicht zwar ein erfolgreiches Lesen der Markierung, aber das zusätzliche Papier am Objekt ist ein Fremdkörper, der zu Qualitätsproblemen in dem Produktionsprozess führen kann. Wird beispielsweise das markierte Objekt von einem Roboterarm zum Transport gefasst, kann es zu Abrieb kleiner Papierfasern von dem Papieretikett kommen, die vom Roboterarm abfallen und elektronische Bauteile zerstören können. In hitzeintensiven Produktionsabläufen ist ein Papieretikett wegen Brandgefahr keine Option. Soll der Symbolcode zur eindeutigen Identifizierung untrennbar mit einem Objekt verbunden bleiben, bietet ein geklebtes Papieretikett auch keinen Schutz gegen Manipulation durch einfaches Austauschen. Zudem wird ein zusätzlicher Verarbeitungsschritt zum Ankleben des Etiketts in den geplanten Produktionsablauf eingeführt.

Kann nicht auf ein DPM (Direct Part Marking) Verfahren verzichtet werden, so kann die zu markierende spiegelnde Oberfläche vor dem Aufbrennen des Symbolcodes durch den Laser aufgeraut werden, sodass der Objekthintergrund matt und nicht reflektierend ist. Somit kann das Problem starker Reflexion vermieden werden. Aber der Kontrast verringert sich und das Aufrauen nimmt zusätzliche Zeit in Anspruch, was eine Verringerung der Taktzyklen begrenzt.

Aufgabe der vorliegenden Erfindung ist es daher, einen robusten, effektiven und mit hoher Sicherheit dekodierbaren zweidimensionalen Systemcode und ein darauf optimiertes Leseverfahren vorzuschlagen, mit denen die Zuverlässigkeit der Kennzeichnung insbesondere auch in realen Produktionsumgebungen verbessert werden kann. US-B-6 220 333 offenbart einen Symbolcode gemäß dem Merkmalen des Oberbegriffes von Anspruch 1.

Diese Aufgabe wird bei einem zweidimensionalen Systemcode der eingangs genannten Art erfindungsgemäß mit den Merkmalen des Anspruchs 1 gelöst. Dabei ist vorgesehen, dass die Symbole eine komplementäre Helligkeitsverteilung aufweisen.

Dazu besteht jedes der beiden Symbole aus einer flächigen Anordnung von genau zwei Bereichen, die jeweils genau einen von zwei vorgegebenen Helligkeitswerten aufweisen. Jedes einzelne Symbol weist damit zwei verschiedene Helligkeiten auf, d.h. eine Helligkeitsverteilung. Einem der beiden Helligkeitswerten kann logisch der Wert "hell" und dem anderen der beiden Helligkeitswerte kann logisch der Wert "dunkel" zugewiesen werden. Einer bestimmten Kombination der örtlich verteilten Helligkeitswerten "hell" und "dunkel" innerhalb eines Symbols ist dann ein Datenwort zugewiesen. Hierfür ist grundsätzlich jeder durch eine Detektoranordnung messbare Helligkeitsunterschied zwischen den beiden Bereichen erfindungsgemäß ausreichend. Nachfolgend werden diese Bereiche vereinfachend als "hell" und "dunkel" bezeichnet.

Eine komplementäre Helligkeitsverteilung wird insbesondere erreicht, indem jedes der beiden zur eindeutigen Kodierung eines Binärwortes benötigten Symbole dieselbe flächige Ausdehnung bzw. Anordnung der Bereiche aufweist, denen für jedes bestimmte Symbol jedoch gerade die verschiedenen (entgegensetzten) der insgesamt zwei Helligkeitswerte "hell" und "dunkel" zugewiesen sind, wobei jeder Abschnitt der einem Symbol zugeordneten Fläche einem dieser beiden Helligkeitswerte zugewiesen ist. Da jedem dieser komplementären Symbole eindeutig einer der beiden möglichen Werte des binären Datenworts zugeordnet ist und durch den komplementären Aufbau der Symbole eine maximale Unterscheidbarkeit erreicht wurde, ist dieser Symbolcode besonders robust. Er ist daher insbesondere auch für gekrümmte und reflektierende Oberflächen geeignet, auf die der Symbolcode durch eine Oberflächenbearbeitung auch unmittelbar aufgebracht sein kann, insbesondere wenn die inneren Helligkeitsbereiche der Symbole in ihrer Verteilung zur erwarteten auftretenden Verzerrung möglichst invariant gewählt ist. Ein derartiges DPM-Verfahren (Direct Part Marking) wird häufig mittels eines Lasers durchgeführt, mit dem der Symbolcode auf einer Oberfläche aufgebrannt wird. Im Rahmen der Markierungsgenauigkeit können dabei Überschneidungen der hellen und dunklen Bereich auftreten, die erfindungsgemäß der komplementären Anordnung der Bereiche nicht entgegenstehen.

Zusammenfassend besteht jedes Symbol der Symbolfamilie also aus einer Vielzahl (mindestens zwei) von räumlich zusammenhängenden Bereichen, wobei alle Symbole einer Familie die gleiche Anordnung von Bereichen aufweisen. Jeder dieser Bereiche ist entweder logisch hell oder dunkel ausgefüllt, wobei nicht alle dieser Bereiche eines Symbols zugleich logisch Hell oder logisch Dunkel sind. So sind zwei zueinander komplementäre Symbole darstellbar, und jedes einzelne der Symbole ist eindeutig einem Wert eines binären Wortes zuzuordnen.

Kennzeichnend für den komplementären Aufbau der Symbole ist, dass für die Entscheidung, welches der beiden Symbole abgebildet ist, nur die Anwendung eines einzigen Filters nötig ist, der einem der beiden Symbole entspricht. Im Falle einer Übereinstimmung des Filters mit dem Symbol ergibt sich eine im Idealfall sogar vollständige Übereinstimmung. Im Falle eines zu dem Symbol komplementären Filter ergibt sich eine im Idealfall vollständige Abweichung. Im Rahmen einer Bildauswertung ist eine Unterscheidung der komplementären Symbole jedoch auch dann gewährleistet, wenn es aufgrund der Markiergenauigkeit zu Überlappungen von hellen und dunklen Bereichen der Symbole kommt, weil sich dann durch die Anwendung des einen Filters eine überwiegende Übereinstimmung mit oder ein überwiegende Abweichung von dem Symbol des Symbolcodes ergibt.

Gemäß einer bevorzugten Ausbildung der Erfindung besteht jedes Symbol aus genau zwei insbesondere zusammenhängenden Bereichen, wobei den beiden Bereich jeweils ein unterschiedlicher Helligkeitswert zugeordnet ist. Die Flächen der beiden Bereiche in einem Symbol können erfindungsgemäß im Wesentlichen gleich groß sein, wobei Abweichungen im Flächeninhalt zwischen den beiden Bereichen in der Größenordnung von bis zu etwa 1/9 der Gesamtfläche als im Wesentlichen gleich groß angesehen werden. Hintergrund dieser Abweichung ist, dass es gemäß einer bevorzugten Ausführungsform der Erfindung vorgesehen ist, dass ein grafisches Symbol des Symbolcodes eine quadratische Grundfläche aufweist, die zur Definition der Bereiche des Symbols in 3 x 3 Pixel aufgeteilt ist. Auch wenn die vorliegende Erfindung nicht auf eine derartige Matrixanordnung beschränkt ist, lässt sich eine solche Anordnung in der Praxis sowohl bei dem Erzeugen als auch bei dem Lesen des Symbolcodes besonders einfach auswerten. Eine 3 x 3-Matrix bietet dabei einen optimalen Ausgleich zwischen der im Rahmen einer optischen Auflösung benötigten Symbolgröße für ein einzelnes Symbol (Unterscheidbarkeit) und einer ausreichend hohen Datendichte. In einer derartigen Matrix können einem Bereich mit dem ersten Helligkeitswert 4/9 der Gesamtfläche des Symbols und einem zweiten Bereich mit zweiten Helligkeitswert 5/9 der Gesamtfläche des Symbols zugeordnet werden. Der Größenunterschied der beiden Bereiche liegt also in der Größenordnung von 1/9 des gesamten Flächeninhalts des Symbols.

Gemäß einer bevorzugten Ausführung der Erfindung sind die beiden Bereiche jeweils aus räumlich zusammenhängenden Flächen aufgebaut. Dies ermöglicht ein vektororientiertes Erzeugen des flächigen Symbolcodes, bspw. durch Verfahren eines eingeschalteten Lasers entlang eines definierten Verfahrwegs, ohne dass der Laser während des Verfahren ein- oder ausgeschaltet werden muss, um die dem flächigen Symbol entsprechende Markierung zu erzeugen. Durch flächig zusammenhängende Bereiche wird ferner der in der Praxis immer fehlerhafte Übergang zwischen den beiden Helligkeitsbereichen minimiert. Dies verbessert die erreichbare Unterscheidbarkeit der Symbole und reduziert die Fehlerrate beim Lesen des flächigen Symbolcodes.

Ein erfindungsgemäß besonders bevorzugtes quadratisches Symbol weist entlang eines parallel zu seinen Seitenkanten verlaufenden Schnitts durch den Mittelpunkt des Symbols eine Verteilung der logischen "hell"- und der logischen "dunkel"-Bereiche jeweils ein Verhältnis von 1:2 bzw. im komplementären Fall 2:1 auf. Dies bedeutet, dass der helle Bereich entlang dieses Schnittes 1/3 und der dunkle Bereich 2/3 der Schnittlänge abdeckt bzw. umgekehrt. Vorzugsweise ist diese Verteilung entlang der beiden möglichen, parallel zu den Seiten verlaufenden Schnitte durch den Mittelpunkt des Symbols gleich. Ein derartiges Symbol mit den genau zwei räumlich jeweils zusammenhängenden Bereichen der Helligkeitsverteilung wird erfindungsgemäß insbesondere durch einen quadratischen Bereich mit einer Seitenlänge von 2/3 der Seitenlänge des Symbols und einen L-förmigen Bereich mit gleichlangen Schenkeln gebildet, die an zwei aneinanderstoßenden Seiten des Quadrats anliegen und jeweils die gesamte Seitenlänge des Symbols aufweisen. Zusammengesetzt weist dieses erfindungsgemäß besonders bevorzugte Symbol daher auch eine quadratische Grundfläche auf.

Insbesondere diese Symbole mit quadratischer Grundfläche sind erfindungsgemäß in horizontaler und/oder vertikaler Richtung, d.h. den entlang der Seiten der Symbole verlaufenden Richtungen, nebeneinander angeordnet. Dabei stoßen die Seiten der einzelnen Symbole direkt aneinander an und bilden den Symbolcode, dessen optische Darstellung auch als Symbolmatrix bezeichnet wird, in der die Informationen durch die Anordnung der einzelnen Symbole kodiert sind. Die Symbolmatrix ist aus einzelnen Datenzellen aufgebaut, deren Größe und Geometrie genau den einzelnen Symbolen des zweidimensionalen Systemcodes entsprechen. Da die einzelnen Symbole des Systemcodes unmittelbar benachbart zueinander angeordnet werden, weist auch die die grafische Darstellung des Symbolcodes bildende Symbolmatrix zwischen ihren einzelnen Datenzellen bevorzugt keinen Freiraum auf. Die Symbolmatrix kann in ihrer Außenform beispielsweise eine rechteckige oder quadratische Form aufweisen. Es ist jedoch auch möglich, die Breite und Anordnung zeilen- und/oder spaltenweise an den auf einer Oberfläche zur Verfügung stehenden Raum anzupassen.

Durch die unmittelbar aneinander angrenzende Anordnung der Symbole, d.h. eine Anordnung ohne Trennzeichen und Freiräume, wird ein sehr flächeneffektiver, zweidimensionaler Systemcode erzeugt, der bei außerordentlich guter Lesbarkeit eine große Informationsdichte aufweist. Daher kann der erfindungsgemäße Systemcode bspw. auch sehr gut verwendet werden, um die Fertigung und Qualitätsprüfung von Produkten in einer Produktionsstraße zu ermöglichen, in der einzelne Bauteile zu dem einem Gesamtprodukt zusammengesetzt werden. Sofern die Bauteile an von außen lesbaren Oberflächenpositionen mit einem derartigen Code versehen sind, kann ein automatisches Tracking der einzelnen Bauteile während der gesamten Produktion durchgeführt und sogar gespeichert werden. Dies verbessert die Qualitätssicherung und ermöglicht auch bei im Nachhinein auftretenden Problemen, systematische Fehlerursachen zu rekonstruieren. Abgesehen davon kann der erfindungsgemäße Systemcode auch zur automatischen Steuerung von Produktionsabläufen verwendet werden, wie er bereits eingangs beschrieben wurde.

Ferner kann der Symbolcode erfindungsgemäß mehrere Symbolpaare komplementärer Helligkeitsverteilung aufweisen, die sich in ihrer Farbe unterscheiden. So ist es erfindungsgemäß möglich, neben der bereits ausführlich beschriebenen Helligkeitsverteilung Symbole unterschiedliche Farbe vorzusehen, so dass der Helligkeitsverteilung jeweils eine Kombination von Farben zugewiesen ist, die durch ein Erfassungssystem optisch voneinander getrennt werden können. Während eine Kodierung mit Symbolen einer komplementären Helligkeitsverteilung die Kodierung der Wortlänge Eins ermöglicht, kann durch die Verwendung zusätzlicher Farben ein Multi-Wort-Kodierung erhalten werden, welche Worte einer Länge größer als Eins durch grafische Symbole kodiert. Dabei ist die flächige Anordnung der Helligkeitsverteilung in allen Symbolen und ihren komplementären Symbolen vorzugsweise gleich. Sie unterscheiden sich lediglich in ihrer Farbgebung. Die ursprünglich binäre Wortmatrix wird dann als eine um die Menge von möglichen Farbkombinationen entsprechend erweiterte Wortmatrix aufgefasst.

Ein weiterer Aspekt der Erfindung bezieht sich auf ein Verfahren zum Lesen eines zweidimensional Systemcodes gemäß den Merkmalen des Anspruchs 3. Der Systemcode ist aus mehreren nebeneinander angeordneten grafischen Symbolen aufgebaut, wobei der Symbolcode aus genau zwei verschiedenen Symbolen gleicher Fläche gebildet ist, die sich in ihrer flächigen Helligkeitsverteilung unterscheiden und jeweils einen Wert eines binären Datenworts kodieren. Die beiden Symbole weisen eine komplementäre Helligkeitsverteilung auf. Das Verfahren zum Lesen eines solchen Systemcodes sieht erfindungsgemäß vor, dass auf den Systemcode ein, vorzugsweise ein einziger, Filter angewendet wird. Das Anwenden eines Filters auf den Symbolcode wird nachfolgend auch als Abtasten des Symbolcodes mit einem Filter bezeichnet. Vorteilhafter Weise kann der eine Filter mit der Helligkeitsverteilung eines der beiden komplementären Symbole übereinstimmen, wobei im Falle einer Übereinstimmung das eine Symbol und im Falle einer Nicht-Übereinstimmung das andere Symbol erkannt wird. Mit Übereinstimmung bzw. Nicht-Übereinstimmung kann auch jeweils der Grad der vollständigen Übereinstimmung bzw. der vollständigen Nicht-Übereinstimmung gemeint sein.

Der zweidimensionale Systemcode kann bspw. in Form einer grafischen Symbolmatrix oder eines Ausschnitts davon vorliegen, wie er durch eine optische Aufnahmeeinrichtung erfasst wurde. Ziel des Lesens ist das Bilden einer binären Wortmatrix bzw. eines binären Wortes, welches die in dem Systemcode dargestellten bzw. kodierten Informationen wiedergibt.

Bei den bekannten Verfahren, wie bspw. dem Lesen von MicroGlyphen, ist es notwendig, für jeden kodierten Bitwert einen eigenen Filter vorzusehen. In solchen Fällen muss beim Lesen des Systemcodes durch Analyse seiner grafischen Darstellung bspw. in einer Symbolmatrix eine entsprechende Rechenoperation zum Erkennen der Symbole mehrfach erfolgen, wobei jeweils lokale Maxima der Filterantworten gefunden werden und mit vorgegebenen Schwellenwerten verglichen werden müssen. Im Falle zu starker Verschmutzung oder sonstiger Beschädigung des Symbolcodes werden diese vorgegebenen Schwellen nicht erreicht, so dass der Symbolcode unter Umständen als nicht mehr lesbar interpretiert wird, obwohl die Informationen an sich doch noch auswertbar wären. Im Gegensatz zu den durch die Anwendung der mehreren Filter zeitaufwendigen Leseverfahren, die durch den Schwellenwertvergleich zudem möglicherweise Informationen enthaltenden Symbolcode verwerfen, wird durch die erfindungsgemäße Anwendung eines einzigen Filters auf den Symbolcode sowohl die Rechenzeit reduziert als auch das Leseergebnis verbessert, weil das Leseergebnis entweder dem einen oder dem anderen Symbol zugewiesen wird und somit für das Erkennen des Symbols kein Vergleich mit extern festzulegenden Schwellenwerten notwendig ist.

Unsicherheiten können natürlich dann auftreten, wenn eine Zuordnung zu dem einen oder dem anderen Symbol nicht sicher möglich ist. Um die Aussagekraft des Erkennens eines Symbols zu berücksichtigen, wird gemäß einer besonders bevorzugten Ausführungsform der Erfindung vorgeschlagen, dass als Filter ein Korrelationsfilter verwendet wird, der das Ergebnis einer Abstandsfunktion ermittelt, welche die Entfernung der vorliegenden Helligkeitsverteilung, insbesondere einer Grauwertverteilung, von der Helligkeitsverteilung, insbesondere der Grauwertverteilung, des Korrelationsfilters angibt. Erfindungsgemäß kann die Anwendung einer Korrelationsfilters zum Lesen eines zweidimensionalen Systemcodes auch unabhängig von dem Vorhandensein von Symbolen komplementärer Helligkeitsverteilung eingesetzt werden, d.h. bei in der flächigen Anordnung der Muster verschiedenen Symbolen. Dies erfordert in der Regel zwar den Einsatz mehrerer verschiedener Korrelationsfilter, was bei einer ausreichenden Rechenleistung in der Bildauswertung jedoch grundsätzlich möglich wäre. Besonders bevorzugt ist jedoch das Anwenden eines einzigen Korrelationsfilters auf die komplementären Symbole, weil hierfür eine geringe Rechenleistung und eine hohe Vergleichbarkeit des Korrelationsergebnisses für die verschiedenen Symbole gewährleistet wird. Dies gilt auch bei zusätzlich mehrfarbigen Symbolcodes, da die Korrelation die räumliche der Helligkeitswerte betrifft und die Auswertung der Farbe gesondert - und losgelöst von dem Lesen der einzelnen Symbole - erfolgen kann.

Der Korrelationsfilter entspricht der Helligkeitsverteilung eines der beiden Symbole und dient somit als Korrelationsvorlage. Wird die Korrelation über dem Symbol ausgeführt, das exakt der Korrelationsvorlage entspricht, d.h. in der Helligkeitsverteilung dem Symbol des Symbolcodes entspricht, so ist das Ergebnis der bei der Korrelation bestimmten Abstandsfunktion gleich Null. Wird dieselbe Korrelationsvorlage dagegen über das exakt komplementäre Symbol gelegt, so entspricht das Korrelationsergebnis einem maximalen Wert, da der Helligkeits- bzw. Grauwertunterschied zwischen Korrelationsfilter und Symbol maximal ist. Vorteilhaft bei diesem Verfahren ist, dass die gesamte Fläche des Symbols zur Ermittlung des Korrelationswertes herangezogen wird, so dass keine Information verloren geht, auch wenn Teile eines Symbols in dem Symbolcode verschmutzt oder beschädigt sind. Der Korrelationswert liegt in diesem Fall zwischen dem Wert Null und dem maximalen Wert. Die Information wird aber nicht verworfen, da kein Vergleich mit einem Schwellenwert stattfindet, bei dem die Information wie im Stand der Technik ggf. aussortiert wird.

Gemäß einer bevorzugten Ausgestaltung der Erfindung kann bei der Anwendung des Korrelationsfilters, welche nachfolgend kurz auch als Korrelation bzw. Korrelationsverfahren bezeichnet wird, eine Normalisierung der innerhalb jedes Symbolbereichs liegenden Helligkeits- bzw. Grauwerte stattfinden, um die Kontrasteigenschaften der Oberfläche adaptiv und bezogen auf jedes einzelne Symbol zu verbessern. Dadurch wird erreicht, dass innerhalb desselben Symbolbereichs keine Differenzierung in weitere Helligkeits- bzw. Grauwertstufen vorliegt und der erforderliche Kontrast zwischen einer logisch "hellen" und einer logisch "dunklen" Fläche bei nur einer Helligkeitsstufe liegt. In der Praxis ist davon auszugehen, dass aufgrund technischer Einflüsse der bildgebenden Erfassungsgeräte der Aufnahmeeinrichtung zum Abbilden des Symbolcodes ein Helligkeitswertsprung bei 10% Kontrastunterschied zuverlässig erkannt wird. Aufgrund des Korrelationsverfahrens ist erfindungsgemäß sogar ein Kontrast von weniger als 10% ausreichend, um Symbolzuordnungen zuverlässig vorzunehmen. Die erfindungsgemäß als vorteilhaft vorgeschlagene Normalisierung ermöglicht es auch, auf eine im Stand der Technik regelmäßig angewandte Bild-Vorverarbeitung zu verzichten, die je nach Anwendungsfall auch in den Rohbildern noch auswertbare Informationen vernichten kann.

Erfindungsgemäß soll ein solcher Korrelationsfilter für jedes Symbol in dem Symbolcode angewendet werden. Dazu ist es insbesondere sinnvoll, die grafische Symbolmatrix und den Korrelationsfilter - ggf. nach einer auf die Symbolmatrix und/oder den Korrelationsfilter anzuwendende Skalierung und/oder Ausrichtung - in gleichgroße Pixel einzuteilen und das Korrelationsfilter pixelweise über die Symbolmatrix zu bewegen. Idealer Weise liegen die Pixelränder des Korrelationsfilters und die Pixelränder der Symbolmatrix nach jedem Bewegungsschritt dabei jeweils übereinander. Nach jeder Bewegung wird dann das zuvor erläuterte Korrelationsverfahren durchgeführt, wobei das Korrelationsergebnis für jede relative Anordnung von Korrelationsfilter und Symbolcode bzw. Symbolmatrix gespeichert werden kann.

Es ist sinnvoll, das Korrelationsergebnis nach Anwendung des Korrelationsfilters als Konfidenzwert zu ermitteln, der einfach weiterverarbeitet und gespeichert werden kann.

Der Konfidenzwert ist ein Maß für die Erkennungssicherheit einzelner Symbole an den jeweiligen Positionen von Korrelationsfilter und gelesenem Symbolcode. Der Korrelationswert hängt unmittelbar mit der im Rahmen der Korrelation bestimmten Abstandsfunktion zusammen, wobei ein Abstandsfunktionswert von Null bzw. der maximale Abstandsfunktionswert jeweils eine hohe Konfidenz für das Auffinden des einen bzw. des anderen Symbols in dem Symbolcode bedeuten. Bei einem genau in der Mitte liegenden Abstandsfunktionswert ist die Konfidenz in das gelesene Symbol gleich Null, da zwischen den beiden Symbolen nicht unterschieden werden kann.

Insofern bietet sich erfindungsgemäß ein Konfidenzwertbereich von -1 bis 1 an, wobei der Wert 1 eine vollständige Übereinstimmung mit dem dem Korrelationsfilter gleichen Symbol und der Wert -1 eine vollständige Übereinstimmung mit dem dem Korrelationsfilter komplementären Symbol anzeigt. Die Konfidenzwerte sind neben dem Maß für eine korrekte Dekodierung des Systemcodes somit auch ein Maß für die grafische Qualität der den Systemcode darstellenden Systemmatrix.

Die erfindungsgemäßen Konfidenzwerte haben den Vorteil, dass sie in dem angewendeten Korrelationsverfahren unmittelbar enthalten sind in einer Weise, dass sie für alle (möglichen) Datenzellen voneinander unabhängig bestimmt sind und trotzdem aus der Anwendung nur eines einzigen Filters abgeleitet werden können. Da die Anwendung des Filters über die gesamte Systemmatrix, d.h. das gesamte Bild des Systemcodes, gleich ist, wird eine maximale Vergleichbarkeit der erhaltenen Konfidenzwerte unter den erkannten Symbolen gewährleistet. Damit kann beim Lesen des Systemcodes entsprechend dem erfindungsgemäß vorgeschlagenen Verfahren eine relativ (sehr) verlässliche Aussage über die Erkennungssicherheit der einzelnen Symbole und damit die Verlässlichkeit der Dekodierung getroffen werden.

Es ist daher besonders vorteilhaft, bei dem Abtasten des Systemcodes mit dem Korrelationsfilter einen Konfidenzwert für jede Abtastposition zu ermitteln und zum Erkennen der Symbole in dem Systemcode zu verwenden.

Bei dem Abtasten werden bspw. der Mittelpunkt bzw. das Mittelpunktpixel des Korrelationsfilters nacheinander auf jedes Pixel der Symbolmatrix gelegt, die Korrelation ausgewertet und der zu dem jeweiligen Pixel gehörende Konfidenzwert gespeichert. Dieses Vorgehen wird auch Template-Matching genannt und ermöglicht das Auffinden bzw. Lokalisieren der Mittelpunkte der einzelnen Symbole in der den Symbolcode darstellenden Symbomatrix an den Stellen mit den höchsten bzw. niedrigsten Konfidenzwerten. Die Konfidenzwerte können dazu erfindungsgemäß als Parameter an einen dem Abtastschritt folgenden Identifizierungsschritt übermittelt werden, in dem die Lage der einzelnen Datenzellen der Symbolmatrix identifiziert wird, um die einzelnen Symbole in dem Symbolcode zu bestimmen. Durch diese Identifizierung wird den einzelnen Symbolen des Symbolcodes dann ihre Wortbedeutung zugewiesen, d.h. der dem jeweiligen Symbol zugeordnete binäre Wert. Somit wird die Symbolmatrix erfindungsgemäß in eine Wortmatrix konvertiert, deren Einträge die jeweiligen binären Werte sind. In der äußeren Form und Anordnung der einzelnen Einträge (Binärwert) entspricht die Wortmatrix also der Symbolmatrix, die als Einträge die jeweiligen Symbole aufweist. Durch vorgegebene Regeln zur Aneinanderreihung der einzelnen Symbole können dann aus der Wortmatrix die kodierten Informationen durch Aneinanderreihen der einzelnen binären Worte abgelesen werden.

In diesem Zusammenhang ist es also sinnvoll vorzusehen, dass aus den Konfidenzwerten die wahrscheinlichsten Mittelpunkte der Symbole bzw. Datenzellen in dem Symbolcode bzw. der Symbolmatrix ermittelt werden.

Gemäß einer vorteilhaften Ausgestaltung können dann ausgehend von mindestens einem wahrscheinlichen Mittelpunkt die anderen Mittelpunkte des Symbole erwandert und deren Symbole gelesen werden.

Zusammenfassend dargestellt werden bei einem erfindungsgemäß bevorzugten Verfahren zur Extraktion von grafischen Symbolen eines zweidimensionalen Symbolcodes jedem der durch Filterung erkannten Symbole ein unabhängigen Konfidenzwert über die Erkennungssicherheit zuordnet. Dazu wird auf bspw. ein Grauwertbild bzw. allgemeiner ein Bild mit verschiedenen Helligkeitswerten, welches das Abbild der Symbolmatrix enthält, ein einziger Filter angewandt, der jedem der verwendeten grafischen Symbol zugleich einen solchen Konfidenzwert zuordnet. Die Bestimmung des Konfidenzwertes für ein Symbol ist dabei einzig vom Ort abhängig und nicht von umgebenen Ergebnissen des Filters oder den Konfidenzwerten benachbarter Symbole. Erhaltene Filterantworten an verschiedenen Orten sind somit miteinander durch eine Metrik vergleichbar und haben eine Ordnung, ohne dass die einzelnen Konfidenzwerte voneinander abhängen. Als Filter wird ein normalisiertes Korrelationsverfahren verwendet, welches an jedem Ort einer Rasterung eines Bildes den euklidischen Abstand der Helligkeitswerte, bspw. nach einer Konvertierung in Grauwerte im Falle einer farbigen Symboldarstellung, eines Bildausschnitts in einer durch den Filteroperator definierten Umgebung zu der Vorlage der logischen Helligkeitsverteilung einer Familie von grafischen Symbolen bestimmt. Erfindungsgemäß können ermittelte Konfidenzwerte als Parameter an einen daran anschließenden Prozessschritt weitergeleitet werden, wobei dann diese Konfidenzwerte zur Sortierung oder Auswahl der korrespondierenden Worte verwendet werden.

Erfindungsgemäß kann zusätzlich die Farbe der Symbole ausgewertet werden. Damit kann eine Farbe oder Farbkombination einem Wort, d.h. einem binären Wert, zugewiesen werden. Somit kann der ursprünglich rein binären Symbolbedeutung eine weitere Bedeutung zugewiesen werden, welche ein mehrdimensionale Multi-Wort-Kodierung ermöglicht. Sofern man die ursprünglichen Symbole als binäre Wortmatrix auffasst, wird diese dann als eine um die Menge der möglichen Farben bzw. Farbkombinationen entsprechend erweiterte Wortmatrix aufgefasst. An der Auswertung der Helligkeitsverteilung ändert sich in diesem Fall nichts, da auch die unterschiedlichen Helligkeiten der einzelnen Farben erfasst werden können. Dies kann entweder unmittelbar aufgrund der Farbdarstellung oder nach einer Konvertierung in Grauwerte erfolgen.

Im Rahmen der Dekodierung kann dann vorzugsweise auch ein Konfidenzwert für eine Farbverteilung der Symbole ermittelt werden. Beispielsweise kann anteilig zu dem in Bezug auf die Helligkeitsverteilung der Symbole in dem Systemcode im Vergleich zu dem Korrelationsfilter ermittelten Konfidenzwert der gemittelten Abstand der Farbwerte aller zu einem grafischen Symbol gehörenden Pixel zur Farbverteilung seiner Vorlage bestimmt werden. Es ist sogar denkbar, die beiden ermittelten Konfidenzwerte zu einem einzigen Konfidenzwert zu verbinden. Dazu kann für die Farbverteilung der Vorlage und auch des zum Filteroperator korrespondierenden Bildausschnitts der sogenannte "CIE 1976 u', v' Farbraum" verwendet werden. Damit ist die Bestimmung des euklidischen Abstands zwischen Vorlage und Bildausschnitt möglich, der zu einem erweiterten Konfidenzwert führt. Alternativ kann das von einem Sensor erhaltene RGB-Farbbild, welches ein Vektor-Bild ist, in ein Betragsbild (der Farb-Vektoren) und in ein korrespondierendes Richtungsbild (der Farb-Vektoren) zerlegt werden. Das so erhaltene Betragsbild ist äquivalent zu einem von einem Sensor erhalten Helligkeits- oder Grauwertbild, so dass darauf die gleichen Analyse- und Korrelationsverfahren wie bisher angewendet werden können. Für erkannte Symbolbereiche kann dann die Farbverteilung im korrespondierenden RGB-Richtungsbild durch euklidische Abstandsmessung zu den Vorlagen möglicher Farbverteilungen bestimmt werden.

Gemäß einer anwendungsorientierten Weiterentwicklung der Erfindung kann der zeitliche Verlauf der Konfidenzwerte in einem Bereich des Systemcodes ausgewertet werden. Dies ist bspw. in automatisierten Produktionsanlagen möglich, in denen die Bauteile oder allgemeiner Objekte mit dem erfindungsgemäßen zweidimensionalen Systemcode versehen sind. Ein allgemeiner oder lokaler Abfall der Konfidenzwerte deutet auf eine zunehmende Verschmutzung oder Beschädigung eines Objekts im gesamten oder einem eingeschränkten Bereich der grafischen Symbolmatrix hin. Ein Qualitätsabfall oder Funktionsfehler in der verwendeten Drucktechnik erzeugt ebenfalls ein solches Muster mit über die Zeit abfallenden Konfidenzwerten. Zu einem Zeitpunkt ermittelte Konfidenzwerte werden dabei nach Objekt, Erfassungsstation und Zeitpunkt in einer Datenbank gespeichert und/oder aktualisiert. Zukünftig ermittelte Konfidenzwerte werden dann mit dieser Datenbank abgeglichen und bewertet. Ist der Schwellenwert einer statistischen Auswertung bspw. im Sinne einer Histogramm-Metrik überschritten, so weichen die aktuell gemessene Konfidenzwerte von der Norm ab. Durch einen Experten wird dann die Ursache der angezeigten Störung ermittelt und beseitigt. Damit kann das System zum Erzeugen und Lesen eines zweidimensionalen Systemcodes auch eine interne Qualitätssicherung betreiben und sich selbst überwachen. Durch die erfindungsgemäß vorgesehenen Konfidenzwerte ist es somit möglich, ein durch den vorgeschlagenen zweidimensionalen Systemcode gebildetes Informationssystem bspw. in Produktionsanlagen zu überwachen und Fehler zu beseitigen, bevor es zum Ausfall eines solchen Systems kommt.

Um den verwendeten Filter und die Abbildung des Systemcodes aneinander anzupassen, können erfindungsgemäß der einer Darstellung eines der beiden Symbole des Symbolcodes entsprechende Filter und der zu lesende Symbolcode, d.h. insbesondere die Darstellung des Symbolcodes in der Symbolmatrix, wie er durch ein optisches Lesesystem erfasst ist, durch ein insbesondere eine Skalierung und/oder eine Rotation enthaltenes Abbildungsverfahren aufeinander abgebildet werden.

Dazu kann ein weiterer Parameter des Verfahrens eine Menge von möglichen charakterisierenden Formen von erwarteten Symbolmatrizen sein. Jede der angegebenen Formen muss sich von jeder anderen der in der Menge enthaltenen Formen ausreichend unterscheiden, sodass eine eindeutige Zuordnung einer angegebenen Form zur aktuellen Symbolmatrix möglich ist. Von der aktuellen Form der Symbolmatrix im Bildausschnitt wird ein translationsinvariantes Flächen-Histogramm erstellt. Dieses Flächen-Histogramm wird mithilfe einer Metrik mit den entsprechenden Flächen-Histogrammen der gegebenen Menge von charakterisierenden Formen von Symbolmatrizen verglichen, wobei die Symbolmatrix des im Sinne der definierten Metrik nächstgelegenen Flächen-Histogramms ausgewählt wird. Als die zur Symbolmatrix des Bildausschnitts korrespondierende Wortmatrix wird diejenige Wortmatrix bestimmt, die zur ausgewählten charakteristischen Form der angegebenen Menge korrespondiert. Die Symbolmatrix des aktuellen Bildausschnitts wird in diese Wortmatrix konvertiert.

Auch können Skalierungs- und Rotationsparameter allein aus den Konfidenzwerten oder zumindest teilweise aus einem übergeordneten Muster, welches sich durch die Anordnung der Symbole innerhalb einer Symbolmatrix ergibt, wie parallele und orthogonale Liniensegmente, abgeleitet werden. Übergeordnete Muster können eine Vorzugsrichtung der Gradienten in einem Helligkeitswertbild verursachen. Die Vorzugsrichtung wird dann aus der Ableitung des Helligkeitswertbildes in X- und Y-Richtung, durch Anwendung der Hough-Trasformation, einer Radontrasformation oder durch Anwendung steuerbarer Filter extrahiert.

Die Erfindung bezieht sich gemäß Anspruch 13 ferner auf eine bevorzugte Verwendung des vorbeschriebenen zweidimensionalen Systemcodes, der auf Bauteile eines Produktes in einer automatisierten Produktionslinie im Wege des Direct Product Marking (DPM), durch Anbringen von mit dem Systemcode bedruckten Etiketten oder dgl. aufgebracht ist und Informationen zur Kennzeichnung der Bauteile und/oder zur Steuerung des Produktionsablaufs aufweist. Dabei wird der Systemcode durch an der Produktionslinie positionierte Lesegeräte erfasst und durch ein übergeordnetes Steuerungssystem ausgewertet. Hierfür bietet der erfindungsgemäß vorgeschlagene Systemcode den Vorteil, dass die in dem Systemcode verwendeten Symbole sehr robust gegen Beschädigungen und Verschmutzungen sind und auf einfache Weise auch eine hohe Redundanz der Daten erreicht werden kann, da der Systemcode im Vergleich zu bekannten zweidimensionalen Systemcodes die vorhandene Fläche sehr effektiv ausnutzt. Durch Auswertung mittels Konfidenzwerten werden sehr zuverlässige Leseergebnisse ermöglicht, obwohl auf Rahmen, Synchronisations- und sonstige Sonderzeichen verzichtet werden kann. Die effektive Flächenausnutzung erlaubt es auch, die gewünschten Informationen auf kleinsten Flächen der Bauteile unterzubringen.

Ein zu diesem Zweck verwendeter zweidimensionaler grafischer Symbolcode, der aufgrund der insgesamt vorbeschriebenen Eigenschaften sehr gut und zuverlässig maschinenlesbar ist, kann erfindungemäß üblicherweise Angaben über den eigenen Typ, eine Identifizierungsnummer, eine Modellbezeichnung, evtl. Angaben über den Herstellungsprozess, wie Produktionsort- und Zeit, Chargennummer, der technischen Verarbeitung und/oder weitere Informationen enthalten. Ein Bauteil bzw. Objekt kann sich über die in seiner maschinenlesbaren Markierung kodierten Daten somit selbst beschreiben und so zur (teil-)autonomen Steuerung der Produktionsanlage beitragen. Diese detaillierten Informationen über das Objekt können jedoch nicht nur zur Steuerung der Produktionsanlage verwendet werden. In einem eintretenden Schadensfall bei Benutzung eines fertig montierten Produkts können - bspw. bei Speicherung der während der Produktion erhobenen und mit dem Symbolcode in Verbindung gebrachten Informationen - bis auf Bauteilebene für jedes markierte Objekt zusätzliche Angaben vorliegen, die speziell diesem Objekt zugehörige Qualitätsmerkmale oder Eigenschaften der an diesem Objekt durchgeführten technischen Verarbeitungsvorgänge beschreiben. Das kann zur Rekonstruktion des Unfallhergangs beitragen oder auch die juristische Klärung von Regressforderungen unterstützen. Außerdem hilft dies beim Auffinden systematischer Fehler in der Produktionslinie.

Schließlich betrifft die Erfindung eine Vorrichtung zum Lesen eines zweidimensionalen Systemcodes mit einer optischen Aufnahmeeinrichtung und einer Auswerteeinrichtung mit einem Prozessor, der zur Verarbeitung der von der Aufnahmeeinrichtung gelieferten optischen Signale und zur Dekodierung des zweidimensionalen Symbolcodes eingerichtet ist. In den Prozessor der Auswerteeinrichtung ist mittels geeigneter Software das vorbeschriebene Verfahren bzw. Teile davon implementiert ist. Die Auswerteeinrichtung kann in die Lesevorrichtung mit dem optischen System integriert oder ein Rechnersystem insbesondere in Form eines Rechners oder mehrerer vernetzter Rechner sein, an die eine oder vorzugsweise mehrere Aufnahmeeinrichtungen angeschlossen sind.

Bevor konkrete Ausführungsbeispiele der Erfindung anhand der Zeichnung beschrieben werden, sollen vorteilhafte Aspekte der Erfindung beleuchtet werden, die jeweils für sich und unabhängig von anderen Aspekten Teil der Erfindung sind.

Gemäß einem erfindungswesentlichen Grundprinzip wird die Helligkeitsverteilung eines Symbols als Grundlage zur Unterscheidbarkeit herangezogen.

Die grafischen Symbole des Symbolcodes für ein Eins-Wort und ein Null-Wort, die für eine binäre Datenkodierung zu unterscheiden sind, sind bei der Erfindung so gewählt, dass eine maximale Unterscheidbarkeit gewährleistet ist. In dem Systemcode sind die grafische Symbole innerhalb von gekachelten Datenzellen einer grundsätzlich beliebig geformten Symbolmatrix angeordnet. Dabei füllen die Symbole die Datenzellen vollständig aus. Eine Datenzelle kann also als Pixelbild interpretiert werden, in welches ein grafisches Symbol gezeichnet ist.

Die Unterscheidung der beiden grafischen Symbole erfolgt erfindungsgemäß durch ihre insbesondere komplementäre Helligkeitsverteilung. Bearbeitete Flächen einer Datenzelle sind logisch durch schwarze Pixel, d.h. logisch dunkel, und unbearbeitete Flächen einer Datenzelle sind logisch durch weiße Pixel, d.h. logisch hell, dargestellt. Abhängig von dem Material bzw. der Oberfläche, auf die der Symbolcode aufgebracht ist, und der bildgebenden Erfassungstechnik der Aufnahmeeinrichtung einer Lesevorrichtung muss ggf. zusätzlich spezifiziert werden, ob die logischen Helligkeiten mit den tatsächlich im Bild vorhandenen Helligkeitswerten korrelieren. Denn nach Art und Zusammensetzung des Trägermaterials und der Methode des Aufbringens und Lesens einer grafischen Markierung kann die bearbeitete Objektfläche im zu analysierenden Bild entweder dunkler oder aber heller erscheinen als die unbearbeitete Fläche. Da die Zuordnung der Symbole zu einem Wort gerade auf komplementärer Helligkeit basiert, und bei Betrachtung nur eines der grafischen Symbole für sich allein keine Entscheidung getroffen werden kann, welche Helligkeiten nun dem Objekthintergrund (als logisch helle Fläche des Symbols) und welche der bearbeiteten Fläche (als logisch dunkle Fläche des Symbols) zuzuordnen sind, ist eine vorherige statische Initialisierung der Zuordnungen erforderlich. Alternativ könnte auch ein definiertes Symbol in dem Symbolcode für eine dynamische Erkennung vorgesehen sein.

Dazu werden der Kodierungs- und Aufbringungsvorgang sowie entsprechend der Erkennungs- und Dekodierungsvorgang voneinander getrennt betrachtet, wobei sowohl die Aufbringungs- und Lesemethode als auch das Aufbringungsmaterial und dessen physikalischer Zustand berücksichtigt werden. Eine Anpassung kann erfindungsgemäß durch einen im Verfahren angewandten Skalierungsfaktor erfolgen, welcher das einem grafischen Symbol zugeordnete binäre Wort umkehrt. Dies ermöglicht es erfindungsgemäß, das logisch helle Symbol konsistent immer dem optische erfassten hellen Symbol zuzuordnen. Entsprechendes gilt für das dunkle Symbol.

Eine hohe Datendichte kann dadurch erreicht werden, dass die einzelnen grafischen Symbole quadratisch und daher kompakt sind. Diese Symbole können direkt in die Zellen eingepasst werden, die aus der logischen matrixähnlichen Anordnung nach Spalten und Zeilen resultieren. Dabei kann die Fläche einer solchen Datenzelle vollständig mit dem grafischen Symbol ausgefüllt werden, sodass Symbole benachbarter Datenzellen direkt ineinander übergehen. Dadurch wird bei der späteren Erkennung dieser grafischen Symbole eine erhöhte Zuverlässigkeit erreicht, da auch Helligkeiten der Pixel im Randbereich einer Datenzelle einem Symbol zuzuordnen sind und in die Entscheidungsfindung miteinbezogen werden können, welches grafische Symbol in einer Datenzelle dargestellt ist.

In der aus der gekachelten Anordnung von Datenzellen resultierenden grafischen Symbolmatrix muss also kein zusätzlicher Freiraum zwischen benachbarten Datenzellen belassen werden. Ein solcher Freiraum muss auch nicht zur Separierung der grafischen Symbole in der Bildanalyse bspw. durch vorverarbeitende Filter erzeugt werden. So bleiben wertvolle Helligkeits- bzw. Grauwertinformationen auch in den Randbereichen der Datenzellen erhalten.

Diese Möglichkeit der Anordnung der grafischen Symbole mit vollständiger Ausfüllung ihrer Datenzellen ist ein wichtiger Grund für die Kompaktheit und die erreichbare Datendichte, da so selbst bei geringer quadratischer Abmessung einer Datenzelle von bspw. auch nur sechs Pixeln im erfassten Bild eine Unterscheidungssicherheit gewährleistet werden kann, die derjenigen jeder größer skalierten Datenzelle entspricht. Gemäß einem besonderen Aspekt der Erfindung können die grafischen Symbole für ein Eins-Wort und ein Null-Wort von einer speziellen logischen Helligkeitsverteilung sein, die auf den Einsatz in DPM (Direct Part Marking) Verfahren optimiert ist. In den Abbildungen dieser Anmeldung sind bspw. Bereiche schwarz gekennzeichnet, an denen das Trägerobjekt mittels Auftragungstechnik bearbeitet wird. Bei dem genanntem DPM-Verfahren wird meist mit einem Laser eine Fläche des Trägermaterials (d.h. der zur Markierung ausgewählte Bereich auf einem Bauteil) bearbeitet, indem eine dünne Schicht im Micro- oder Nanometerbereich abgetragen wird. Dabei werden punktbasierte und vektororientierte Techniken unterschieden.

Bei der Punktlaserung wird eine Fläche in eine Rasterung unterteilt. Übliche Produkte erreichen eine Auflösung von 800dpi bis 1200dpi. Einzelne Punkte werden dann als Impuls gelasert. Eine Punktgröße entspricht beispielsweise einem im Durchmesser 0,15 Mikrometer großen Bereich auf dem Objekt. Dieses Verfahren ist sehr zeitintensiv, sodass das Aufbrennen eines quadratischen Matrixcodes mit der Abmessung 0.5mm bei 800dpi Auflösung über zwanzig Sekunden dauert. In der Produktionspraxis steht eine solche Zeit meist nicht zur Verfügung.

Ein vektororientiertes Verfahren arbeitet dagegen "ohne Absetzen", weshalb Linien und Flächen schnell gebrannt werden können. Für obiges Beispiel werden bspw. nur drei bis fünf Sekunden Zeit benötigt, die je nach Laser und benötigter Leistung auch signifikant darunter liegen kann. Um kurze Taktzeiten in der Fertigung zu erreichen, ist daher der Einsatz eines vektororientierten Verfahrens sinnvoll. Deshalb sind die einzelnen Symbole erfindungsgemäß so konzipiert, dass ein vektororientiertes Zeichnen dieser Symbole möglich ist. Sie enthalten gemäß einer bevorzugten Ausführung daher jeweils nur zwei zusammenhängende Flächen, von denen erfindungsgemäß zur eine Fläche bearbeitet werden muss und die andere Fläche unbearbeitet bleibt. Ein Symbol kann somit ohne Absetzen des Lasers in einem Zug gezeichnet werden.

Ein weiteres Kriterium bei der Wahl der grafischen Symbole ist eine technische Einschränkung beim Vorgang des Laserns. Die Kanten zwischen bearbeiteten und unbearbeiteten Flächen sind nicht trennscharf, da durch während der Brennung entstehende Schmauchspuren mit dem Material in der Umgebung reagieren oder die Bewegung des Lasers nicht exakt verläuft und so zusätzlich Bereiche bearbeitet werden, die nicht dafür vorgesehen sind. Dabei können bearbeitete Bereiche auswaschen und kontinuierlich in unbearbeitete Objektbereiche übergehen oder diese sogar zu einem mehrheitlichen Anteil von umschließenden bearbeiteten Bereichen verdeckt werden - wobei von Überblendung gesprochen wird -, da über die Trennkante hinaus gebrannt worden ist. Dieser Effekt wird bei gewölbten oder gekrümmten Oberflächen dadurch verstärkt, dass der Laser meist aus technischen Gründen und mit vertretbarem Aufwand nicht in jedem Punkt ideal rechtwinklig zur Objektoberfläche platziert werden kann. Daher besteht ein flacher Winkel zwischen Oberfläche und Laserstrahl, sodass im Nahbereich des erwünschten Auftreffpunktes auf der Objektoberfläche ebenfalls das Material abgetragen wird. Dieser Effekt kann verringert werden, wenn der Laser in einer Vorrichtung befestigt ist, die beispielsweise um ein zylindrisches Objekt herumfährt, sodass der Auftreffwinkel des Laserstrahls immer möglichst rechtwinklig ist. Das ist aber ein aufwändiger, fehleranfälliger, zeitintensiver und ein schwer kalibrierbarer Prozess, sodass erfindungsgemäß eine später noch genauer definierte Helligkeitsverteilung bevorzugt wird, welche die Auswirkung derartiger Fehler in der komplementären Helligkeitsanordnung weitestgehend ausgleichen kann.

Obwohl im vorigen die Auftragungstechnik mittels Laser ausführlich analysiert wurde, können Analogien der genannten Probleme auch auf andere Techniken, insbesondere Drucktechniken, übertragen werden. Die erfindungsgemäß bevorzugt gewählte Symbolform erlaubt eine zusätzliche Robustheit gegen diese Einflüsse, sodass auch bei nicht exakter Auftragung die Erkennung zuverlässig ist.

Ein erfindungsgemäß geeignetes Kriterium für den Aufbau der Helligkeitsverteilung kann darin liegen, dass eine unbearbeitete Fläche mit dem logisch hellen Merkmal von der bearbeiteten Fläche mit dem logisch dunklen Merkmal nicht gänzlich umschlossen wird, um eine Überblendung zu verhindern bzw. zu vermindern. Das wird bei dem erfindungsgemäß besonders bevorzugten Symbol, das in der Figurenbeschreibung nach ausführlich erläutert wird, selbst dann erreicht, wenn ein Symbol in einer Acht-Nachbarschaft gänzlich ohne Freiraum von beliebigen anderen Symbolen umschlossen ist. Bearbeitete und unbearbeitete Flächen lassen sich erfindungemäß auch nicht aufeinander abbilden, was die Unterscheidungsfähigkeit weiter erhöht.

Um Beschädigungen des Bauteils zu verhindern, kann beim Lasern häufig nur mit einer maximal zulässigen Energie gearbeitet bzw. gebrannt werden, weshalb je nach Materialoberfläche die Bearbeitung mehr oder weniger deutlich sichtbar ist. Erreichbare Kontrastunterschiede liegen hier typisch bei 70% oder mehr. Die Kontrasteigenschaften sind auch von dem jeweiligen Oberflächenmaterial abhängig und können sogar innerhalb eines markierten Bereichs unterschiedlich sein, sodass verschiedene Symbole derselben Symbolmatrix unterschiedliche Kontrasteigenschaften aufweisen. Veränderungen im Kontrast können auch durch fehlerhafte Justierung anderer Parameter der Hardware zur Aufbringung herrühren. Die perfekte Einstellung solcher Parameter ist zeitintensiv und sie können sich mit der Zeit ändern. Daher wird erfindungsgemäß ein besonders robuster Symbolcode vorgeschlagen, der in einem großen Maß bereits durch Verwendung von zwei flächigen Symbolen mit einer Helligkeitsverteilung, d.h. mindestens zwei verschiedenen Helligkeiten in der Symbolfläche, erreicht wird, wobei die Helligkeitsverteilung der Symbole gerade komplementär zueinander ist. Auch wenn in der vorliegenden Anmeldung in konkreten Beispielen jeweils nur zwei verschiedene Helligkeiten beschrieben sind, können erfindungsgemäß in jedem Symbol auch mehr verschiedene Helligkeitswerte vorhanden sein, die bspw. über komplementäre Grauwertstufen in das komplementäre Symbol überführbar sind.

Symbole sollten ferner robust gegen Beschädigung durch Kratzer, Verschmutzung oder Fehler bei der Auftragung sein, etwa wenn ein Symbol nicht vollständig aufgebracht worden ist. Diese Erfindung definiert daher bevorzugte grafische Symbole für Null-Worte und Eins-Worte, die in jedem Fall einen Bereich aufweisen, der eine Bearbeitung des Objekts erfordert. So können fehlerhafte Zuordnungen zusätzlich verringert werden, die durch Verschmutzung auf gänzlich unbearbeiteten Oberflächen oder umgekehrt durch Reflexionen auf gänzlich bearbeiteten Symbolflächen verursacht werden.

Eine bevorzugte Symbolform der Erfindung sieht ein besonderes Verhältnis von bearbeiteten zu unbearbeiteten Symbolbereichen vor. Betrachtet man die bevorzugt verwendeten Symbole als Pixelbild und rastert man jedes Symbol durch ein 3x3-Gitter, so beträgt das Verhältnis von bearbeitetem Symbolbereich (5/9) zu unbearbeitetem Symbolbereich (4/9), oder umgekehrt, nahezu 1:1, sodass beide Anteile in etwa gleich stark vertreten sind. Die Abweichungen liegen in einem Bereich kleiner oder gleich 1/9 der Gesamtfläche, der sich in Praxisversuchen als sinnvolle Grenze für Abweichungen erwiesen hat. Insbesondere vereinbart ein 3X3-Gitter einzelner Symbolpixel einen sinnvollen Ausgleich zwischen Größe des Symbols, die bezüglich einer hohen erreichbaren Flächendichte nicht zu groß und bezüglich einer guten Lesbarkeit nicht zu klein gewählt werden sollte. Mit der Pixelgröße eines Signals kann theoretisch bis an die Auflösungsgrenze des Auftragungs- bzw. Leseverfahrens herangegangen werden. Ein weiteres wichtiges Kriterium für die Symbolgröße sind natürlich der auf der zu markierenden Oberfläche zur Verfügung stehende Raum, der erfindungsgemäß ausgenutzt werden kann. Die Symbolgröße kann dann gerade so groß gewählt werden, dass sich die gewünschten Informationen kodieren lassen.

Betrachtet man jeweils sowohl nur die eindimensionale X-Achse als auch die eindimensionale Y-Achse des zweidimensionalen Symbols, die in dem bevorzugten Beispiel jeweils entlang der Symbolkanten des rechteckigen oder quadratischen Symbols verlaufen, so kann erfindungsgemäß ein bevorzugtes Verhältnis von 1:3 bzw. von 2:3 von bearbeiteten zu unbearbeiteten Symbolbereichen eingehalten werden.

Bei einer erfindungsgemäß bevorzugten Helligkeitserteilung haben die Symbole für das Null-Wort und die Symbole für das Eins-Wort jeweils also eine im Durchschnitt fast gleiche Verteilung von Helligkeitswerten, sodass keines der beiden Symbole durch eine im Vergleich zum anderen auffälligere Markierung in der Erkennung bevorteilt wird. Zum anderen kann in der Bildverarbeitung bei eindimensionaler Analyse des Helligkeitswertbildes eines Symbolcodes nach Helligkeitswertsprüngen ein voneinander eindeutig unterscheidbares Antwortmuster produziert werden, auch wenn die Auftragungsqualität mangelhaft ist, da beide Bereiche einen weiten Abstand zueinander aufweisen.

Die besonderen Vorteile des erfindungsgemäß vorgeschlagenen Systemcodes treten besonders auch in dem erfindungsgemäßen Lese- bzw. Dekodierverfahren zu Tage, indem bei dem Erkennen und Dekodieren der einzelnen Symbole in der den Symbolcode darstellenden Symbolmatrix bevorzugt ein im Stand der Technik für diesen Zweck bisher unübliches Korrelationsverfahren verwendet wird, auch unabhängig von der Verwendung von Symbolen mit komplementärer Helligkeitsverwendung.

Bei einem erfindungsgemäß bevorzugten Korrelationsverfahren werden Helligkeits- bzw. Grauwerte innerhalb jedes einzelnen Symbolbereichs normalisiert, um die Kontrasteigenschaften einer Oberfläche adaptiv und auf ein einzelnes Symbol beschränkt zu optimieren. So kann auch das Problem von Reflexionen an spiegelnden Oberflächen angegangen werden.

Der für das erfindungsgemäß vorgeschlagene Verfahren erforderliche Kontrast zwischen heller und dunkler Fläche eines Symbols liegt bei nur einer Helligkeitswertstufe. Zur optimalen Unterscheidung sollte es dann innerhalb derselben Fläche unter den Helligkeitswerten keine weitere Differenz in Helligkeitswertstufen geben. Da bei aktuellen bildgebenden Erfassungsgeräten konstruktionsbedingte technische Einflüsse wie Bildrauschen berücksichtigt werden müssen, werden homogene Flächen gleicher Helligkeit nicht als ebensolche im Pixelbild verfügbar sein. Es kann erfindungsgemäß angenommen werden, dass ein Helligkeits- bzw. Grauwertsprung bei 10% Kontrastunterschied zuverlässig erkannt wird. Der real benötigte Kontrastunterschied kann weiter gesenkt werden, wenn das Korrelationsverfahren robust gegen Ausreißer ist, sodass bei dem erfindungsgemäßen Leseverfahren sogar ein Kontrast von weniger als 10% ausreichend ist, um die Symbolzuordnungen zuverlässig vorzunehmen. Da das vorgeschlagene Verfahren zudem keine Vorverarbeitung in der Bildverarbeitung erfordert, werden dadurch keine weiteren Helligkeitswertfehler eingestreut, sodass der erforderliche Kontrastunterschied wie oben quantifiziert werden kann.

Bisher werden Korrelationsverfahren in der Bildanalyse zur Extraktion von Symbolcodes nach Möglichkeit in der Praxis nicht verwendet, da ein Korrelationsverfahren im Vergleich zu morphologischen Operatoren sehr rechenintensiv ist. Durch die vorliegende Erfindung wird dieser vermeintliche Nachteil aufgrund der Wahl zweier in ihrer Helligkeitsverteilung komplementärer grafischer Symbole beseitigt werden, weil in einer Filterung des zu analysierenden, den Symbolcode darstellenden Bildes mit nur einem einzigen Korrelationsfilter beide Symbole zugleich lokalisiert werden können. Dazu wird das Ergebnis einer Abstandsfunktion zu der Filtervorlage berechnet, die mit der Helligkeitsverteilung eines der erfindungsgemäß komplementären Symbole übereinstimmt. Die Abstandsfunktion gibt also die Entfernung der vorliegenden Grauwertverteilung von der Grauwertverteilung der Korrelationsvorlage an.

Wird die Korrelation über einem Symbol ausgeführt, das exakt dem der Korrelationsvorlage entspricht, so ist das Ergebnis der Abstandsfunktion gleich Null, da kein Unterschied besteht. Wird dieselbe Korrelationsvorlage jedoch über das exakt komplementäre Symbol gelegt, so entspricht das Korrelationsergebnis einem maximalen Wert, da der Grauwertunterschied für jedes Bildpixel maximal ist.

Bei den im Stand der Technik üblichen Verfahren werden dagegen grafische Symbole definiert, deren Form Merkmale aufweisen, die einem Wort zugeordnet sind. Um eine Wortlänge n zu dekodieren, werden daher üblicherweise 2ⁿ Filter auf das zu analysierende Bild angewandt, die mit jeweils einem der möglichen Symboltypen stark und mit allen anderen der 2ⁿ Symboltypen möglichst wenig übereinstimmen, um einem bestimmten Symbol einen eindeutigen Wert zuordnen zu können.

Um ein binäres Wort zu dekodieren sind nach dem im Stand der Technik üblichen Vorgehen daher zwei Filterungen nötig. Durch die Erfindung kann somit zum einen die Anzahl der Filterungen um die Hälfte reduziert werden, so dass für die binären Worte nur eine Filterung durchgeführt werden muss. Zum anderen ist bei Anwendung eines erfindungsgemäßen Korrelationsverfahrens eine Bildvorverarbeitung vor dem Anwenden der Filter unnötig, sodass in diesem Falle die Rechenzeit gegenüber dem Stand der Technik weiter reduziert werden kann. Beide Eigenschaften tragen zur Verringerung der Ausführungszeit bei. Trotzdem ist die Zuverlässigkeit des erfindungsgemäßen Verfahrens höher als bei der Anwendung morphologischer Filter, da jedes Pixel betrachtet wird und keine Information verlorengeht, etwa durch Binarisierungsverfahren oder Verfahren zur Separierung benachbarter grafischer Symbole. Beides macht die bevorzugt vorgeschlagene Anwendung eines erfindungsgemäßen Korrelationsverfahrens zur effizienten und zuverlässigen Erkennung von zweidimensionalen maschinenlesbaren Codes in der Prozesskontrolle mit kurzen geforderten Taktzeiten konkurrenzfähig und überlegen.

Gemäß einem weiteren Aspekt der Erfindung können bei dem Lesen bzw. der Dekodierung der einzelnen Symbole eines Symbolcodes Konfidenzwerte zur Bestimmung der Erkennungssicherheit eines, vorzugsweise jedes Symbols ermittelt werden.

Das vorgeschlagene Verfahren zur Erkennung grafischer Symbole kann in dieser Ausgestaltung unmittelbar angeben, wie sicher es das erkannte Symbol zuordnen kann. Dies ist insbesondere bei redundanter Kodierung von Worten vorteilhaft, weil dann basierend auf der Erkennungssicherheit einzelner Symbole eine Menge von Symbolen von hoher Erkennungssicherheit zur Rekonstruktion des kodierten Wortes bestimmt werden kann. Bei dem erfindungsgemäßen Verfahren können solche Werte zu jedem erkannten Symbol erfragt werden. Diese werden als Konfidenzwert bezeichnet. Sie sind im angewandten Korrelationsverfahren direkt enthalten und zwar so, dass alle Konfidenzwerte aller Symbole voneinander unabhängig bestimmt sind und trotzdem nur aus einer einzigen Filterung abgeleitet werden. Hierbei ist die Filterung an jedem Ort im Bild gleich, sodass eine maximale Vergleichbarkeit der erhaltenen Konfidenzwerte unter den erkannten Symbolen gewährleistet ist. Somit ist durch Anwendung des erfindungsgemäßen Verfahrens neben einer Dekodierung gleichzeitig auch eine Aussage über die Dekodierungsqualität möglich.

Durch den einfachen und robusten Aufbau der einzelnen Symbole des Symbolcodes sind in dem Symbolcode erfindungsgemäß keine Symbole zur Synchronisation notwendig. Vielmehr kann der Symbolcode ausschließlich aus den beiden komplementären Symbolen gebildet werden. Es trägt zur Erhöhung der Datendichte und der Zuverlässigkeit der Erkennung bei, dass der Systemcode gemäß der Erfindung vorzugsweise keine besonderen Symbole zur Lokalisierung, Entzerrung oder Synchronisation und auch keine statisch festgelegten Abfolgen von Symbolen oder vordefinierte Bereiche, die Versions- oder Formatdefinitionen dienen, enthält. Zum einen bleibt durch Weglassen von Ankersymbolen oder statischen Mustern mehr Platz für Dateninformationen zur Verfügung und zum anderen wird ein "Single Point of Failure" eliminiert. Kann nämlich das Muster zur Synchronisation, ein Ankersymbol oder die Versionsbeschreibung beispielsweise aufgrund reflektierender Oberflächen oder Verschmutzung nicht fehlerfrei extrahiert werden, so verhindert dies die Dekodierung der Symbolmatrix vollständig.

Bisherige Markierungen im Stand der Technik waren oft auf eine rechteckige Symbolmatrix oder eine kreisrunde Form der Anordnung mit einer bestimmten Mindestgröße beschränkt, um neben den Symbolen für die Datenbits auch Synchronisationsobjekte unterzubringen. Dies verhindert ein beliebiges Anordnen auf kleinen Bauteilen, auf Flächen mit Aussparungen oder die Aufteilung des Symbolcodes und dessen Aufbringung auf voneinander getrennte Flächen. Erfindungsgemäß können nach dem statischen Initialisieren einer beliebigen polygonalen Freiform die grafischen Symbole erwandert und in eine passende Wortmatrix transformiert werden. Es kann alternativ eine beliebige Menge von sich in der Form unterscheidenden Aufbringungsflächen angegeben werden, innerhalb derer die grafischen Symbole in gekachelten Datenzellen angeordnet sind. Während der Erwanderung der Symbole wird die wahrscheinlichste, die Symbolmatrix charakterisierende Form ausgewählt und dementsprechend die Wortmatrix erstellt.

Das vorgeschlagene Verfahren ist vorzugsweise parameterlos in dem Sinne, dass als Eingabe des Algorithmus ein Helligkeits- bzw. Grauwertbild erwartet wird, welches eine Abbildung des hier definierten Symbolcodes enthält. Dabei können alle benötigten Parameter des Symbolcodes wie Skalierung, Translation, Rotation und Aufbringungsfläche erfindungsgemäß vom Verfahren selbst ermittelt werden. Daher ist keine Anpassung der Parameter bei der Inbetriebnahme einer visuellen Erfassungsstation erforderlich. Dies birgt große Vorteile, da das manuelle Vornehmen solcher Einstellungen aufwendig ist und sich schon bei minimalen Änderungen am Gesamtsystem eine Neukalibrierung nicht vermeiden ließe. Durch die adaptive Ausrichtung des erfindungsgemäßen Verfahrens kann die Kalibrierung automatisch erfolgen, wie an einem Beispiel später noch erläutert wird.

Der erfindungsgemäß vorgeschlagene grafische Symbolcode beseitigt durch seine anpassbare Form, der Robustheit der gewählten Symboltypen bzw- -formen und der sowohl zuverlässigen als auch recheneffizienten Extraktionsmethode (Dekodierung) aktuell noch bestehende Einschränkungen in DPM (Direct Part Marking) Verfahren für das Aufbringen von zweidimensionalem Systemcode, insbesondere für Anwendungen bei kleinen Bauteile mit spiegelnden Oberflächen. Bei der Auswahl und Entwicklung der grafischen Symbole und der Extraktionsmethode dieses Symbolcodes sind typische und gegenläufige Anforderungen, die an einen solchen Systemcode in der automatisierten Fertigung gestellt werden, berücksichtigt worden. Es ist das Ziel elektronische und mechanische Bauteile weiterzuentwickeln und zu miniaturisieren. Sollen diese Objekte einen maschinell lesbaren, zweidimensionlen Symbolcode erhalten, müssen derartige Codes verfügbar sein, die auch bei kleiner verfügbarer Fläche anzubringen sind und eine hohe Datendichte mit zusätzlicher Fehlerkorrektur bieten. Das Lesen soll zuverlässig und effizient möglich sein, sodass Taktzeiten in der Produktionslinie weiter erhöht werden können.

Mit dieser Erfindung steht nun ein solcher Systemcode sowie ein darauf abgestimmtes Verfahren zum Erzeugen und/oder Lesen des Symbolcodes zur Verfügung, mit denen die Möglichkeiten von DPM (Direct Part Marking) erweitert werden und Techniken, wie vorheriges Aufrauen des Objekthintergrundes oder das Anbringen von Papieretiketten, obsolet werden.

Ein besonderer Vorteil der Erfindung liegt in der Qualitätskontrolle durch allgemein abfallende Konfidenzwerte, die unabhängig voneinander sind, weil sie unmittelbar aus der Anwendung eines Filters auf den insbesondere aus komplementären Symbolen aufgebauten Symbolcode folgen.

Das vorgeschlagene, bildverarbeitende Verfahren zur Dekodierung der den Symbolcode darstellenden Symbolmatrix in eine Wortmatrix gibt bei jeder Erkennung eines Symbols erfindungsgemäß den zugehörigen Konfidenzwerte aus. Solche Konfidenzwerte können über viele zeitlich aufeinanderfolgende Dekodierungen derselben Prüfstation gemittelt werden, sodass mit der Zeit allgemein abfallende Konfidenzwerte Hinweise auf zunehmende Verschmutzung der Objekte geben. Abfallende Konfidenzwerte können auf einer gesamten Symbolmatrix oder auch nur auf Teilbereichen einer Symbolmatrix festgestellt werden, da die Konfidenzwerte auch ortsaufgelöst entsprechend der Anordnung der Datenzellen in der Symbolmatrix abgelegt werden können. Bei zunehmender Verschmutzung kann die Ursache im Fertigungsprozess gesucht und beseitigt werden, bevor diese so stark zugenommen hat, dass beispielsweise Symbolcodes nicht mehr dekodiert werden können. Abfallende Konfidenzwerte können auch von lokalen Fehlbrennungen des Lasers beim Auftragen des Symbolcodes herrühren, oder von unbemerkten Änderungen in der Zusammensetzung des Oberflächenmaterials oder anderem Verschleiß. Eine Beobachtung der Konfidenzwerte durch Speicherung, Verarbeitung und Abgleich in einer Datenbank kann frühzeitig auf Verschlechterung der Verarbeitungsqualität aufmerksam machen.

Ein weiterer Vorteil der Erfindung liegt darin, dass die binäre Kodierung durch zwei Symbole komplementärer Helligkeitsverteilung durch Verwendung farbiger grafischer Symbole einfach auf eine Multi-Wort Kodierung erweitert werden kann, ohne dass das Auswertungsverfahren geändert werden muss. Als zusätzliche Information muss lediglich die Farbe mit erkannt werden.

Im Rahmen dieser Anmeldung wird die Kodierung der Wortlänge Eins, d.h. eine binäre Kodierung, durch grafische Symbole ausführlich behandelt. Es ist leicht eine Multi-Wort-Kodierung herzuleiten, welche Worte von einer Länge größer als Eins durch grafische Symbole kodiert. Dies kann mit einer Farbe unterstützenden Drucktechnik erreicht werden. Dabei werden die grafischen Symbole farbig gedruckt, sodass der schwarzen und weißen Helligkeitsverteilung (Grauwertverteilung) jeweils eine Kombination von Farben zugewiesen wird. Es können beliebig viele Farben verwendet werden, wenn diese zuverlässig voneinander unterschieden werden können. Das optische System erfasst den farbigen Symbolcode bspw. als RGB-Farbbild. Das Farbbild kann dann in einen Helligkeitskanal, d.h. ein Grauwertbild, und weitere Farbkanäle transformiert werden. Der Helligkeitskanal wird so verarbeitet wie zuvor bereits für Grauwertbilder beschrieben. Anschließend kann dann aus den extrahierten Symbolzellen die Farbinformation aus den Farbkanälen hinzugefügt werden, und deren Analyseergebnis mit in die Wortmatrix aufgenommen werden, bevor diese ausgegeben wird.

Nach den Helligkeitsverteilungen der grafischen Symbolen zur Kodierung einer Wortlänge von Eins kann gezählt werden, welche Pixel die bei ihnen erwartete Farbinformation aufweisen, und zwar getrennt nach dem hellen und dunklen Bereich eines Symbols. Verschmutzte Bereiche weisen nicht die gewünschte Farbinformation auf, sodass Pixel dieser Regionen nicht mitgezählt würden. Aus der erhaltenen Anzahl kann ein Konfidenzwert zur Farbinformation errechnet werden als Verhältnis zur tatsächlich erwarteten maximalen Anzahl Pixel mit einer Farbe.

So kann die Wortmatrix mit einer erweiterten Wortlänge und zugehörigen zusätzlichen Konfidenzwerten zur Farbinformation angereichert werden, bevor sie dem Dekodierungsverfahren ausgegeben wird. Wird bei der Farbwahl darauf geachtet, dass aus den erfassten Helligkeiten allein die Zuordnung der auf komplementärer Helligkeit basierenden grafischen Symbole zur Ein-Wort-Kodierung möglich ist, ohne die zusätzlich vorhandene Farbinformation zu nutzen, so kann eine Enkodierung derart erfolgen, dass ein umfangreicher binärer Datensatz in einen Teil, der unabhängig von den zusätzlichen Farbinformationen aus einem Grauwertbild allein dekodiert werden kann, und ein anderen Teil aufgeteilt wird, der nur bei vorhandener Farbinformation dekodiert werden kann und zusätzliche Informationen bereithält, die nicht zwingend notwendig sind.

In Anlehnung an die zuvor beschriebene Farbcodierung ist es erfindungsgemäß auch möglich, für das menschliche Sehvermögen unsichtbare Symbolcodes in ein Farbbild beispielsweise zur krypthographischen Signatur einzubetten. Menschen beurteilen einen Farbwert, der sehr nahe bei einem anderen Farbwert liegt, als gleich. Dieser Effekt wird durch sogenannte MacAdam Ellipsen quantifiziert. Der CIE U', V' Farbraum projiziert diese Ellipsen annähernd auf Kreise, die um einen Farbwert herum gelegt werden können. Haben in einem Farbbild lokale Bereiche einen ähnlichen Farbwert, so kann dieser als Zentrum einer MacAdam Ellipse aufgefasst werden. Platziert man nun ein grafisches Symbol des Symbolcodes in diesem Bereich, so bekommt der dort schwarz gezeichnete Bereich einen Farbwert auf dem Rand der MacAdam Ellipse zugewiesen, der weiß gezeichnete Bereich bekommt einen auf der MacAdam Ellipse gegenüberliegenden Farbwert gesetzt. Um eine Ein-Wort-Dekodierung der grafischen Symbole zur Symbolmatrix durchzuführen, sind nur Helligkeitswerte interessant. Da Farbwerte ignoriert werden können, darf jedes Symbol unterschiedliche Farbwerte besitzen, die jeweils an den Hintergrund des Farbbildes, auf dem der Symbolcode aufgebracht wird, angepasst sind. Um Ränder von Regionen im Farbbild nicht zu zerstören, muss an diesen Stellen nicht unbedingt ein grafisches Symbol gesetzt werden. Steht ein hochauflösendes optisches Erfassungssystem mit homogener Lichtverteilung zur Verfügung, kann ein solcher Symbolcode dekodiert werden. Für einen das Farbbild betrachteten Menschen bleibt dieser hingegen unsichtbar.

Weitere Vorteile, Merkmale und Anwendungsmöglichkeiten der Erfindung ergeben sich auch aus der nachfolgenden Beschreibung von Ausführungsbeispielen und der Zeichnung. Dabei bilden alle beschriebenen und/oder bildlich dargestellten Merkmale für sich oder in beliebiger Kombination den Gegenstand der vorliegenden Erfindung, auch unabhängig von ihrer Zusammenfassung in den Ansprüchen oder deren Rückbezügen.

Es zeigen:

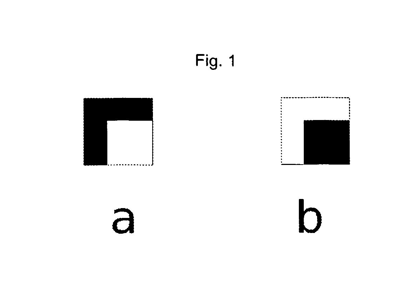

- Fig. 1: ein Ausführungsbeispiel für die Helligkeitsverteilung der grafischen Symbole für ein Null-Wort (Abbildung a) und ein Eins-Wort (Abbildung b), die bevorzugt in einer binären Kodierung verwendet werden können. Die dünn gezeichneten Begrenzungslinien sind nicht Teil der jeweiligen Symbole, sondern dienen der Darstellung deren räumlichen Grenzen.

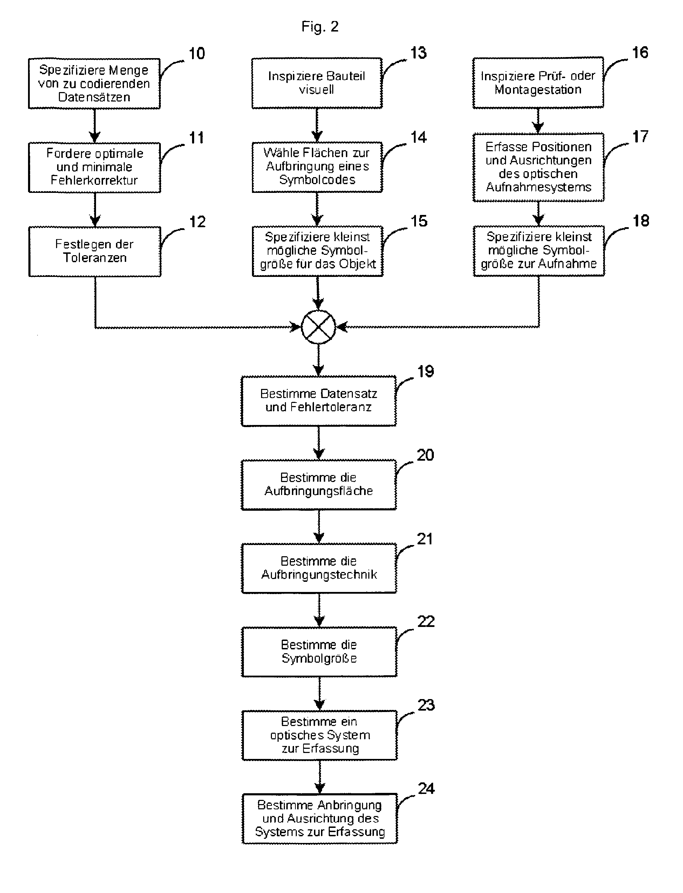

- Fig. 2: ein Ablaufdiagramm für das Vorgehen zur Auswahl, Anbringung und Erfassung eines optimalen erfindungsgemäßen Symbolcodes unter Nebenbedingungen.

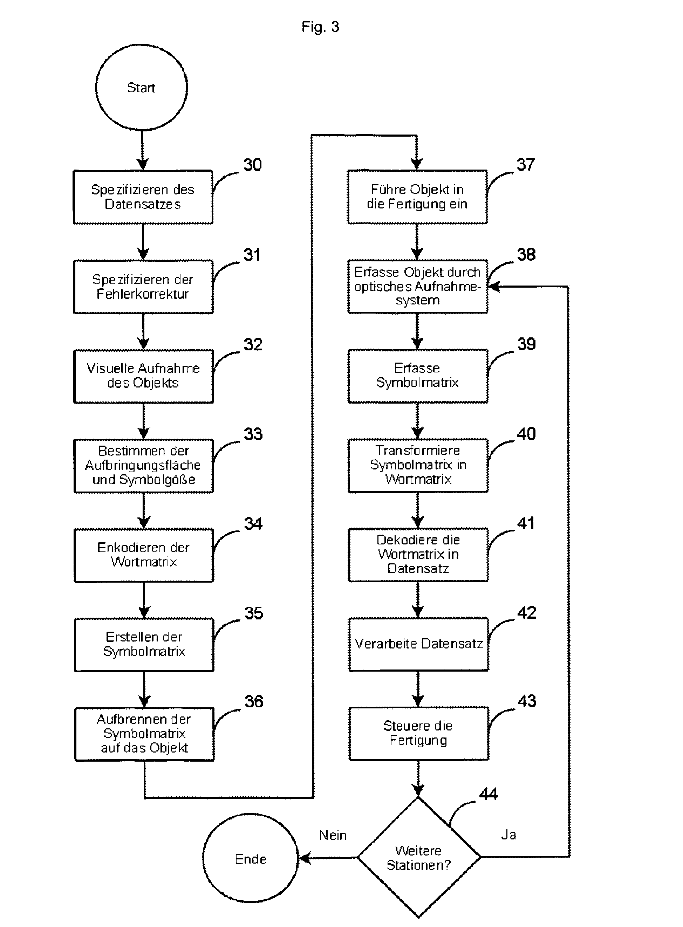

- Fig. 3: ein Ablaufdiagramm für die erfindungsgemäße Einbindung des Symbolcodes zur Automatisierung der Fertigung.

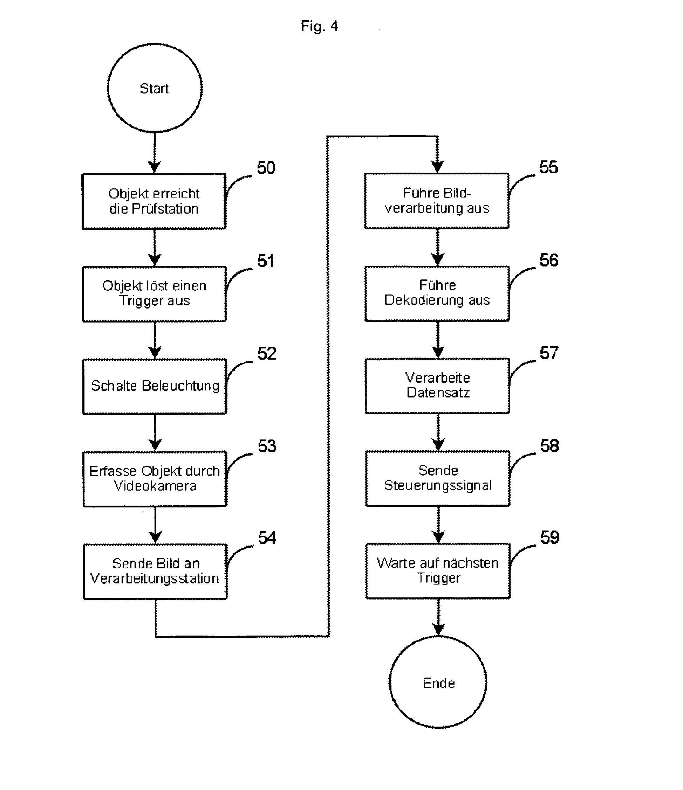

- Fig. 4: ein Ablaufdiagramm für die Einbettung einer Prüf- oder Montagestation mit Erkennung und Verarbeitung eines erfindungsgemäßen Symbolcodes auf einem Objekt.

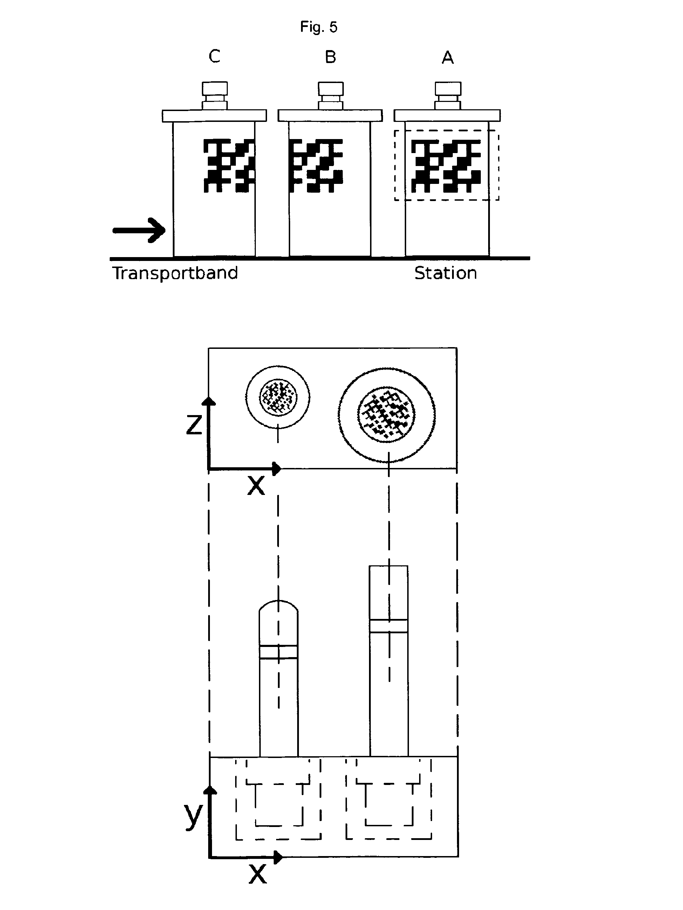

- Fig. 5: den schematischen Ablauf des Erkennens bei einem erfindungsgemäßen Anwendungsbeispiel, bei dem der Symbolcode auf einer zylindrisch gekrümmten Oberfläche mit spiegelnden Eigenschaften angebracht ist.
- Fig. 6: den schematischen Ablauf des Erkennens bei einem erfindungsgemäßen Anwendungsbeispiel, bei dem mehrere Symbolcodes auf Ventilköpfen eines kleinen Steuerventils mit gewölbter und flacher, spiegelnder und matter Oberfläche sowie von unterschiedlicher Höhe erfindungsgemäß durch eine einzige Erkennungsstation aus einem einzigen erfassten Bild gelesen werden.

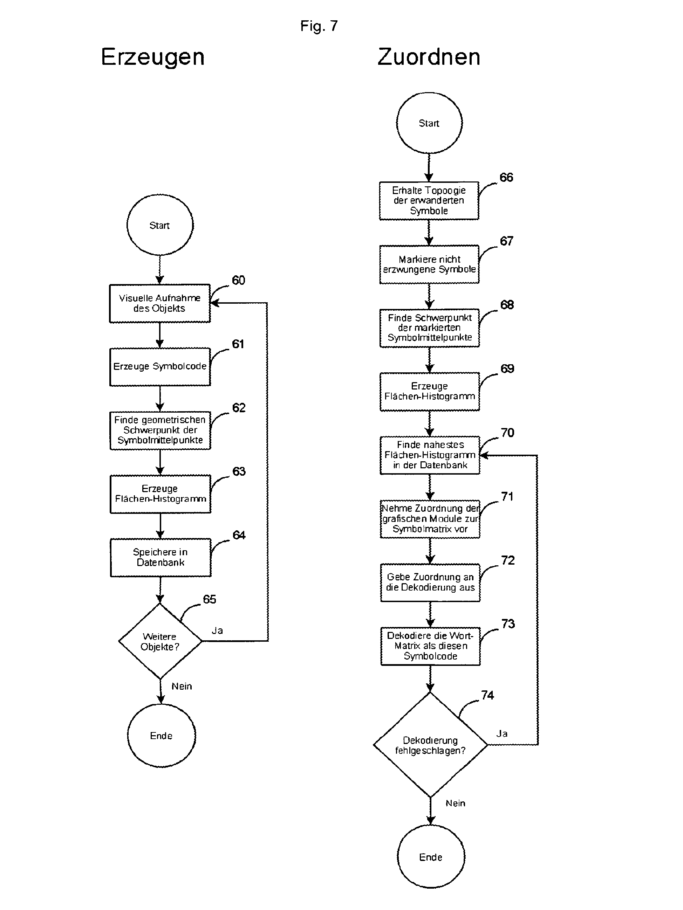

- Fig. 7: ein Ablaufdiagramm für ein erfindungsgemäßes Verfahren zum Erzeugen und Zuordnen verschiedener, durch die innere und äußere Form ihrer Aufbringungsfläche unterscheidbarer Symbolcodes zu den erfassten grafischen Symbolen im aktuell auszuwertenden Bild.

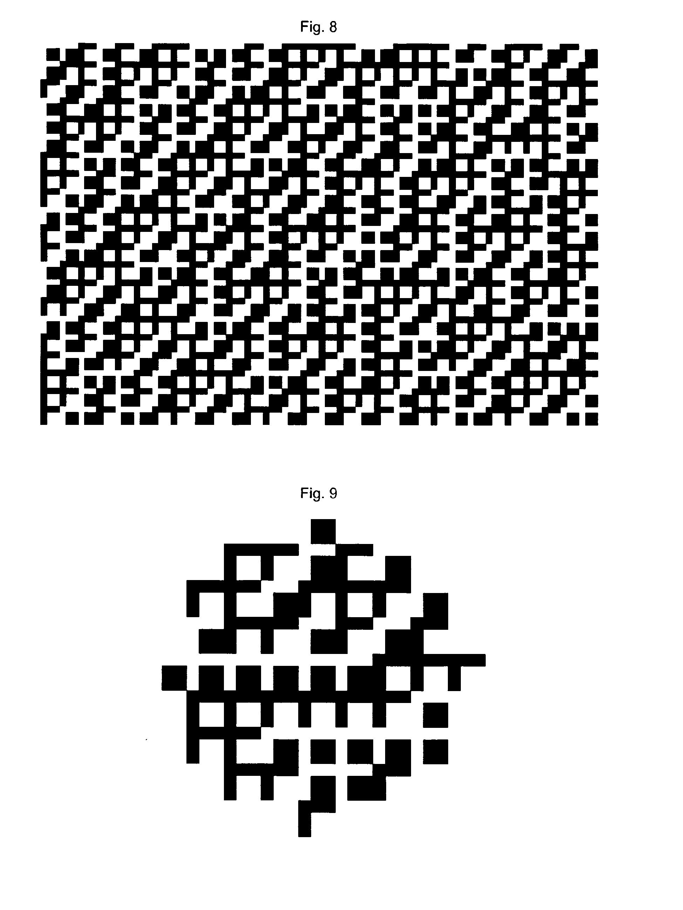

- Fig. 8: eine erste Ausführungsform einer den Symbolcode darstellenden Symbolmatrix in rechteckiger Aufbringungsfläche bestehend aus 21 Zeilen und 30 Spalten einzelner Datenzellen mit einem in jeder Datenzelle angeordneten Symbol gemäß Fig. 1.
- Fig. 9: eine zweite Ausführungsform einer den Symbolcode darstellenden Symbolmatrix in gerasterter kreisförmiger Aufbringungsfläche.

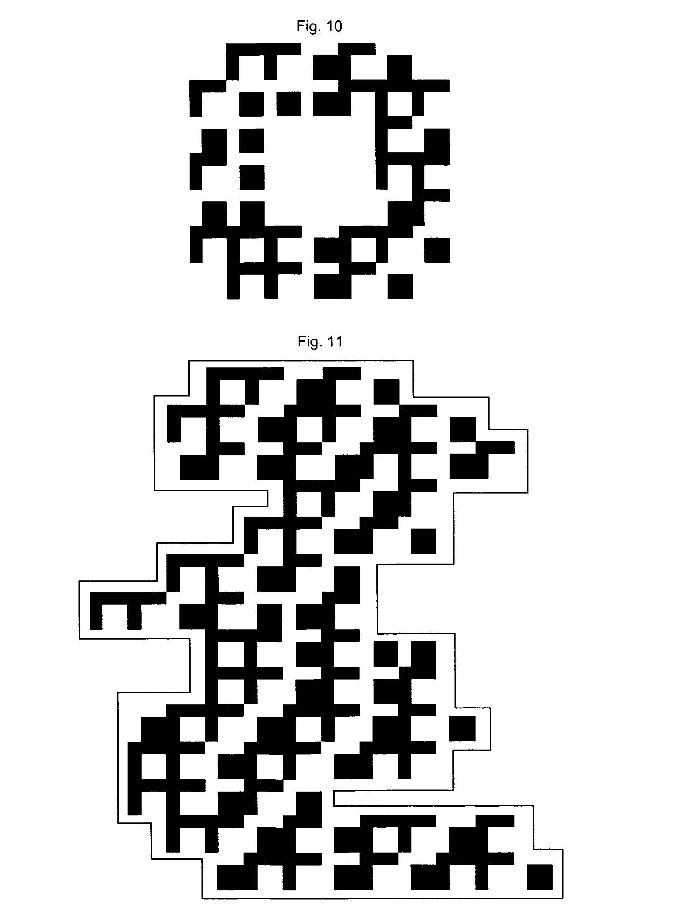

- Fig. 10: eine dritte Ausführungsform einer den Symbolcode darstellenden Symbolmatrix in gerasterter kreisförmiger Aufbringungsfläche mit zentraler Aussparung.
- Fig. 11: eine vierte Ausführungsform einer den Symbolcode darstellenden Symbolmatrix als Freiformfläche in polygonaler Aufbringungsfläche. Zur Veranschaulichung sind die äußere Form in etwa wiedergebende Umgrenzungslinien der Symbolmatrix zusätzlich eingezeichnet, die jedoch nicht Teil des Symbolcodes sind.

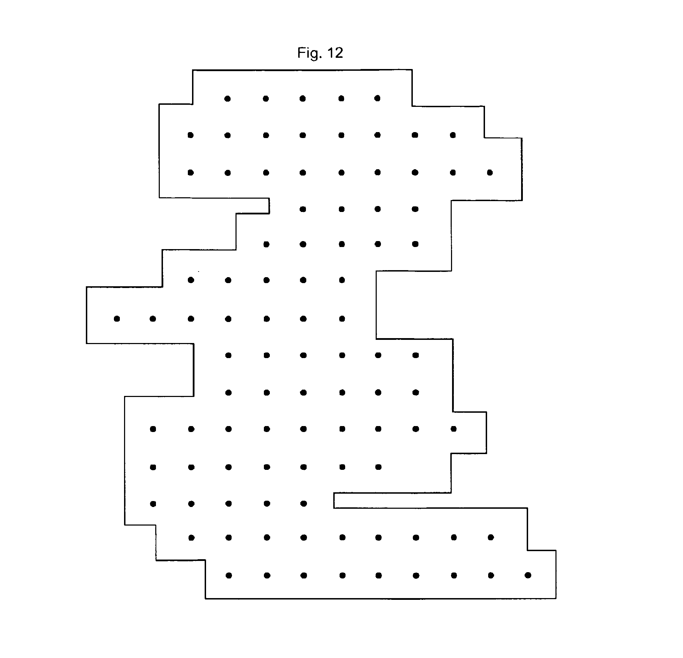

- Fig. 12: eine Darstellung der als Punkt wiedergegebenen Symbolzentren der einzelnen Symbole in den Datenzellen der Symbolmatrix der vierten Ausführungsform gemäß Fig. 11. Hierdurch ist die zeilen- und spaltenförmige matrixähnliche Anordnung der Symbole innerhalb der Freiformfläche hervorgehoben, deren Ränder jedoch von Zeile zu Zeile bzw. Spalte zu Spalte variieren können und ggf. sogar unterbrochen sein können.

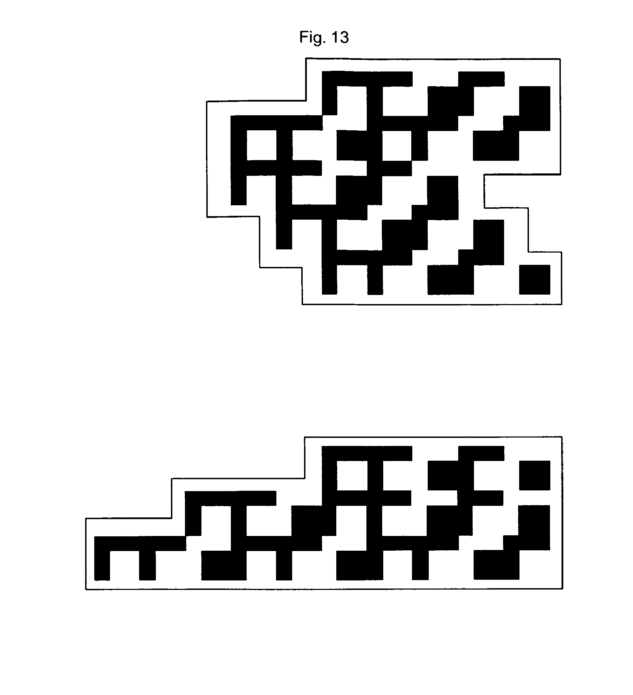

- Fig. 13: eine fünfte Ausführungsform einer den Symbolcode darstellenden Symbolmatrix bestehend aus zwei voneinander getrennten Freiformflächen mit jeweils eigner polygonaler Aufbringungsfläche. Zur Veranschaulichung sind wieder entsprechende Umgrenzungslinien zusätzlich eingezeichnet, die die äußere Form der Symbolmatrix in etwa wiedergeben, jedoch nicht Teil des Symbolcodes sind.

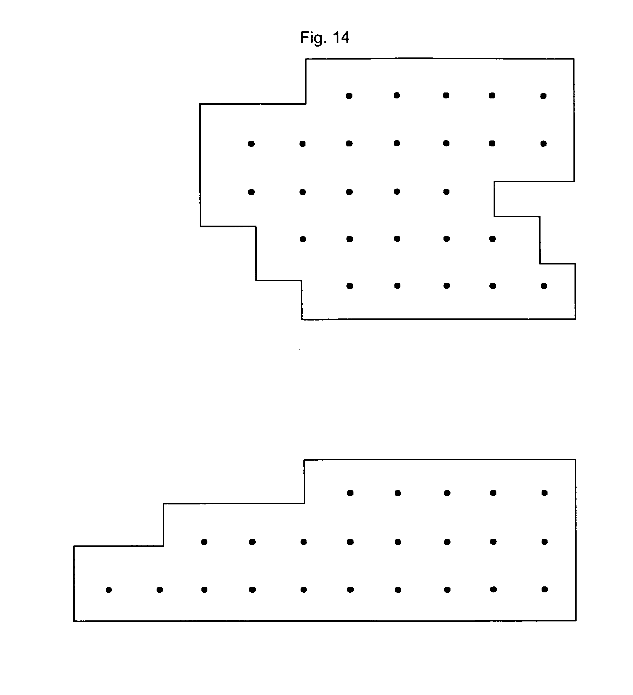

- Fig. 14: eine Darstellung der als Punkt wiedergegebenen Symbolzentren der einzelnen Symbole in den Datenzellen der Symbolmatrix der fünften Ausführungsform gemäß Fig. 13. Hierdurch ist die zeilen- und spaltenförmige matrixähnliche Anordnung der Symbole innerhalb der Freiformfläche hervorgehoben, die sich in dieser Ausführungsform auf beide Freiformflächen erstreckt.

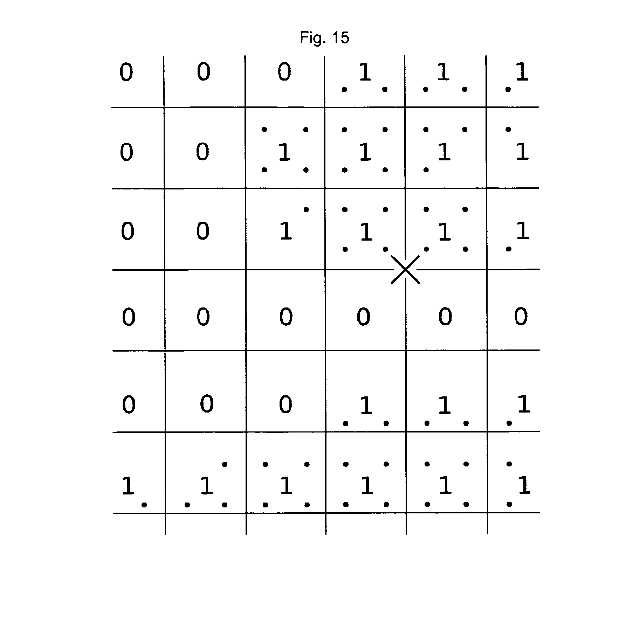

- Fig. 15: eine Darstellung eines Flächen-Histogramms für die Symbolmatrix gemäß Fig. 13, deren geometrischer Schwerpunkt mit einem Kreuz gekennzeichnet ist. Das Flächen-Histogramm zeigt an, ob sich ein durch ein Symbolzentrum dargestelltes Symbol in einer Flächen-Histogrammzelle befindet oder nicht. In diesem Fall hat die Flächen-Histogrammzelle den Wert 1, andernfalls den Wert 0.

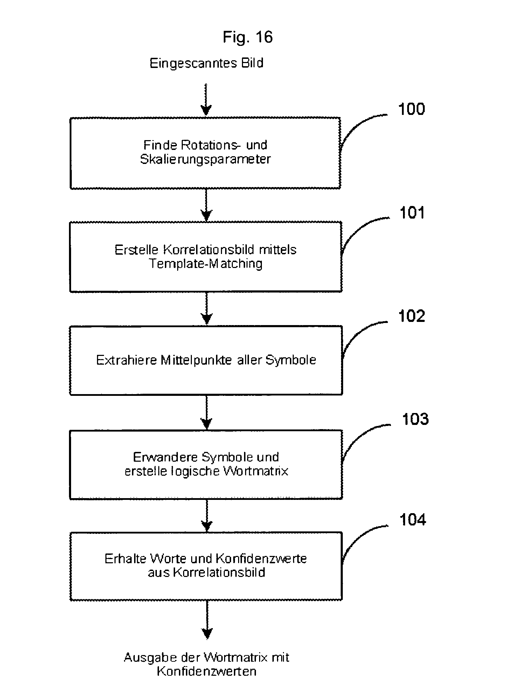

- Fig. 16: ein Ablaufdiagramm mit einem Überblick der allgemeinen Verfahrensschritte für eine erfindungsgemäße Transformation der grafischen Symbolmatrix in deren korrespondierende Wortmatrix einschließlich Ermittlung von Konfidenzwerten.

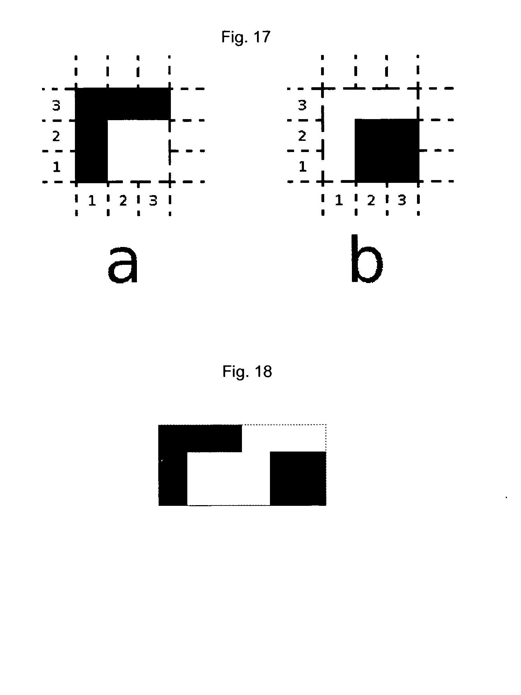

- Fig. 17: die grafischen Symbole für das Null-Wort (Abbildung a) und das Eins-Wort (Abbildung b) mit zusätzlich eingezeichneten Skalierungsinformationen zur Veranschaulichung. Dabei wird deutlich, dass ein grafisches Symbol in 3x3 Pixelblöcke etwa gleich großer quadratischer Seitenlängen eingeteilt ist. Das Hauptmerkmal nimmt dabei einen zusammengefassten 2x2 Pixelblock rechts unten in den grafischen Symbolen a und b ein. Der übrige Bereich ergibt sich als rechtwinklig angeordnete linienartige Fläche, die in der Breite eines 1x1 Pixelblocks, um den zwei aneinander stoßende Seiten des äußeren Rands des Hauptmerkmals gezogen ist. In der hier gewählten Darstellung verläuft die linienartige Fläche in beiden Ausführungen gemäß den Abbildungen a und b von links unten nach rechts oben. Somit ergibt sich in Abbildung a ein Größenverhältnis von 1/3 zu 2/3 zwischen bearbeitetem (logisch schwarz) und unbearbeitetem (logisch weiß) Bereich in jede Richtung entlang der Seitenkanten. Da die Symbole gemäß den Abbildungen a und b eine komplementäre Helligkeitsverteilung zueinander aufweisen, ist das vorgenannte Verhältnis zuwischen bearbeitetem und unbearbeitetem Bereich in Abbildung b gerade umgekehrt.
- Fig. 18: eine Ausführungsform einer Zweifach-Vorlage (auch als Zweifach-Symbolvorlagen oder Doppel-Symbolvorlagen bezeichnet) der beiden Symbole des Systemcodes, die zur Extraktion eindeutiger Rotations- und Skalierungsparameter verwendetet werden kann. Die Erfindung ist nicht auf die beispielhafte Zweifach-Vorlage beschränkt. Vorteilhaft ist es jedoch, wenn erfindungsgemäß sowohl Ausführungen des Null-Wort Symbols als auch des Eins-Wort Symbols in der zwei oder Mehrfachvorlage umfasst sind. Mit einer Zwei- oder Mehrfach-Vorlage werden Zweideutigkeiten der 0°, 90°, 180° und 270° Drehungen aufgelöst.

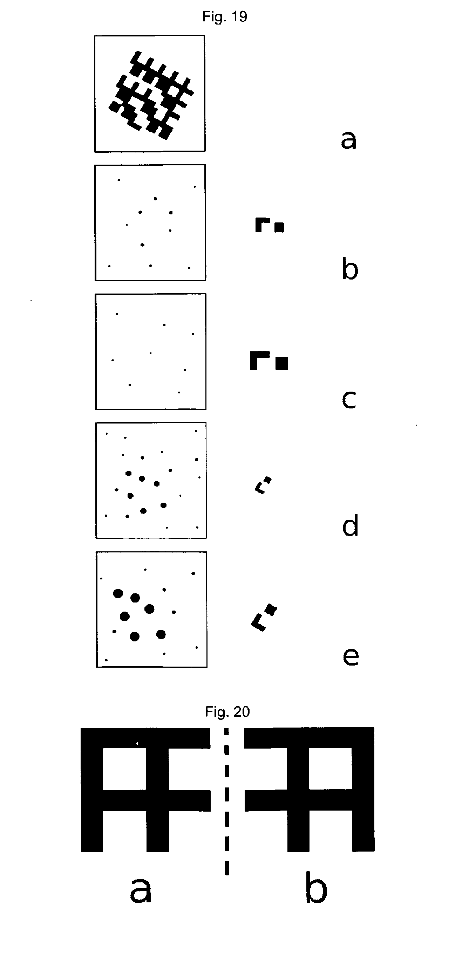

- Fig. 19: das graphische Ergebnis des Antestens verschiedener automatisch generierter Zweifach-Vorlagen zur Ermittlung von Skalierungs- und Rotationsparametem. Bei dem Antesten wurden die jeweils rechts neben der Darstellung mit durch unterschiedlich große Punkte repräsentierten Konfidenzwerten wiedergegebenen Zweifach-Vorlagen auf die Pixel des Bildes der Symbolmatrix in Abbildung a angewendet, d.h. das Bild wurde pixelweise auf Übereinstimmungen des in dem Bild dargestellten Systemcodes mit der Zweifach-Vorlage abgesucht. Dazu wurde die Zweifach-Vorlage relativ über das auszuwertende Bild verschoben und die Deckungsgleichheit von Zweifach-Vorlage und Bild bestimmt. Dieser Vorgang wird auch als Korrelation bezeichnet. Das Ergebnis einer solchen Bestimmung sind Konfidenzwerte. Abbildung a der Fig. 19 zeigt den zu untersuchenden Bildausschnitt mit einer rotierten Symbolmatrix. In den Abbildungen b, c, d und e sind jeweils beispielhaft nach Vorgaben generierte Zweifach-Vorlagen gezeigt, die sich in ihrer Größe und Ausrichtung relativ zu der Symbolmatrix unterscheiden. Die jeweiligen Korrelationsergebnisse sind für alle Pixel links neben den für die Korrelation jeweils verwendeten Zweifach-Vorlagen dargestellt, wobei dickere Punkte eine höhere Konfidenz bedeuten. In der Praxis werden auch außerhalb der Symbolmatrix mögliche Mittelpunkte der Doppel-Symbolvorlage extrahiert, was durch Oberflächenstruktureffekte verursacht werden kann. Weit von den tatsächlichen Parametern entfernte Zweifach-Vorlagen, wie in den Abbildungen b und c weisen allgemein geringere Konfidenzwerte bei der Korrelation auf. Die Zweifach-Vorlagen gemäß den Abbildungen d und e führen zu hohen Konfidenzwerten, wobei die in Abbildung e gezeigte, exakt skalierte und ausgerichtete Zweifach-Vorlage die höchsten Konfidenzwerte erzeugt und zwar genau an den Positionen im Bild, an denen ein solches Symbol in der Symbolmatrix gemäß Abbildung a vorliegt.
- Fig. 20: zeigt in Abbildung a und in Abbildung b jeweils eine Vier-Nachbarschaft aus Zellen von Null-Wort Symbolen. Die Darstellung in Abbildung b entspricht derjenigen in Abbildung a nach einer Rotation um 90° im Uhrzeigersinn. Es ist erkennbar, dass Abbildung b ein Muster zeigt, welches nur noch zwei vollständige Null-Wort Symbole in der in Fig. 1 dargestellten Ausrichtung zeigt.

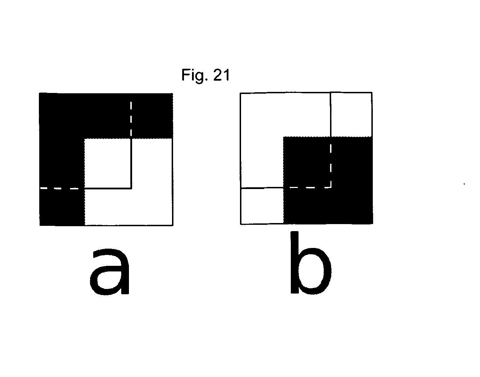

- Fig. 21: erläutert graphisch eine teilweise geltende Skalierungsinvarianz. Wird ein Symbol mit einer kleineren Symbolvorlage korreliert, so wird im Bestfall ein X- bzw. Y-achsenbasiertes Verhältnis von etwa 1/2 von bearbeiteten zu unbearbeiteten Symbolbereichen erreicht, was nicht dem originalen Verhältnis von 1/3 bzw. 2/3 entspricht. Jedoch unter der Berücksichtigung, dass Korrelationswerte durch das unkorrekte Verhältnis um einen konstanten Faktor geringer sind als sonst, kann die Korrelation erfindungsgemäß eine eindeutige Zuordnung ermöglichen.

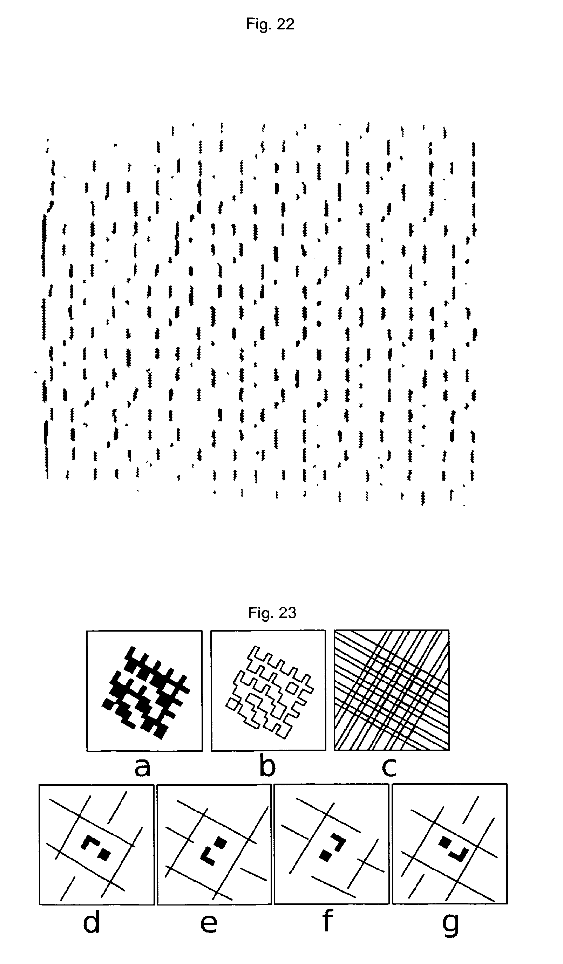

- Fig. 22: zeigt eine quadratische Symbolmatrix nach einer Filterung mit einer Sobel-Filtermaske (Kantendetektor) in Y-Richtung der Bildachsen. Mittels einer Hough-Transformation kann der Steigungswert der Graden extrahiert und somit eine Abschätzung der Rotation der Symbolmatrix gegeben werden.
- Fig. 23: zeigt erläuternd ein erfindungsgemäßes Verfahren zum beschleunigten Antesten der Bildausrichtung der Symbolmatrix mittels einer Hough-Transformation. Hierbei werden Rotationsparameter durch die hauptsächliche Ausrichtung der Liniensegmente der einzelnen grafischen Symbole approximiert. In Abbildung a ist ein Bildausschnitt mit einer rotierten Symbolmatrix dargestellt. Durch Anwendung eines Kantendetektors für Grauwertkanten, wie beispielsweise dem Sobel-Operator in Richtung der X- und Y-Achsenabschnitte, erhält man ein Bild wie in Abbildung b dargestellt. Die extrahierten Liniensegmente können dann mittels einer Hough-Transformation zu parametrisierten Geraden verschmolzen werden, wie in Abbildung c gezeigt. Aufgrund der matrixförmigen Anordnung der grafischen Symbole ergeben sich somit zwei zueinander orthogonale Hauptrichtungen von Geraden. Die parametrisierten Geraden geben die zwei möglichen und die mittels der Zweifach-Vorlage anzutestenden zwei bevorzugten Rotationen vor. Zu jeder Rotation korrespondiert deren Spiegelung, sodass insgesamt vier Freiheitsgerade bestehen beleiben, die mittels der Zweifach-Vorlage angetestet werden. Dies ist in den Abbildungen d, e, f und g dargestellt. Eine Initialisierung für die Skatierungsparameter kann erfindungsgemäß aus den parallelen Geradenabständen aus Abbildung c erhalten werden.

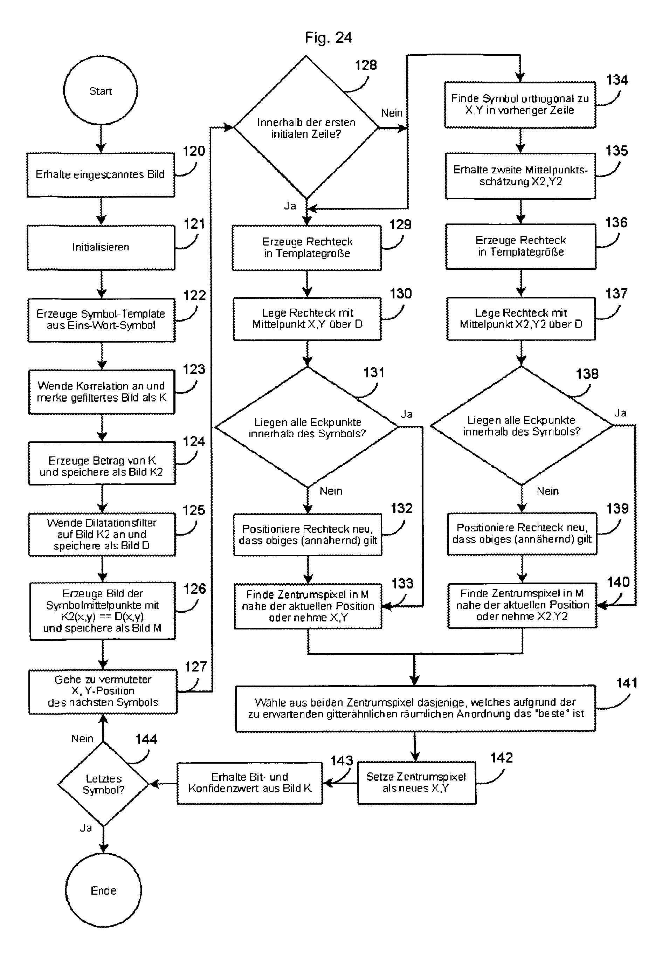

- Fig. 24: ein Ablaufdiagramm für die Mittelpunktfindung der Symbole und das darauffolgende Erwandern dieser Mittelpunkte mit Berücksichtigung von durch die Bildverarbeitung verrauschten Mittelpunktdaten.

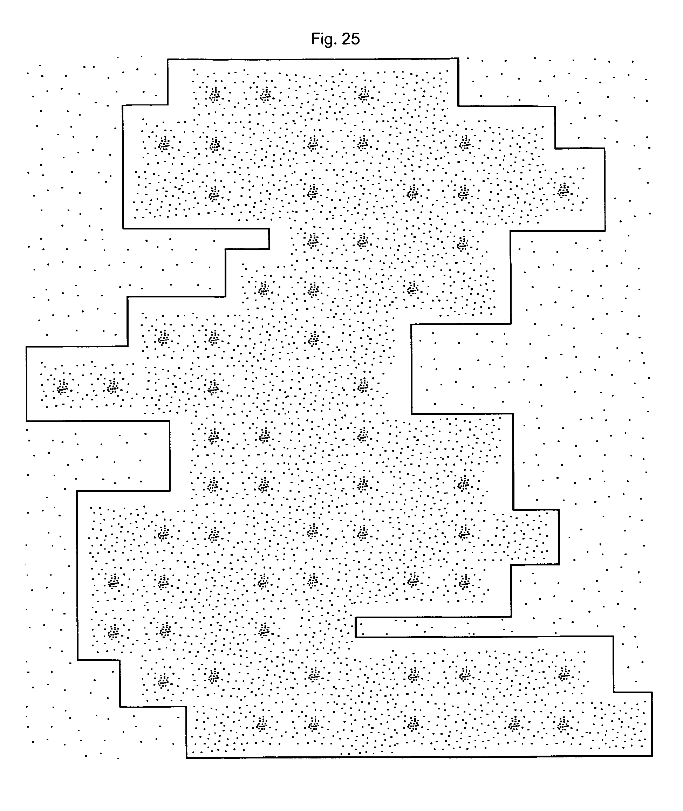

- Fig. 25: ein Korrelationsbild zu der Symbolmatrix gemäß Fig. 11, wobei nur die Korrelationsergebnisse zum Null-Wort hervorgehoben sind. In dieser Zeichnung gibt die Dichte der Punkteverteilung die Korrelationswerte an. Eine hohe Dichte bedeutet einen Korrelationswert von nahe 1.0 und geringe Dichte einen Korrelationswert nahe -1.0. Dies ist darstellungsbedingt, der reale Algorithmus hat eine Grauwertverteilung zur Verfügung. Zur Hervorhebung ist die Aufbringungsfläche zusätzlich eingezeichnet.

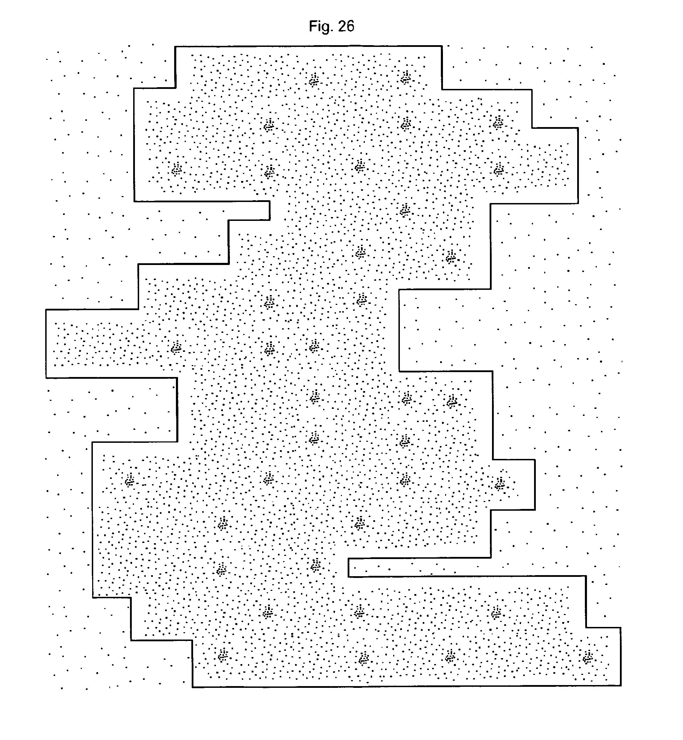

- Fig. 26: ein Korrelationsbild zu der Symbolmatrix gemäß Fig. 11, wobei nur die Korrelationsergebnisse zum Eins-Wort hervorgehoben sind. In dieser Zeichnung gibt die Dichte der Punkteverteilung die Korrelationswerte an. Eine hohe Dichte bedeutet dabei einen Korrelationswert von nahe 1.0 und geringe Dichte einen Korrelationswert nahe -1.0. Dies ist darstellungsbedingt, der reale Algorithmus hat eine Grauwertverteilung zur Verfügung. Zur Hervorhebung ist die Aufbringungsfläche zusätzlich eingezeichnet.

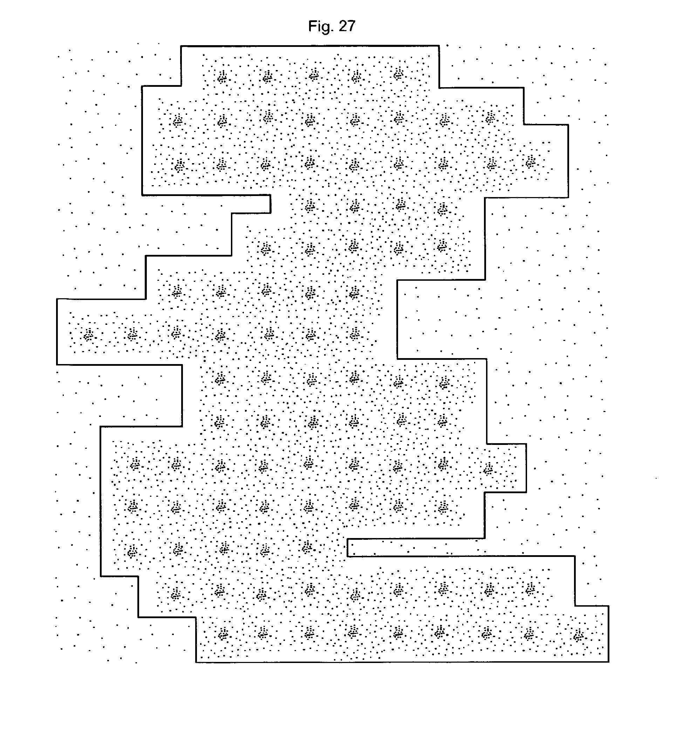

- Fig. 27: ein Korrelationsbild als Betragsbild zu der Symbolmatrix gemäß Fig. 11, wobei die Korrelationen zum Null-Wort und zum Eins-Wort hervorgehoben sind. In dieser Zeichnung gibt die Dichte der Punkteverteilung die Korrelationswerte an. Eine hohe Dichte bedeutet dabei einen Korrelationswert von nahe 1.0 oder -1.0 und eine geringe Dichte einen Korrelationswert nahe 0.0. In letzterem Fall konnte also kein Symbol identifiziert werden. Dies ist darstellungsbedingt, der reale Algorithmus hat eine Grauwertverteilung zur Verfügung. Zur Hervorhebung ist die Aufbringungsfläche zusätzlich eingezeichnet.

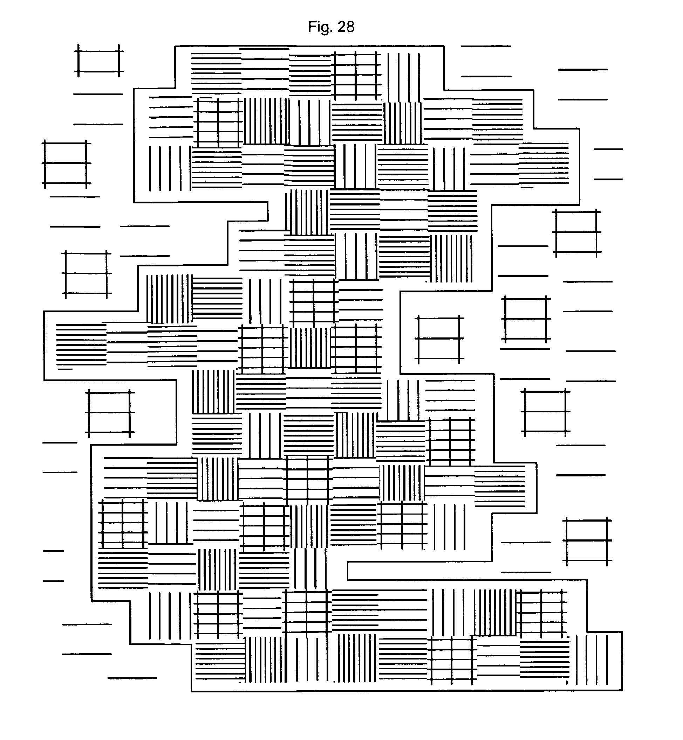

- Fig. 28: ein auf Fig. 27 beruhendes Dilatationsbild, in dem die Dichte der Liniensegmente die Konfidenz für ein Symbol in diesem lokalen Bereich angibt. Dies ist darstellungsbedingt, der reale Algorithmus hat eine Grauwertverteilung zur Verfügung. Zur Hervorhebung ist die Aufbringungsfläche zusätzlich eingezeichnet.

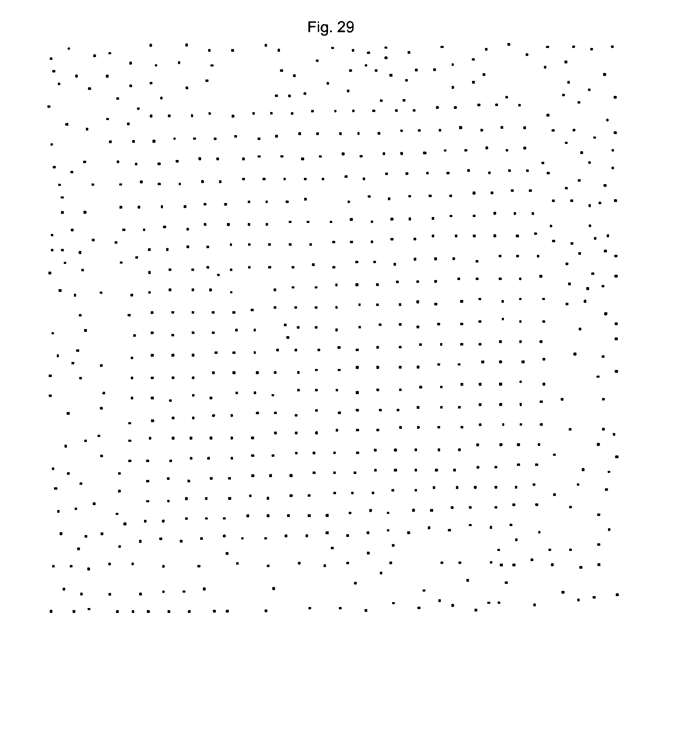

- Fig. 29: ein verrauschtes Mittelpunktsbild einer quadratischen Symbolmatrix auf einer gekrümmten Oberfläche, wobei die extrahierten Symbolmittelpunkte schwarz eingezeichnet sind. Auch auf unbearbeitetem Objekthintergrund sind Mittelpunkte markiert. Innerhalb der Symbolmatrix liegen nicht alle Mittelpunkte auf einem zu erwartenden orthogonalen bzw. parallelen Gitter. Diese Phänomene werden als Mittelpunktrauschen bezeichnet.

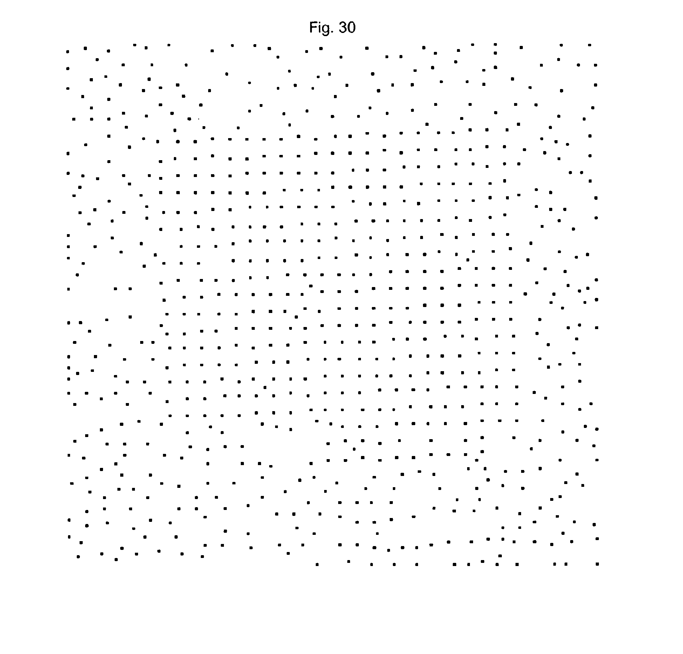

- Fig. 30: ein verrauschtes Mittelpunktsbild einer quadratischen Symbolmatrix auf einer ebener Objektfläche, wobei die extrahierten Symbolmittelpunkte schwarz eingezeichnet sind. Es befinden sich extrahierte Mittelpunkte auch auf der Objektoberfläche neben der Symbolmatrix. An einigen Positionen im Mittelpunktsbild sind keine Mittelpunkte extrahiert worden, obwohl sie sich dort entsprechend der korrespondierenden Symbolmatrix hätten befinden sollen. Auch innerhalb der Symbolmatrix sind aufgrund von Verschmutzungen im erfassten Bild oder durch Ungenauigkeiten bei der Auftragung der grafischen Symbole durch einen Laser Mittelpunkte an Positionen extrahiert worden, an denen keine zu erwarten sind. Die matrixähnliche Gitterstruktur der Mittelpunkte ist im Mittelpunktsbild unter Umständen auch aufgrund von Quantisierungsfehlern, wechselnder lokaler Erkennungsqualität und perspektivischer Verzerrung nicht exakt wiedergegeben.

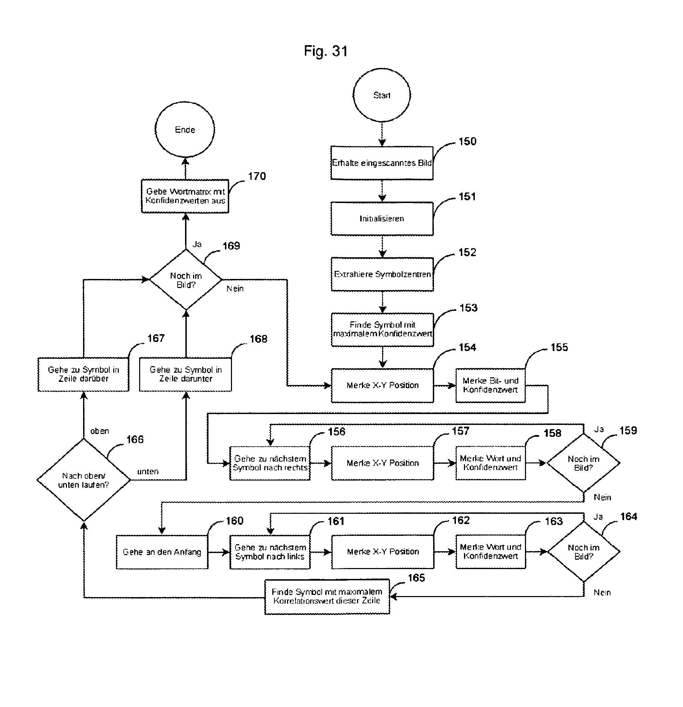

- Fig. 31: ein Ablaufdiagramm für das spalten- und zeilenweise Erwandern aller Symbole zur Erstellung der logischen Wortmatrix gemäß der vorliegenden Erfindung.

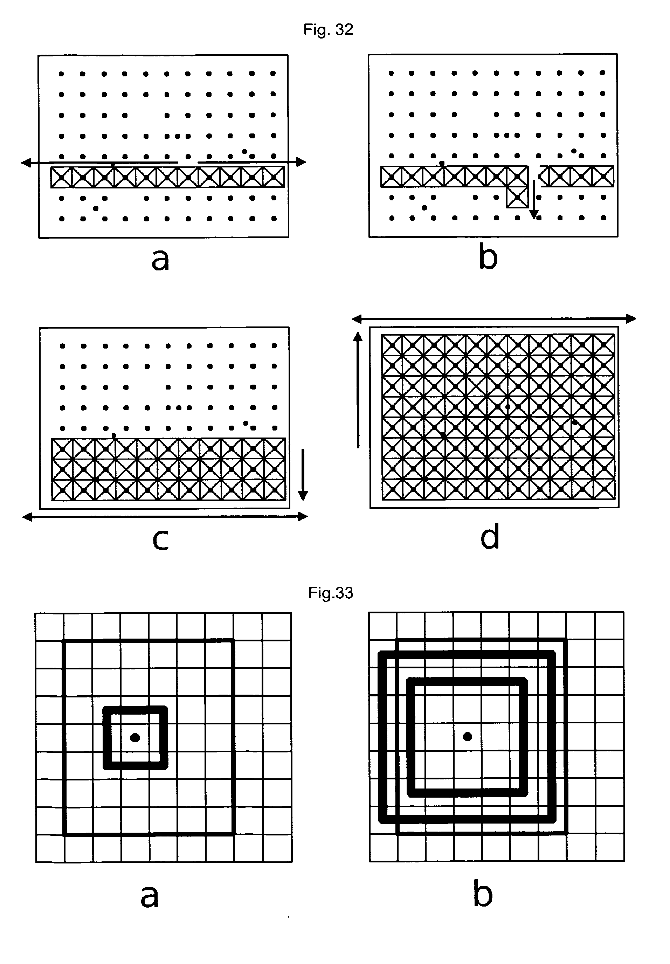

- Fig. 32: eine schematische Darstellung des erfindungsgemäßen Erwanderns der extrahierten Symbolmittelpunkte mittels der Methode des "Region Growing". In Abbildung a wurde der Symbolmittelpunkt mit dem höchsten Konfidenzwert ausgewählt. Von diesem Startpunkt aus wurde eine Zeile aus Mittelpunkten von links nach rechts, sowie von rechts nach links abgelaufen, wie durch die Pfeile symbolisiert. In Abbildung b wird in die nächstuntere Zeile gesprungen. Diese und alle weiteren darunter liegenden Zeilen werden nach gleichem Schema markiert, wie in Abbildung c im Ergebnis dargestellt. Abbildung d zeigt das vollständig markierte Mittelpunktsbild, nachdem von dem Startpunkt aus auch die oberen Zeilen erwandert worden sind.
- Fig. 33: erläuternde Darstellungen des erfindungsgemäßen Verfahrens zur Findung eines extrahierten Symbolmittelpunktes nach dessen Schätzung. Hier ist ein Symbol der Größe 6x6 Pixel dargestellt. Der Mittelpunkt wurde geschätzt. Befindet sich an diesem Pixel kein Mittelpunkt im Mittelpunktsbild, so wird in einer Umgebung von einem Pixel Abstand zur Schätzung gesucht, welche einen Quantisierungsfehler berücksichtigt. Die durchsuchten Pixel sind in Abbildung a dargestellt. Wird auch hier kein Mittelpunkt gefunden, so wird eine Umgebung in der Größe einer Symbolvorlage abgesucht, wobei auch hier Quantisierungsfehler berücksichtigt werden, wie in Abbildung b gezeigt. In den Abbildungen a und b ist jeweils die Umgrenzung des Symbols eingezeichnet, dessen Mittelpunkt gesucht wird.

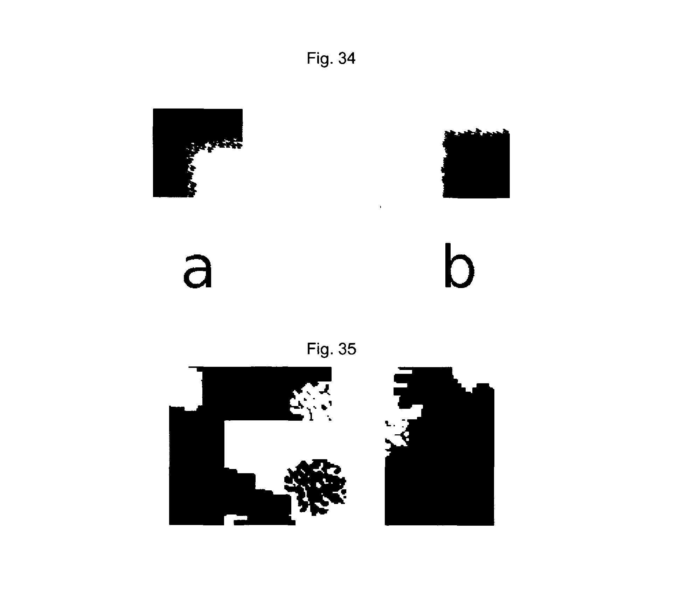

- Fig. 34: Darstellungen typischer Effekte, die bei nicht trennscharf gezeichneten Kanten der Symbole auftreten und deren Auswirkung auf die in der Abbildung mit a und b bezeichneten grafischen Symbole des Symbolcodes. Das Symbol gemäß Abbildung a zeigt eine Überblendung des von der Aufbringungstechnik unbearbeiteten Hauptmerkmals. Das Symbol gemäß Abbildung b zeigt die Auswaschung des bearbeiteten Hauptmerkmals in die angrenzende winkelförmige unbearbeitete Fläche. Diese Effekte treten typischerweise beim Aufbrennen der Symbole auf eine metallische Oberfläche mittels Laser in einem DPM-Verfahren auf.
- Fig. 35: Beispiele von Verschmutzungen und Beschädigungen durch Kratzer auf der Objektoberfläche. Schwarze Flächen auf weißem unbearbeitetem Objekthintergrund stellen Verschmutzungen dar. Weiße Bereiche auf bearbeiteten Objektflächen stellen Kratzer dar, die hell erscheinende Reflexionen auf spiegelnden Oberflächen verursachen. Derartige Fehlstellen können auch durch ungenaue Auftragungstechnik verursacht sein. Sie können zum einen lokal punktuell oder linienförmig auftreten und zum anderen von globaler Art sein, sodass mehrere benachbarte Symbole beschädigt sind.

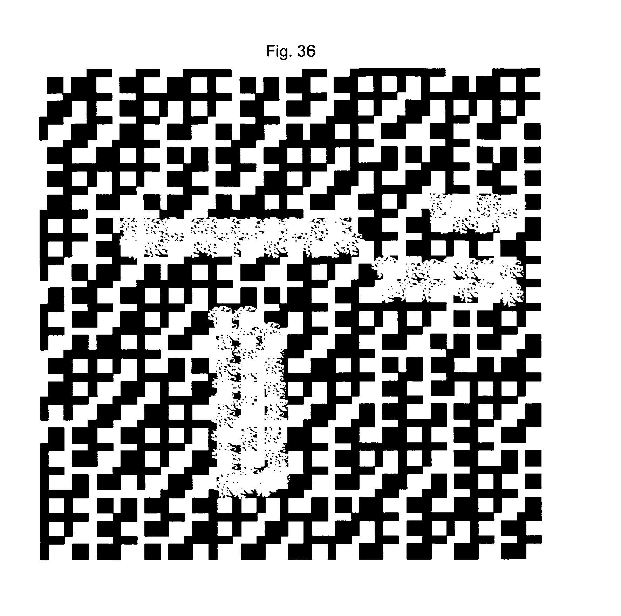

- Fig. 36: eine rechteckige Symbolmatrix mit großflächigen Störungen, die sich auf mehrere benachbarte Symbole erstrecken.

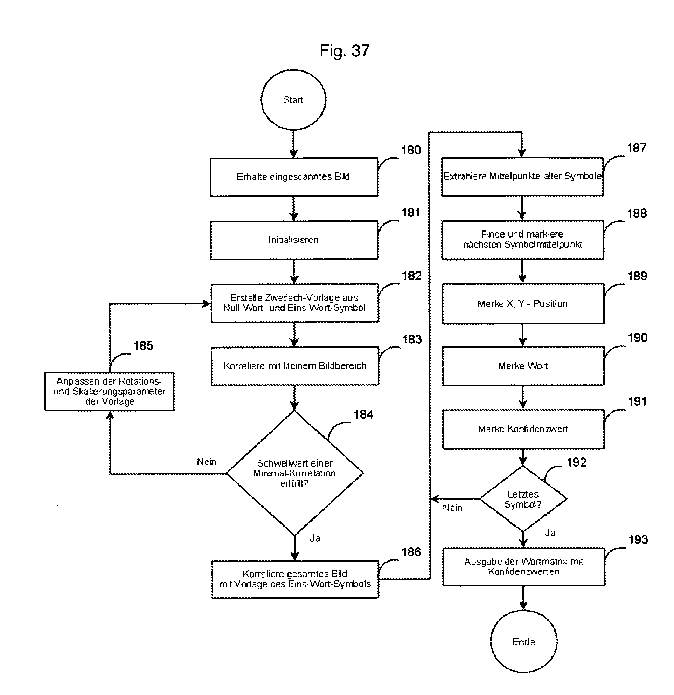

- Fig. 37: ein Ablaufdiagramm für die Verwendung der Zweifach-Vorlage zur erfindungsgemäßen Parameterfindung und einer groben Darstellung der erfindungsgemäßen Extraktion der logischen Wortmatrix.

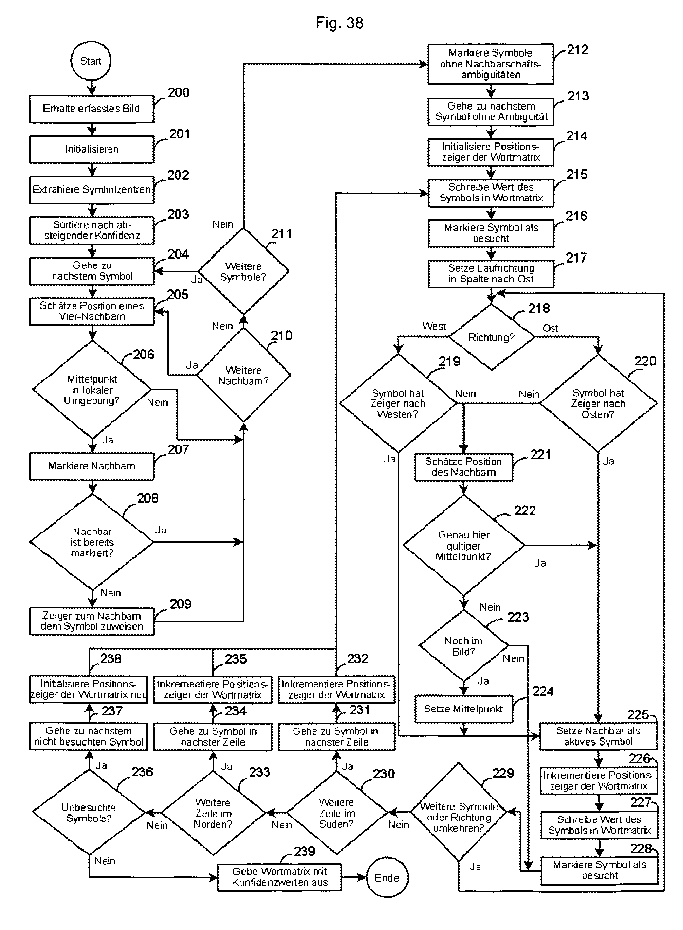

- Fig. 38: ein Ablaufdiagramm für eine erfindungsgemäße, robuste Methode zum Erwandern der Mittelpunkte, wobei lokale Vier-Nachbarschaften miteinander verknüpft werden.

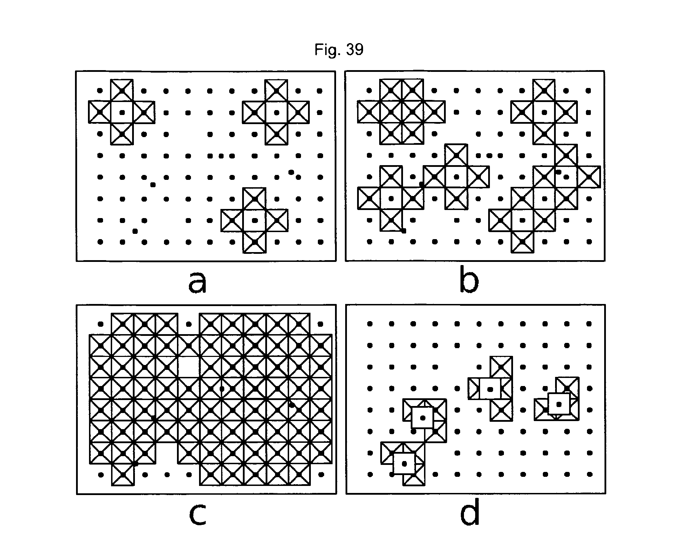

- Fig. 39: eine schematische Darstellung für das Erwandern der extrahierten Mittelpunkte durch die Vier-Nachbarschaft-Methode. Abbildung a zeigt die Mittelpunkte der grafischen Symbole einer rechteckigen Symbolmatrix. An einigen Positionen im Gitter fehlen dort erwartete Mittelpunkte. An anderen Stelen sind durch Mittelpunktsrauschen Mittelpunkte vorhanden, die zu keinem grafischen Symbol korrespondieren. Es sind bereits die Vier-Nachbarschaften einiger Mittelpunkte erwandert worden. Abbildung b zeigt den in Abbildung a begonnenen Prozess des Erwanderns einige Iterationen später. Abbildung c zeigt das Zwischenergebnis, nachdem alle gültigen Vier-Nachbarschaften erwandert wurden. Entstandene Lücken rühren von nicht vollständig erwanderbaren Vier-Nachbarschaften her und werden erst im späteren Verlauf gefüllt. Abbildung d zeigt nur die potentiellen, teils unvollständigen Vier-Nachbarschaften von ungültigen Mittelpunkten. Da angenommen wird, dass aufgrund der schlechteren Konfidenz von ungültigen Mittelpunkten diese Mittelpunkte erst nach dem in Abbildung c darstellten, erreichten Zustand besucht werden, können diese Nachbarschaften direkt verworfen werden, da die zu den ungültigen Mittelpunkten benachbarten Mittelpunkte bereits referenziert worden sind, nämlich im in Abbildung d dargestellten Zustand.

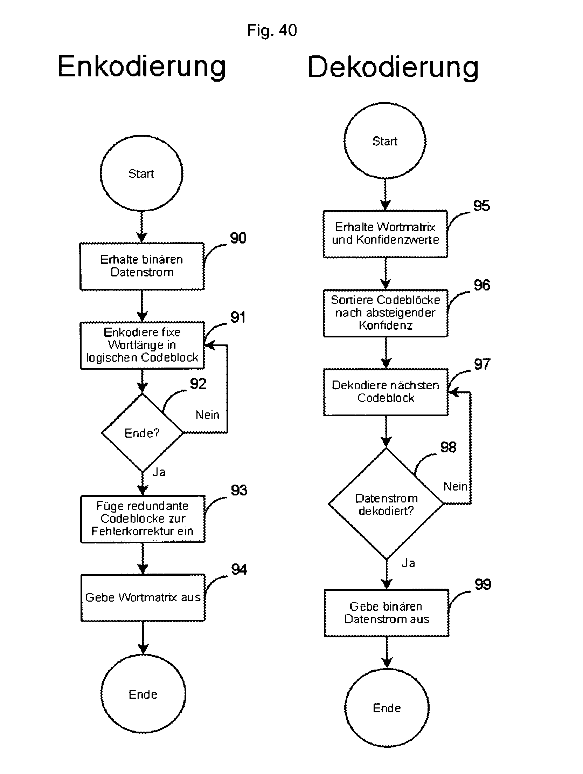

- Fig. 40: einen erfindungsgemäßen Kodierungs- und Dekodierungsalgorithmus, der zur Dekodierung die Konfidenzwerte verwendet, die diese Erfindung zu jedem Wort der logischen Wortmatrix ausgibt, um eine Fehlerkorrektur zu implementieren.

In Fig. 1 sind die grafischen Symbole bzw. Symboltypen für binäre Null- und Eins-Worte dargestellt. Aus diesen beiden Symbolen wird jeder beliebig formbare Symbolcode erzeugt. In den Fig. 2 bis 4 und Fig. 7 sind der Prozess der Entscheidungsfindung für einen Symbolcode und die Einbringung in den Produktionsprozess als Ablaufdiagramme dargestellt. Fig. 5 und 6 zeigen konkrete Beispiele für die Aufbringung eines Symbolcodes auf ein bestimmtes Bauteil, wobei die Variabilität und Vielseitigkeit in der Anwendung des spezifizierten Symbolcodes deutlich werden.

Verschieden geformte Symbolcodes, wie sie in den Fig. 8 bis 11 und 13 beispielhaft dargestellt sind, können problemlos in einen Produktionsprozess integriert werden, wobei Fig. 15 und das Ablaufdiagramm aus Fig. 7 das Erzeugen und Zuordnen von Flächen-Histogrammen zu den verschiedenen Symbolcodes beschreiben. Ein Algorithmus zur Dekodierung der durch Symbole dargestellten binären Worte kann jeweils nur Symbolcodes von einer bestimmten Form behandeln, sodass durch das Flächen-Histogramm des erkannten Symbolcodes der zugehörige Algorithmus zur Dekodierung angesprochen werden kann.

Fig. 16 gibt den allgemeinen Ablauf des erfindungsgemäßen Verfahrens wieder. Zu Beginn sind die Lage- bzw- Rotationsparameter und die Skalierungsparameter der in einem erhaltenen (eingescannten) Grauwertbild des Symbolcodes, das auch als Symbolmatrix bezeichnet wird, befindlichen grafischen Symbole zu ermitteln (Verfahrensschritt 100). Dies ist detailliert in den Fig. 17 bis 23 dargestellt, wobei mehrere alternative Verfahren diskutiert werden. Anschließend wird eine Symbol-Vorlage mit den nun bekannten Parametern mit dem Bild des Symbolcodes, d.h. der Symbolmatrix, korreliert (Verfahrensschritt 101 gemäß Fig. 16). In den Fig. 25 bis 27 sind beispielhaft die Ergebnisse einer solchen Korrelation schematisch dargestellt, wobei die Art der Darstellung nicht den ausgewerteten Bildern entspricht, sondern zur geeigneten Darstellung in Papierform aufbereitet wurde. Mit dem Korrelationsergebnis können nachfolgend Mittelpunkte der in der Symbolmatrix enthaltenen Symbole extrahiert werden (Verfahrensschritt 102 gemäß Fig. 16), was durch lokale Maximumsuche nach Korrelationswerten mithilfe eines Dilatationsverfahrens erfolgt. Dies ist in den Fig. 28 bis 30 erläutert. Diese beiden Prozesse sind in dem Ablaufdiagramm gemäß Fig. 24 zusammengefasst dargestellt. Die erhaltenen Mittelpunkte werden dann erlaufen bzw. erwandert (Verfahrensschritt 103 gemäß Fig. 16), wobei gleichzeitig die Wortmatrix erstellt wird (Verfahrensschritt 104 gemäß fig. 16). Die Wortmatrix entspricht dabei topologisch der Anordnung der grafischen Symbole in der Symbolmatrix. Eine Wortmatrix enthält jedoch nur noch die logischen Worte, die durch korrespondierende Symbole enkodiert sind, sowie als Zusatzinformation einen Konfidenzwert, der die Erkennungssicherheit des jeweiligen ermittelten Symbols beschreibt.

Das Erwandern (Verfahrensschritte 127 bis 144) ist in dem Ablaufdiagramm gemäß Fig. 24 mit dargestellt, wobei dort ein Regionenwachstumsverfahren ("Region Growing") zugrunde gelegt wird, welches durch Fig. 32 und Fig. 33 sowie im Ablaufdiagramm gemäß Fig. 31 detaillierter ausgeführt wird.

Die Fig. 34 bis 36 stellen Beschädigungen von Symbolen dar, die zu geringer Evidenz für ein Symbol an einer Position führen können. Diese Schwierigkeiten müssen von einem Verfahren zum Erwandern extrahierter Mittelpunkte berücksichtigt werden.

Ein zum "Region Growing"-Verfahren alternatives Verfahren zum Erwandern ist das Regionenzusammenfügungsverfahren ("Region Merging"), dargestellt in Fig. 39 mit dem Ablaufdiagramm gemäß Fig. 38.

Fig. 37 zeigt abschließend den allgemeinen Ablauf aus Fig. 16 noch einmal in detaillierterer Form.

Fig. 40 beschreibt, wie in einem letzten erfindungsgemäßen Verfahrensschritt die Konfidenzwerte, die durch dieses Verfahren einem Symbol zugewiesen werden, bei der Implementierung eines Dekodierungs-Algorithmus zur Transformierung einer Wortmatrix in einen Datenstrom nutzbringend verwendet werden können.

Soll ein maschinenlesbarer binärer Datensatz als aus den Symbolen gemäß Fig. 1 gebildeter Symbolcode für ein Objekt eingeführt werden, so werden entsprechend dem Vorgehen nach Fig. 2 teilweise gegenläufige Anforderungen möglichst optimal zusammengeführt. Dabei existieren Beschränkungen und Anforderungen an die gewünschte Menge zu speichernder Binärdaten (Verfahrensschritt 10), die geforderte Zuverlässigkeit der Dekodierung (Verfahrensschritt 12) und der daraus resultierenden minimalen oder optimalen Menge an redundanten Binärdaten zur Fehlerkorrektur (Verfahrensschritt 11). Ferner sind Beschränkungen an dem Objekt selber (Verfahrensschritt 13) zu berücksichtigen. Das Objekt kann beispielsweise nur eine begrenzte Größe und Anzahl zusammenhängender Flächen aufweisen (Verfahrensschritt 14), an denen die erwünschten oder benötigten Objekteigenschaften vorherrschen, wie beispielsweise geringe Reflexion, ausreichende Materialstärke, voraussichtlich geringe Wahrscheinlichkeit für Verschmutzung oder Beschädigung, und an denen mittels möglicher Auftragungstechnik grafische Symbole von einer möglichst geringen Größe aufgebracht werden können, um den Symbolcode kompakt zu halten (Verfahrensschritt 15). Die Auswahl solcher Aufbringflächen kann beispielsweise durch Wölbungen oder Beschaffenheit und Materialstärke der Objektoberfläche begrenzt sein. Auch sind Beschränkungen der Montage- oder Prüfstation selbst (Verfahrensschritt 16) zu beachten, die es nur an einer begrenzten Anzahl von Befestigungsstellen ermöglicht, ein optisches System anzubringen und auszurichten (Verfahrensschritt 17). Neben dem Gerät zur Bilderfassung müssen möglicherweise auch weitere Beleuchtungssysteme oder zusätzliche Einheiten in einer bestimmten Konfiguration ausgerichtet sein. Ferner muss der zu erfassende Teil des Objekts einsehbar sein, welcher im erfassten Bild eine durch das optische System bestimmte Auflösung in Pixel erreicht, die eine Mindestgröße der grafischen Symbole des Symbolcodes vorgibt (Verfahrensschritt 18), damit diese durch Bildverarbeitung verarbeitbar sind.

In der Praxis werden die ursprünglich formulierten Anforderungen aus den Verfahrensschritten 10 bis 12 möglicherweise teilweise nicht erreicht, da die sich ergebenden Beschränkungen aus den Verfahrensschritten 13 bis 15 und 16 bis 18 zu weitreichend sind und die resultierende Lösung, die in den Verfahrensschritten 19 bis 24 definiert wird, nicht optimal ist. Ein Symbolcode, der auch auf Objektflächen mit komplizierten Eigenschaften wie Reflexion oder auf mehrere zusammenhängende Flächen aufgeteilt angebracht werden kann und unter inhomogener Beleuchtung und wechselnder Aufbringungsqualität sicher dekodiert wird, erweitert das Anwendungsspektrum von Symbolcodes und optimiert die erreichbare Gesamtlösung (Verfahrensschritt 19 bis 24).

Durch die erfindungsgemäß für eine Auftragungstechnik der Laser-Brennung besonders optimierte grafische Symbolform und die Verwendung einer grauwertnormalisierten Korrelation zur Symbolextraktion im erfassten Bild, einer frei wählbaren Form der Aufbringungsfläche und dem Verzicht von besonderen Symbolen oder statischen Mustern zur Lageerkennung und Synchronisation können die Auswirkungen von sich ergebenden Beschränkungen aus den Verfahrensschritten 13 bis 18 begrenzt werden, um die in den Verfahrenschritten 10 bis 12 im Vorfeld definierten Anforderungen zu erfüllen.

Ist gemäß dem Ablaufdiagramm nach Fig. 3 nach diesen vorbereitenden Vorüberlegungen eine Entscheidung der Symbolparameter für einen Datensatz getroffen (Verfahrensschritt 30), der maschinenlesbar in einem Symbolcode auf das Objekt aufgebracht werden soll, und ist die erforderliche Redundanz zur Fehlerkorrektur spezifiziert (Verfahrensschritt 31), so kann nach der visuellen Aufnahme des Objekts (Verfahrensschritt 32) die bestmögliche Aufbringungsfläche bestimmt werden (Verfahrensschritt 33). Mit der aus der Form der Aufbringungsfläche resultierenden Kontur und der aus der Größe der grafischen Symbole abgeleiteten Dichte der Symbolmatrix, kann nun ein Verfahren zur Enkodierung parametrisiert werden. Dieser gibt eine Wortmatrix aus, deren Anzahl der Spalten der maximalen Anzahl grafischer Symbole entspricht, die in vertikaler Richtung der äußeren Form auf der Aufbringungsfläche untergebracht werden können, und deren Anzahl Zeilen der maximalen Anzahl grafischer Symbole entspricht, die orthogonal dazu in horizontaler Richtung der äußeren Form auf der Aufbringungsfläche untergebracht werden können. Die Zentren der Symbole der in den Ausführungsbeispielen gemäß Fig. 11 und 13 dargestellten Symbolcodes sind in den Fig. 12 und 14 wiedergegeben.

Die erzeugte Wortmatrix enthält in jeder Zelle einen Wert Null oder Eins, welche aus dem Prozess zur Enkodierung des gewählten Datensatzes mit zusätzlicher redundanter Fehlerkorrektur resultieren (Verfahrensschritt 34) oder anderweitig vorgegeben wurden, oder gar keinen Wert, wenn diese Zelle nicht zur Aufbringungsfläche gehört. Aus der Verteilung der Worte der logischen Wortmatrix wird dann die dazu korrespondierende grafische Symbolmatrix erzeugt, indem ein Bild, bspw. ein Bitmapbild, erzeugt wird, dessen Abmessungen denen eines grafischen Symbols in Pixel multipliziert mit der Anzahl Zeilen bzw. Spalten der Wortmatrix entsprechen, wobei die Anordnung frei ist und die Anzahl der Spalten pro Zeile (bzw. umgekehrt) variieren kann. Hierdurch lassen sich an die Aufbringfläche optimal angepasste Bilder der Symbolmatrizen erzeugen.

Zu jedem Wort der Wortmatrix wird ferner ein Zentrumspunkt einer korrespondierenden topologischen Position in dem Bild berechnet, sodass keines der grafischen Symbole ein anderes überlagert. Dann wird in jede der so entstandenen grafischen Symbol- bzw. Datenzellen im Pixelbild entsprechend dem der Datenzelle korrespondierenden Wortwert aus der logischen Wortmatrix das grafische Symbol für ein Eins- bzw. Null-Wort gezeichnet, wie es in den Fig. 1a und b dargestellt ist. Das so erzeugte Bild der Symbolmatrix, wie es beispielhaft in den Fig. 8, 9, 10, 11 oder 13 dargestellt ist, wird dann in Verfahrensschritt 35 (vgl. Fig. 3) an ein Gerät zur Auftragung des Musters auf das Objekt gesendet. Beispielsweise ist dies ein Laser, der an vorgegebener Stelle am Objekt den Symbolcode aufbrennt (Verfahrensschritt 36).

Das markierte Objekt wird dann in einen Fertigungsprozess eingeführt bzw. zurückgeführt (Verfahrensschritt 37), wo das Objekt im Laufe der weiteren Fertigungsschritte an dafür vorgesehenen Prüf- oder Montagestationen erfasst (Verfahrensschritt 38) wird, um dort den auf den Objekten aufgebrachten Symbolcode zu dekodieren. Das Erfassen durch ein optisches System der Prüf- oder Montagsstation, beispielsweise ein Scanner oder eine Videokamera, findet statt, sobald das Objekt die Station erreicht hat (Verfahrensschritt 50), wie in Fig. 4 detailliert dargestellt.

So wird bei Erreichen der Montagestation durch das Objekt ein Trigger gestartet (Verfahrensschritt 51). Möglicherweise werden im Anschluss und ausgelöst durch den Trigger vor der Aufnahme des Objekts Beleuchtungseinrichtungen geschaltet (Verfahrensschritt 52), die eine homogene Lichtverteilung während der Aufnahme herstellen, soweit dies erforderlich ist.

Das Erfassen des Objekts durch die Aufnahmeeinrichtung (Verfahrensschritt 53) und die Verarbeitung des Bildmaterials können in voneinander verschiedenen Geräten erfolgen, so dass das erfasste Bild an ein Bildverarbeitungsgerät weitergesendet wird (Verfahrensschritt 54). Zunächst werden mittels in dem Gerät installierten Bildverarbeitung (Verfahrensschritt 55) die Symbolmatrix extrahiert und die Zentren der Symbolzellen im erfassten Pixelbild bestimmt, wie sich aus Verfahrenschritt 39 gemäß Fig. 3 ergibt. Danach wird die Symbolmatrix in die zu den Symbolzentren korrespondierende Wortmatrix transformiert (Verfahrensschritt 40), wie später noch ausführlicher erläutert wird.

Aus der logischen Wortmatrix rekonstruiert der Dekodierungsalgorithmus (Verfahrensschritt 56, Fig. 4) den enkodierten binären Datensatz (Verfahrensschritt 41, Fig. 3), evtl. unter Zuhilfenahme einer vorhandenen Fehlerkorrekturinformation. Der binäre Datensatz kann dann von einem Prozessrechner der Prüf- oder Montagestation verarbeitet werden, wie in den Verfahrenschritten 42 von Fig. 3 und 57 von Fig. 4 dargestellt.

Diese Verfahrenschritte haben denselben Inhalt und stimmen überein, obwohl Sie in verschiedenen Verfahrenabläufen dargestellt und mit verschiedenen Bezugszeichen versehen sind. Ursache hierfür ist, dass die verschiedenen Verfahrensabläufe dieselben Operationen teilweise in einen anderen logischen Gesamtzusammenhang stellen, so dass es immer wieder zu Überschneidungen der verschiedenen Ablaufdiagramme kommt.

Der Prozessrechner sendet möglicherweise abhängig vom Verarbeitungsergebnis Steuerungssignale (Verfahrensschritt 58, Fig. 4) an entfernte Geräte. Die Erfassungsstation wartet dann auf ein neues Objekt (59). Durch die ausgesendeten Steuersignale kann bspw. der weitere Fertigungsprozess gesteuert werden (Verfahrensschritt 43, Fig. 3).

Während des Fertigungsprozesses kann dasselbe Objekt an verschiedenen weiteren Station erfasst und in derselben Weise kann der Symbolcode ausgewertet werden, wie durch Verfahrenschritt 44 angedeutet werden soll.

Da in Abhängigkeit der Auftragungstechnik, der Erfassungstechnik und des Oberflächenmaterials die logisch schwarzen und weißen Flächen der in Fig. 17 in den Abbildungen a und b dargestellten grafischen Symbole im zur Bildauswertung erfassten, in diesem Beispiel nicht farbigen Pixelbild tatsächliche Grauwerte in zur logischen Definition umgekehrter Helligkeit aufweisen können, muss dies als Parameter des Gesamtsystems berücksichtigt und vorher ggf. parametriert werden.

Im Folgenden wird der Prozess der Bildverarbeitung nach der Erfassung des Objekts durch beispielsweise eine Videokamera näher beschrieben.

Während die winkelartige Fläche des grafischen Symbols gemäß Fig. 1 bzw. Fig. 17, jeweils Abbildung a, von einer zweiseitig schmalen und langgezogenen Form ist, ist gegensätzlich die quadratische Fläche (Abbildung b) breit und füllend. Diese letztere Form wird daher nachfolgend auch als Hauptmerkmal bezeichnet.

Sind um ein Symbol mit unbearbeitetem Hauptmerkmal andere Symbole so angeordnet, dass dieses von bearbeiteten Bereichen gänzlich umschlossen wird, ist aufgrund der verhältnismäßigen Größe des Hauptmerkmals der Effekt einer Überblendung abgeschwächt, denn das Quadrat ist doppelt so breit und hoch wie die Breite der zur winkelförmigen Fläche gehörigen Linien, die diese quadratische Fläche umgrenzen würden. Wird das Hauptmerkmal bearbeitet und die angrenzende winkelförmige Fläche bleibt unbearbeitet, so ist das Problem der Auswaschung bzw. Überblendung des Winkelbereichs im Vergleich zu vorherigem Beispiel erhöht, da die unbearbeitete Fläche schmal ist.

Hier kann das Hauptmerkmal beispielsweise von vornherein erfindungsgemäß mit etwas geringerer Fläche aufgebracht werden, um den erwarteten Effekt zu kompensieren. Jedoch vermindert dies eine zuverlässige Unterscheidung nicht, da sich durch Auswaschung verursachte Abweichungen in den Grauwerten der erfassten Symbole zu ihren optimalen Vorlagen bei einem relativen Vergleich gegenseitig aufheben, wenn zur Erkennung der Symbole das erfindungsgemäße Korrelationsverfahren verwendet wird, bei welchem der euklidische Abstand ein Maß zur Zuordnung ist. Auch aus diesem Grund sind der erfindungsgemäße Symbolcode und das zugehörige Verfahren zum Lesen des Symbolcodes besonders robust und zuverlässig.

Nach dieser Vorbetrachtung wird nun der allgemeine Ablauf der Bildverarbeitung im Rahmen des erfindungsgemäßen Leseverfahren ausgehend von Fig. 16 erläutert.

Zur Extraktion der Symbolmatrix aus einem aufgenommenen bzw. eingescannten Bild der Symbolmatrix müssen die Rotations- und Skalierungsparameter der einzelnen grafischen Symbole erfasst werden (Verfahrensschritt 100). Je nach Aufnahmesituation und Einbettung der Bilderfassung in den Fertigungsprozess, kann ein Objekt verschieden rotiert und in unterschiedlicher Entfernung zur Kamera positioniert sein, sodass die Bestimmung der Parameter erfindungsgemäß bevorzugt dynamisch erfolgt, d.h. in der jeweiligen Aufnahmesituation.

Andererseits existieren Situationen, in denen zu erfassende Objekte nur eine Verschiebung aufweisen, ihren Abstand zum Erfassungssystem aber nicht signifikant ändern, sodass die Skalierungs- und Rotationsparameter fest vorgegeben werden können. Es ist möglich, dass nur Rotationen des Objekts zu erwarten sind, sodass in einem solchen nur die Rotationsparameter geschätzt werden müssen.

Beides erfolgt durch Ausprobieren verschiedener wahrscheinlicher Kombinationen von Parametern, wonach jeweils eine Vorlage nach Fig. 17 (Symbolvorlage) und Fig. 18 (Zweifach-Vorlage) erstellt wird und das Korrelationsergebnis nach Anwendung der verschieden Parameter evaluiert wird. Sind die korrekten Parameter gefunden, so kann das gesamte erfasste Bild mit einer Adaption des grafischen Symbols entsprechend diesen Parametern korreliert werden. Diese Korrelation wird auch als Template-Matching (Verfahrensschritt 101) bezeichnet, weil die Übereinstimmung einer Vorlage mit einem Bild bzw. einem Teilbereich des Bildes untersucht wird. Das Korrelationsergebnis wird dann evaluiert und es werden die Pixelkoordinaten der Symbolmittelpunkte bzw. Symbolzentren in dem Bild extrahiert (Verfahrensschritt 102), die die ursprünglich aufgebrachte Symbolmatrix repräsentieren. Die extrahierten Symbolmittelpunkte werden nun im Pixelbild nacheinander erwandert (Verfahrensschritt 103), sodass ihre logische Nachbarschaft zu allen anderen Symbol- bzw. Datenzellen beibehalten wird.

Nur aus den erlaufenen Symbolmittelpunkten wird anschließend die Wortmatrix rekonstruiert (Verfahrensschritt 103), wobei das zu einem Symbolmittelpunkt gehörige Wort aus dem Grad der Übereinstimmung mit einem der beiden grafischen Symbole an dieser Pixelposition abgeleitet wird (Verfahrensschritt 104). Der Grad der Übereinstimmung bei der Korrelation der Symbolvorlage wird als Konfidenzwert bei der Korrelation ermittelt und gibt die Qualität und Zuordnungssicherheit eines Wortes zu dieser Position an. Die ermittelten Worte und die zugehörigen Konfidenzwerte werden als Wortmatrix ausgegeben, wobei die Wortmatrix hier statt Werten Null und Eins eher negative und positive Fließkommawerte Werte enthält, die äquivalent die beiden Worte und den Konfidenzwert zugleich repräsentieren. Diese Wortmatrix wird entweder direkt an das Verfahren zur Dekodierung und Wiederherstellung des binären Datensatzes ausgegeben oder es wird zuvor als weiterer Parameter die Aufbringungsfläche des Symbolcodes bestimmt, die durch seine Form gegeben ist. Das Vorgehen hierzu ist in Fig. 7 grundsätzlich erläutert.

Nachfolgend wird der anhand von Fig. 16 zuvor im Überblick erläuterte Verfahrensablauf noch einmal detaillierter wiedergegeben.

Die Ermittlung der Rotations- und Skalierungsparameter (Verfahrensschritt 100) erfolgt durch sogenanntes Antesten. Dies ist in den Verfahrenschritten 182 bis 185 der Fig. 37 wiedergegeben.

Die Vorgehensweise ist in Fig. 19 dargestellt. Für das Template-Matching wird eine Zweifach-Vorlage verwendet, die in Fig. 18 dargestellt ist und zwei benachbarte grafische Symbole umfasst. Die Zweifach-Vorlage wird dynamisch im Bitmapspeicher mit typischen Parametern erzeugt (Verfahrensschritt 182). Beispielsweise wird eine Symbolgröße von acht Pixel Seitenlänge und eine Rotation von null Grad angenommen, so kann die Vorlage nach den relativen Größenverhältnissen der bearbeiteten und unbearbeiteten Flächen zueinander, wie sie sich aus Fig. 17 ergeben, in einen Bitmapspeicher gezeichnet werden, der für die beispielhafte Zweifach-Vorlage eine Höhe von acht und eine Breite von 16 Pixel hat. Beim Zeichnen der Symbole werden nur jeweils zwei verschiedene Grauwerte benötigt, also etwa der Wert "255" zum Füllen der weißen unbearbeiteten Flächen und der Wert "0" für schwarze bearbeitete Flächen.

Es wird eine Zweifach-Vorlage statt etwa nur eines einzelnen Symbols verwendet, da so übergeordnete Muster entstehen, wenn einzelne Symbole innerhalb der Symbolmatrix direkt nebeneinander ohne weiteren Zwischenraum zwischen den Zellen angeordnet sind. Solche übergeordneten Muster, beispielsweise innerhalb einer in Fig. 20 dargestellten Vier-Nachbarschaft von Symbolen, sind dem Muster eines einzelnen Symbols sehr ähnlich, weisen allerdings um ein Vielfaches von 90° verschiedene Rotationsparameter zu der tatsächlichen Ausrichtung der Symbolmatrix auf. Eine gute Korrelation der übergeordneten Muster kann unter Benutzung der Zweifach-Vorlage unterbunden werden.

Diese Zweifach-Vorlage wird dann in einem normalisierten Korrelationsverfahren auf das zu analysierende Grauwertbild angewandt (Verfahrensschritt 183). Da das beschriebene dynamische Erzeugen und anschließende Korrelieren möglicherweise mehrfach mit verschiedenen Parametern durchgeführt wird (Verfahrensschritt 184), können zur Geschwindigkeitssteigerung anstatt des gesamten Bildes auch nur ein vergleichsweise kleiner Teilbereich oder alternativ mehrere Ausschnitte an verschiedenen Positionen des Bildes zum Korrelieren verwendet werden. Diese Teilbereiche sind dann üblicherweise der Einfachheit halber rechteckig gewählt, wobei deren Seitenlängen ein Vielfaches der Höhe bzw. Breite der aktuellen Zweifach-Vorlage bilden. Ein Antesten hat nur in repräsentativen Bildbereichen Sinn, in denen auch die korrelierte Vorlage zu finden ist. Da aber zu diesem Zeitpunkt der Bildanalyse nicht bekannt ist - es sei denn zusätzliche Informationen sind verfügbar-, an welcher Position im Bild sich der Symbolcode befindet, kann angenommen werden, dass er sich hauptsächlich über den mittleren Bildbereich erstreckt. Sind aufgrund der Ausrichtung des Erfassungsgeräts eher andere Bildbereiche relevant, so können andere oder mehrere solcher Teilbereiche definiert werden.

Nachdem die Korrelation auf alle diese Bildbereiche oder ggf. das gesamte Bild angewandt wurde, liegen für jedes Pixel Konfidenzwerte als Korrelationsergebnis vor. Diese Konfidenzwerte werden in Verfahrensschritt 184 bewertet. Der maximale betragsmäßige Konfidenzwert aller korrelierten Bildregionen wird festgestellt und es wird überprüft ob damit ein festgesetzter minimaler Wert überstiegen wird. Wird ein solcher minimaler Konfidenzwert erreicht, so kann davon ausgegangen werden, dass Rotations- und Skalierungsparameter gefunden wurden, die den tatsächlichen Werten genügend nahe sind und die weitere Suche kann abgebrochen werden. Dieser Zustand wurde in Fig. 19e erreicht, nicht dagegen bei den in den Fig. 19b bis Fig. 19d dargestellten Korrelationen mit anders skalierten bzw. rotierten Zweifach-Modellen.

Da ein statisch gewählter minimaler Wert weitere Parameter des Erfassungssystems wie Lichtverhältnisse, Sauberkeit des Objekts, Eigenstruktur der Objektoberfläche und ähnliches ignoriert, welche die erreichten maximalen Konfidenzwerte konstant abschwächt, kann ein fixer minimaler Schwellenwert die erfolgreiche Extrahierung der Rotations- und Skalierungsparameter verhindern. Ein Schwellenwert kann daher erfindungsgemäß auch adaptiv gewählt werden, indem für eine konstante Zahl von Rotationen und Skalierungen (Verfahrensschritt 185) eine Zweifach-Vorlage entsprechend Fig. 18 erstellt (Verfahrensschritt 182) und korreliert (Verfahrensschritt 183) wird. Anschließend wird ein maximaler Konfidenzwert aller Korrelationsergebnisse gesucht (Verfahrensschritt 184). Die dazu passenden Parameter werden dann als sehr nahe den tatsächlichen Parameter angesehen und im weiteren Verlauf verwendet.

Alternativ kann nach einer so erfolgten groben Bestimmung der Parameter in gleicher Weise eine weitere Verbesserung der Parameterschätzung erreicht werden, wenn in einer lokalen Umgebung des Parameterraums nahe der erfolgten Schätzung variiert wird, um genauere Werte für die approximierten Parameter zu erhalten.

Vorgegebene Parameter müssen so gewählt werden, dass aus den Korrelationsergebnissen der Zweifach-Vorlage die tatsächlichen Parameter genügend gut geschätzt werden können, um bei der späteren Korrelation mit nur einer Symbolvorlage zum Lesen der Symbolmatrix, die mit den hier gefundenen Parametern erstellt wird, nutzbringende Konfidenzwerte zu erhalten. Insbesondere sollte es mit den gewählten Parametrisierungsvorgaben möglich sein, den in Verfahrensschritt 184 gesetzten Schwellenwert zu überschreiten. Sie sollten also zum einen nicht zu weit von allen tatsächlich möglichen Kombinationen von Parametern entfernt sein, zum anderen aber auch nicht zu umfangreich in ihrer Anzahl, um Rechenzeit zu sparen.

Gemäß einer in Praxisstudien erprobten Ausgestaltung können etwa Rotationsparameter im Abstand von 30° versucht werden, also 0°, 30°, 60°, 90°, 120°, 150°, 180°, 210°, 240°, 270°, 300°, 330°, sodass dies bereits bis zu zwölf Ausführungen der Positionen Verfahrensschritte 182 bis 185 bei fixem Skalierungsparameter bedeutet. Der Skalierungsparameter ist jedoch zusätzlich zu variieren. Hier können typische Seitenlängen von 6, 8, 10, 12, 14, 16 Pixel eines Symbols angenommen werden. Insgesamt werden alle Kombinationen der Parameter dann in 12*6 = 72 Durchläufen erfasst. Dies kann mit modernen Rechnern so schnell durchgeführt werden, dass keine Verzögerungen im Verfahrensablauf zu befürchten sind.

Die Anzahl der Versuche kann verringert werden, indem die zum Zentrum eines Symbols annähernd gleichbleibende Anordnung der schwarzen und weißen Flächen berücksichtigt wird. So kann eine Symbolvorlage mit kleinerer Skalierung als der tatsächlich im Grauwertbild vorhandenen, ausreichende Konfidenzwerte bei zusätzlich angenäherter Rotation nach einer Korrelation liefern. Skalierungsfaktoren können also auch unterapproximiert werden (Fig. 21), weshalb Skalierungen von 6, 10, 14 Pixel Seitenlänge genügen, um zu genügend genauen Abschätzungen insbesondere der Rotationsparameter zu gelangen, die anschließend in ihrer lokalen Umgebung weiter verfeinert werden können. Um den Rechenaufwand zu verringern bietet sich ein solches adaptives Verfahren an.

Steht zusätzliches Wissen zur Verfügung können beispielsweise auch Landmarken der Bauteile oder der mit im Bild erfassten Umgebung verwendet werden, um die Rotationsparameter zu initialisieren (Verfahrensschritte 182 und 185). Andere Art von Wissen könnte etwa auch bedeuten, dass bekannt ist, ob nachfolgende Bauteile ähnliche Rotations- und Skalierungsparameter aufweisen werden, sodass die zuletzt gefundenen Parameter als Initialisierung (Verfahrensschritt 182) einer darauffolgenden Erfassung verwendet werden können.

Eine weitere Möglichkeit zur Reduzierung der Zahl der anzutestenden Rotationsparameter bietet sich durch Bildvorverarbeitung mittels der Hough-Transformation oder Radon-Transformation an, die vor dem Verfahrensschritt 182 auszuführen ist. Die Symbolmatrix besteht hauptsächlich aus unterbrochenen geraden, parallelen und orthogonalen Liniensegmenten, wie sie in den Fig. 22 und 23 dargestellt sind. Dazu kann eine Sobel-Filtermaske verwendet werden, die ein Kantendetektionsfilter ist, der in der Bildverarbeitung häufig angewendet wird und dort mithilfe der Faltung als Sobel-Algorithmus eingesetzt wird. Dieser Filter berechnet die erste Ableitung der Bildpunkt-Helligkeitswerte, wobei gleichzeitig orthogonal zur Ableitungsrichtung geglättet wird. Wird die Sobel-Filtermaske mit anschließender Hough-Transformation zur Erkennung von Geraden auf die wie zuvor beschrieben festgelegten Bildregionen angewendet, kann jeweils die Steigung der Hauptrichtung aller Grauwertkanten innerhalb eines Bereiches erfasst werden. Dies ist in Fig. 23 illustriert. Zur Erkennung von geometrischen Objekten erzeugt die Hough-Transformation einen Dualraum, in den für jeden Punkt im Bild, der auf eine Kante liegt, alle möglichen Parameter der zu findenden Figur im Dualraum eingetragen werden. Jeder Punkt im Dualraum entspricht damit einem geometrischen Objekt im Bildraum. Bei einer Grade kann das z.B. die Steigung und der γ-Achsenabschnitt sein. Danach wird der Dualraum auf Häufungen seiner Punkteinträge ausgewertet, die dann der gesuchten Figur entsprechen.

Werden mehrere Bildregionen voneinander getrennt erfasst, so können resultierende Steigungswerte entweder parallel oder orthogonal zueinander verlaufen, sofern ein XY-Sobel-Filter verwendet wird. Die so erhaltene Steigungsinformation kann nun zur Initialisierung in Verfahrensschritt 182 und Verfahrensschritt 185 verwendet werden. Rotationen müssen jetzt nur noch in 90°-Schritten relativ zur gefundenen Steigung angetestet werden, wie aus Fig. 20 ersichtlich. Sind die auszuwertenden Bilddaten nicht zu sehr verrauscht, kann auch der Abstand paralleler Linien der Hough-Transformation zur Initialisierung der Skalierungsparameter verwendet werden. Nachdem nun die Rotations- und Skalierungsparameter der Symbole extrahiert wurden, kann die entsprechende Symbolvorlage erstellt und der gesamte Bildbereich des Symbolcodes korreliert werden.

Zunächst wird ein Symbol nach den durch Antesten gewonnenen Rotations- und Skalierungsparametern im Bitmapspeicher gezeichnet (Verfahrensschritt 101 gemäß Fig. 16, Verfahrensschritt 122 gemäß Fig. 24 und Verfahrensschritt 186 gemäß Fig. 37). Alternativ kann auch das Originalbild rotiert werden, sodass die Symbolvorlage mit fixen Rotationsparametern gezeichnet werden kann und nur dessen Skalierung berücksichtigt werden muss. Zur automatischen Erstellung wird ein Symbol des Symbolcodes logisch in ein 3x3-Feld quadratischer, gleich großer Zellen aufgeteilt, wobei horizontal wie vertikal 1/3 schwarz und 2/3 der Fläche weiß gezeichnet wird (bzw. in umgekehrter Aufteilung beim Eins-Wort-Symbol). Dies ist in Fig. 17 veranschaulicht. Dieses erzeugte Bitmap hat ein Histogramm mit Werten 0 (schwarz) und 255 (weiß). Es wird angenommen, dass dies einem unverrauschten Original der zu findenden Symbole im aufgenommenen Bild entspricht. Dabei sind nicht die exakten Grauwerte der Symbolvorlage zum Korrelieren wichtig, sondern nur die Tatsache, dass zwei homogene Flächen von jeweils verschiedener Helligkeit in der durch das Symbol bestimmten Kontur und Verteilung im zu korrelierenden Bildausschnitt existieren. Es ist daher völlig gleichgültig, ob nun mit einer Null-Wort-Symbolvorlage oder mit einer Eins-Wort-Symbolvorlage korreliert wird. Im folgenden müssen dann jedoch die Vorzeichen der Konfidenzwerte entsprechend vertauscht werden, um die gleiche Wortmatrix zu erhalten.

Die Vorlage aus dem Bitmapspeicher wird nun mit dem auszuwertenden Gesamtbild oder einem zuvor festgesetzten Bildausschnitt in einem normalisierten Korrelationsverfahren korreliert (Verfahrensschritt 101 gemäß Fig. 16 bzw. Verfahrensschritt 123 gemäß Fig. 24). Das Ergebnis der Korrelation ist ein in dem Verfahrensschritt 123 erstelltes, neues Bild mit gleicher Abmessung wie das zu korrelierende Originalbild abzüglich der Breite bzw. Höhe eines Symbols. Die Pixel des Korrelationsbildes enthalten jeweils das Korrelationsergebnis an der korrespondierenden Position des Originalbildes, wie für die beiden komplementären Symbolvorlagen in den Fig. 25 and 26 gezeigt. Bei der Korrelation wird die Grauwertverteilung der Symbolvorlage mit seinem Mittelpunkt über jeden Pixel des auszuwertenden Bildes gelegt. Für diesen Pixel wird ein Wert zwischen 1,0 und -1,0 bestimmt, welcher ein Maß dafür ist, ob dieser Pixel ein Mittelpunkt der Symbolvorlage ist.

Dazu werden zunächst die Grauwerte des auszuwertenden Bildes, über denen die Symbolvorlage liegt, normalisiert, sodass im Idealfall nur zwei Werte zur Darstellung der Helligkeitsverteilung benötigt werden (wie bei der Erstellung der Vorlage). Dann wird der euklidische Abstand zwischen einem Pixel der Vorlage und dessen direkt darunterliegenden, korrespondierenden und normalisierten Pixel des auszuwertenden Bildes berechnet. Die Summe aller euklidischen Abstände von Grauwerten im Einzugsbereich der Symbolvorlage bildet dann den Wert des Pixels im Korrelationsbild, der auf einen Bereich von 1,0 bis -1,0 skaliert worden ist. Ein Wert von -1,0 für einen Pixel bedeutet, dass diese Stelle im Originalbild auf gar keinen Fall das Zentrum eines gesuchten Symbols ist. Da es aber genau die zur Symbolvorlage komplementäre Helligkeits-Charakteristik aufweist, muss es sich also folglich um das Zentrum eines Eins-Wort-Symbols handeln, wenn mit einem Null-Wort-Symbol korreliert wurde. Hat ein Pixel im Korrelationsbild den Wert 1.0, so handelt es sich ganz sicher um den Mittelpunkt eines Null-Wort-Symbols. Werte zwischen 1.0 und 0.0 sowie -1.0 und 0.0 können als Grad der Ähnlichkeit eines Bildausschnitts zu einem der beiden Symbol-Typen interpretiert werden.

Daher werden diese Werte "Konfidenzwerte" genannt. Beispielsweise bedeutet ein Wert 0.82, dass es sich bei einem Pixel mit 82-prozentiger Wahrscheinlichkeit um den Mittelpunkt eines Null-Wort-Symbols handelt. Ein Pixel mit Wert von -0.54 wird entsprechend mit 54-prozentiger Wahrscheinlichkeit dem Mittelpunkt eines Eins-Wort-Symbols zugeordnet. Aus der gewählten Form der Symbole ergibt sich, dass um den Mittelpunkt eines Symbols sich Werte sehr stark in der Nähe von im Idealfall Werten von 1.0 oder -1.0 befinden, sodass eine Lokalisierung aller Symbol-Mittelpunkte erfolgen kann.

Das mittels des zuvor erläuterten Template-Matching erstellte Korrelationsbild (Verfahrensschritt 123 gemäß Fig. 24) enthält eine Grauwertverteilung mit Werten von 1.0 bis -1.0, die in den Fig. 25 und 26 separiert für die beiden Bereiche 1.0 bis 0.0 und -1.0 bis 0.0 dargestellt sind. Daraus sollen nun die Pixel-Koordinaten der Mittelpunkte aller Symbole der Symbolmatrix extrahiert werden (Verfahrensschritt 102 gemäß Fig. 16, Verfahrensschritt 152 gemäß Fig. 31 und Verfahrensschritt 187 gemäß Fig. 37). Dies bedeutet, dass Maxima innerhalb lokaler Bereiche gefunden werden müssen, die der Umgrenzung einer Symbolvorlage entsprechen.

Dazu wird zunächst ein neuer Bildspeicher erzeugt, welcher die betragsmäßigen Werte der Pixel des Korrelationsbildes enthält, sodass der Wertebereich zwischen 1.0 und 0.0 liegt (Verfahrensschritt 124). Ein solches Bild ist in Fig. 27 dargestellt und zeigt idealer Weise in jeder Datenzelle des Symbolcodes ein dem Mittelpunkt des Symbols entsprechendes Maximum.

Gemäß dieser Erfindung wird ein adaptiver Ansatz zur Extraktion lokaler Maxima verfolgt, der die Probleme einer globalen Schwellenwertbildung behebt. Dazu wird auf das in Fig. 27 wiedergegebene Betragsbild der Korrelationswerte (Verfahrensschritt 124) ein Dilatations-Filter angewandt (Verfahrensschritt 125). Anschaulich bewirkt der Dilatations-Filter, dass an jedem Bildpunkt eines ersten Objekts des komplette Bild des zweiten Objekts eingefügt wird.

Im konkreten Beispiel arbeitet der morphologische Operator auf einem Grauwertbild. Das Dilatations-Filter hat als Strukturelement ein Rechteck von gleicher Abmessung und gleicher äußerer Kontur wie die zur Korrelation verwendete Symbolvorlage, da angenommen wird, dass das genau die Abmessungen der tatsächlich im erfassten Originalbild befindlichen Symbole sind. Wendet man diesen Dilatations-Filter auf ein Grauwertbild wie das Betragsbild der Korrelationswerte gemäß Fig. 27 an, so findet eine Maximalbildung zwischen dem zwischengespeicherten Grauwert des Dilatations-Filters und den jeweiligen Grauwerten der zum Strukturelement korrespondierenden darunterliegenden Pixel des Originalbildes statt. Der Maximale Grauwert zweier solcher Pixel wird dann in das Originalbild an gleicher Stelle geschrieben. Der zwischengespeicherte Grauwert des Strukturelements ist als derjenige Grauwert des Pixels im Originalbild definiert, der sich gerade unter dem Mittelpunkt des Dilatations-Filters befindet, der mit seinem Zentrum über jedes Pixel des Originalbildes gelegt wird.

Es wird also eine Kopie des Betragsbildes erzeugt, welche als Dilatationsbild bezeichnet wird (Verfahrensschritt 125). Anschließend wird das Dilatations-Filter mit seinem Mittelpunkt über jeden Pixel dieser Kopie des Betragsbildes gelegt und innerhalb seines Einzugsbereiches die Maximalbildung von Pixelwerten durchgeführt. So erhält man als Ergebnis ein Grauwertbild, dessen Grauwert in Fig. 28 als Linien unterschiedlicher Dichte wiedergegeben ist. In jedem Bereich, an dem sich im eingescannten Originalbild (Verfahrensschritt 120) sich ein Symbol befindet, ist nun ein homogenes ausgefülltes Rechteck mit dem Grauwert dargestellt, welcher dem Konfidenzwert des geschätzten Symbolmittelpunkts entspricht, der in seiner durch die Abmessungen der Symbolvorlage bestimmten lokalen Umgebung maximal ist und adaptiv durch die Maximalbildung des Dilatations-Filters extrahiert wurde (Verfahrensschritt 125).

Nun können die geschätzten Symbolmittelpunkte lokalisiert werden, indem diejenigen Pixel markiert werden, die im Betragsbild und im Dilatationsbild den gleichen Grauwert aufweisen (Verfahrensschritt 126). Pixel mit dieser Eigenschaft können als lokale Maxima betrachtet werden, die sehr wahrscheinlich tatsächlichen Symbolmittelpunkten zuzuordnen sind. Diese können in ein Mittelpunktsbild, wie es beispielhaft in den Fig. 29 oder 30 wiedergegeben ist, mit den gleichen Abmessungen wie das erfasste Originalbild kopiert werden, wobei Mittelpunkte beispielsweise den Wert 0 (schwarz) und alle anderen Pixel den Wert 255 (weiß) zugewiesen bekommen (Verfahrensschritt 126 ).

In der Praxis ist allerdings nicht jeder so extrahierte Pixel ist zwangsweise ein tatsächlicher Symbolmittelpunkt. Ist ein grafisches Symbol eines Symbols derart stark beschädigt, dass dessen tatsächlicher Mittelpunkt im Betragsbild einen geringen Konfidenzwert hat, so ist es möglich, dass Konfidenzwerte innerhalb benachbarter Symbolzellen an Positionen, die nicht deren tatsächlicher Mittelpunkt, sondern weiter davon entfernt sind, lokal einen höheren Konfidenzwert aufweisen als der tatsächlich dieser Zelle zuzuordnende Symbolmittelpunkt. Auch die Umgebung der Symbolmatrix, die Objektoberfläche darstellt und nicht mehr zum tatsächlichen Symbolcode gehört, weist an vielen Stellen lokale Maxima auf, die im Mittelpunktsbild eingetragen werden. Diese Maxima sind durch Strukturen der Objektoberfläche, die nicht zur Symbolmatrix gehören, verursacht und folgen keinem interpretierbaren Muster.

Das zuvor beschriebene erfindungsgemäße Verfahren hat den Vorteil, keine Schwellenwerte als Parametrisierung zu verwenden. Es passt sich lokal in einem Bereich an die jedem Pixel des Betragsbildes gegebenen Konfidenzwerte an. So werden durch lokale Reflexion, Verschmutzung, Auftragungsfehler verursachte geringere Erkennungssicherheiten berücksichtigt. Ein Schwellenwert würde bei diesen Ungleichmäßigkeiten versagen und keine Mittelpunkte extrahieren, wenn dieser zu hoch gewählt ist. Das Verfahren muss nicht durch einen konstanten Parameter initialisiert werden, dessen Ermittlung von einem menschlichen Experten mit hohem Kalibrierungsaufwand durchgeführt werden müsste.

Nun müssen die extrahierten Symbolmittelpunkte erwandert und Worte von der grafischen Anordnung der Symbolmatrix in die korrespondierende Wortmatrix geschrieben werden. Nachdem die wahrscheinlichen Mittelpunkte extrahiert worden sind (Verfahrensschritt 102 gemäß Fig. 16), können diese erwandert (Verfahrensschritt 103) werden.

Das Erwandern birgt die Schwierigkeit, dass aus Verfahrensschritt 102 zwar die Positionen von Mittelpunkten bekannt sind, aber zum einen die erhaltenen Koordinaten verrauscht und zum anderen durch perspektivische Verzerrung im Bild die Mittelpunkte von Zeilen und Spalten nicht streng orthogonal zueinander angeordnet sind bzw. sein müssen, d.h. die Zeilen und Spalten nicht parallel zu ihren jeweiligen Koordinatenachsen des zu analysierenden Bildausschnitts ausgerichtet sind. Das Rauschen resultiert daher, dass durch das Verfahren zur Extraktion lokaler Maxima in den Verfahrenschritten 125 und 126 (vg. Fig. 24) auch solche Maxima als Mittelpunkte extrahiert worden sind, die durch die Struktur der Objektoberfläche hervorgerufen sind und somit keine Mittelpunkte von grafischen Symbolen darstellen. Diese falschen Mittelpunkte sollen beim Erwandern ignoriert werden, sodass diese später nicht in die Wortmatrix aufgenommen werden.

Sind innerhalb der Symbolmatrix Teilflächen durch Verschmutzungen, Kratzer, Reflexionen oder ähnlichem so stark beschädigt, wie in Fig. 36 dargestellt, dass die Struktur der Beschädigung größeren Einfluss auf das Korrelationsfilter haben als die zerstörten grafischen Symbole, so sind auch Mittelpunkte innerhalb des zu erwandernden Symbolcodes aus den zuvor beschrieben Gründen verrauscht. Durch Beschädigungen einzelner Symbole kann deren extrahierter Mittelpunkt außerdem weit vom tatsächlichen Symbolmittelpunkt entfernt liegen. Auch ist es so möglich, dass an einzelnen Symbolen oder in flächigen Bereichen keine Mittelpunkte extrahiert worden sind und somit die Evidenz für ein Symbol an dieser Stelle im Mittelpunktsbild gänzlich fehlt.

Es ist daher wünschenswert, dass ein Algorithmus zum Erwandern der Mittelpunkte die verschiedenen Arten von Rauschen unterscheiden und entweder einen Mittelpunkt korrigieren oder stattdessen diesen ignorieren und entstandene Lücken wegen fehlender Mittelpunkte füllen kann. Zudem sollte er sich adaptiv der durch Verzerrung verursachten Änderungen der lokalen Steigung der Symbolzeile oder -spalte anpassen, aber zugleich entgegengesetzt durch Mittelpunktsrauschen verursachte Abweichungen von der erwarteten Pixelposition korrigieren.

Es werden nachfolgend zwei erfindungsgemäße Verfahren mit solchen Fähigkeiten beschrieben, welche sich in ihrem Laufzeitverhalten unterscheiden. Das zunächst beschriebene, erste Verfahren funktioniert nach dem "Zick-Zack"-Prinzip und schätzt ausgehend von einem Startpunkt einen benachbarten Mittelpunkt, dessen benachbarter Mittelpunkt wieder geschätzt und anschließend verfeinert wird, usw.. Das Verfahren kann somit in die Kategorie "Region-Growing" eingeordnet werden, wie es in Fig. 32 schematisch erläutert ist. Es ist einfach und schnell, wenn die Mittelpunktsschätzungen gut und wenig verrauscht sind. Besonders bei dichten Symbolcodes mit Seitenlängen der Symbole von weniger als acht Pixel ist dieses Verfahren aufgrund der rechenintensiven Behandlung von Ausreißern jedoch meist ineffizient.

Alternativ wird ein zweites Verfahren gemäß der Erfindung beschrieben, das zu jedem Mittelpunkt zunächst eine Vier-Nachbarschaft erwandert. Auch hier werden erwartete Mittelpunktspositionen geschätzt, aber nur lokal verfeinert. Diese Nachbarschaften werden zu jedem Mittelpunkt gesondert erstellt. Anschließend werden benachbarte Vier-Nachbarschaften zusammengefasst und so die gesamte Symbolmatrix rekonstruiert. Dieses Verfahren kann somit in die Kategorie "Region-Merging" eingeordnet werden, wie es in Fig. 39 schematisch erläutert ist. Ausreißer werden dadurch behandelt, dass jeder Mittelpunkt nur ein einziges Mal referenziert werden darf und zudem jeder zur Symbolmatrix gehörige Mittelpunkt eine vollständige Vier-Nachbarschaft aufweisen muss. Dadurch werden Ausreißer aussortiert, für die wenigstens eine der geforderten Eigenschaften nicht gilt.

Beide Verfahren nehmen eine gitterähnliche Struktur der Mittelpunktsverteilung an, sodass zu einer Symbolzelle innerhalb der Symbolmatrix jeweils ein rechter und linker sowie ein oberer und unterer Nachbar existieren, wie in den Fig. 12 und 14 für die nicht am Rand liegenden Datenzellen gezeigt. Die gedachten Verbindungslinien vom rechten zum linken und vom oberen zum unteren Nachbarn werden ideal als orthogonal zueinander angenommen, wobei sie sich im Zentrum der aktuellen Symbolzelle schneiden sollten.

Nachdem die wahrscheinlichen Symbolzentren in Verfahrensschritt 152 gemäß Fig. 31 in ein Mittelpunktsbild extrahiert wurden, wird mit dem Symbolzentrum mit dem maximalem Konfidenzwert begonnen (Verfahrensschritt 153), da anzunehmen ist, dass dies sicher einen tatsächlichen Symbolmittelpunkt darstellt. Der Konfidenzwert wird dabei aus dem Betragsbild K2 (Verfahrensschritt 124 gemäß Fig. 24) an der korrespondierenden Pixelposition (Verfahrensschritt 154 gemäß Fig. 31) gelesen. Da aus den Parametern der Symbolvorlage (Verfahrensschritt 100 gemäß Fig. 16) die Skalierungsinformationen bekannt sind, kann die Pixel-Koordinate (Verfahrensschritt 154 gemäß Fig. 31) dieses Mittelpunkts quantisiert bzw. gemerkt werden. Damit ist es möglich, der Wortmatrix einen logischen Zeilen- und Spaltenindex zuzuweisen. An diese Position wird dann der Wert und dessen Konfidenz geschrieben (Verfahrensschritt 156). Diese beiden Eigenschaften sind in dem Wert im Korrelationsbild K (Verfahrensschritt 123 gemäß Fig. 24) an gleicher Pixelposition enthalten. Nun wird ein, beispielsweise der rechte, Nachbar dieses Mittelpunkts im Mittelpunktsbild gesucht (Verfahrensschritt 156 gemäß Fig. 31). Dabei wird angenommen, dass in einer lokalen Nachbarschaft annähernd gilt, dass Zeilen- und Spalten parallel zu den Koordinatenachsen des Bildausschnitts verlaufen und dass Zeilen- und Spalten orthogonal zueinander angeordnet sind.

Entweder ist dazu der aktuelle Bildausschnitt entsprechend rotiert (Verfahrensschritt 186 gemäß Fig. 37), sodass diese Annahme zulässig ist, oder ein zusätzlicher Steigungsparameter wird bei der Berechnung der Mittelpunkte der Symbolnachbarn verwendet, der sich ebenfalls aus den Parametern der Symbolvorlage ableitet (Verfahrensschritt 182). Die Pixelkoordinate des Nachbarn wird durch Inkrementieren des aktuellen Symbolmittelpunkts (Verfahrensschritt 154 gemäß Fig.31) geschätzt (Verfahrensschritt 127 gemäß Fig. 24).

Nach der Schätzung des Mittelpunkts des Symbol-Nachbarn wird der Mittelpunkt in einer lokalen Umgebung dieser Schätzung gesucht (Verfahrensschritt 133). Dies ist schematisch in Fig. 33 dargestellt. Zunächst wird getestet, ob sich direkt an den geschätzten Koordinaten ein wahrscheinlicher Mittelpunkt befindet. Wenn nicht, wird die Ein-Pixel-Umgebung der Schätzung durchsucht (Fig. 33, Abbildung a), welche den möglichen Quantisierungsfehler ausmacht. Wird so ein extrahierter Mittelpunkt im Mittelpunktsbild gefunden, so wird dies gesondert zur späteren Erkennung der Umgrenzung der Symbolmatrix vermerkt. Ist noch kein Mittelpunkt gefunden, so wird in einer weiteren lokalen Umgebung der vermuteten Zelle nach dem Mittelpunkt gesucht (Fig. 33, Abbildung b). Dieser Bereich beträgt typischerweise 50 Prozent der Symbolvorlage. Wird darin ein Mittelpunkt gefunden, so wird dieser markiert. Werden mehrere Mittelpunkte gefunden, so wird der Mittelpunkt mit maximalem Konfidenzwert markiert.

Wurde noch immer kein Mittelpunkt gefunden, so wird dieser an der ursprünglich geschätzten Position erzwungen oder es kann optional durch das im folgenden beschriebenen erfindungsgemäße Verfahren festgestellt werden, ob genügend Evidenz besteht, dass dort der fehlende Mittelpunkt eines Symbols richtigerweise vermutet wird. Dies kann behauptet werden, wenn in der lokalen Umgebung des vermuteten Mittelpunkts eine homogene Grauwertverteilung vorliegt. Ist das nicht der Fall, kann versucht werden durch weiteres Verschieben der geschätzten Position einen solchen homogenen Bereich zu finden. Wenn auch das nicht erreichbar ist, wird endgültig die zuerst geschätzte Position erzwungen.

Es kann also ein Rechteck aufgespannt werden mit der geschätzten Koordinate als Mittelpunkt (Verfahrensschritt 130 gemäß Fig. 24) und in den Abmessungen, die aus der Symbolvorlage bekannt sind (Verfahrensschritt 129).

Dieses Rechteck wird üblicherweise etwas kleiner gewählt als die Abmessungen der Symbolvorlage, beispielsweise 25 Prozent oder mindestens zwei Pixel weniger Ausdehnung, um Rauschen durch etwas zu nahe beieinander liegende Symbolzentren zu berücksichtigen. Es kann nun getestet werden (Verfahrensschritt 131), ob alle vier Eckpunkte dieses Rechtecks im Dilatationsbild D (Verfahrensschritt 125) denselben Konfidenz- oder Helligkeitswert aufweisen. Ist das der Fall, so ist anzunehmen, dass der geschätzte Symbolmittelpunkt etwa im Zentrum des Nachbarsymbols liegt und kann als ausreichend richtig betrachtet werden. Sollte nicht an jeder der vier Ecken derselbe Konfidenzwert anliegen, so kann das gebildete Rechteck weiter nach rechts, oben oder unten verschoben werden, um diese Bedingung nach Möglichkeit zu erreichen (Verfahrensschritt 132). Die Weite der Verschiebungen ist dabei durch die Abmessungen der Symbolvorlage begrenzt, sodass nicht die benachbarte Symbol-Zelle übersprungen werden kann. Durch das Verschieben eines solchen Rechtecks kann die erste Schätzung korrigiert werden, wenn durch perspektivische Verzerrung die obige Annahme, dass Symbol-Zeilen der Symbolmatrix parallel zur Koordinatenachse verlaufen, nicht erfüllt ist.

Dieses erfindungsgemäße Verfahren ist robuster als die einfache Pixelsuche nach dem extrahierten Mittelpunkt in einer lokalen Umgebung der Schätzung. Es wird so verhindert, dass ein verrauschter Mittelpunkt als Nachbar gesetzt wird, der möglicherweise in der Nähe einer Grenzlinie zweier Symbolzellen liegt. Eine Markierung eines solchen Nachbarn erhöht die Gefahr beim weiteren Erwandern in eine obere oder untere Zeile der Symbolmatrix hereinzulaufen, sodass dies zu falschen Zuordnungen der logischen Zeilen der Wortmatrix führt. Kann die geforderte Bedingung auch so nicht erreicht werden, lässt sich die vorherige Schätzung nicht verbessern.

Die Verfahrensschritte 129 bis 132 sind optional und bei stark verrauschten Mittelpunktsbildern zur robusteren Erwanderung anwendbar.

Die Koordinaten des neuen Mittelpunkts werden aktuell gesetzt (Verfahrensschritt 142 gemäß Fig. 24, Verfahrensschritt 157 gemäß Fig. 31), der Positionszeiger der Wortmatrix inkrementiert und das Wort und der Konfidenzwert werden in die Wortmatrix geschrieben (Verfahrensschritt 143 gemäß Fig. 24, Verfahrensschritt 158 gemäß Fig. 31).

So wird die Zeile (im Beispiel zunächst) nach rechts abgelaufen, solange die Pixelkoordinaten nicht außerhalb des Bildes sind (Verfahrensschritt 159). Sobald die Pixelkoordinaten außerhalb des Bildes liegen, wird der Mittelpunktszeiger auf den Startpunkt dieser Zeile zurückgesetzt (Verfahrensschritt 160). Anschließend wird diese Zeile nun nach demselben Prinzip nach links abgelaufen (Verfahrensschritte 161 bis 164). Am Ende ist die erste Zeile vollständig erwandert und es liegen die Werte zu jeder Symbol- bzw. Datenzelle dieser logischen Zeile in der Wortmatrix vor.

Nun muss in eine obere oder untere Zeile gesprungen werden, die dann ebenfalls wie bereits beschrieben eingelesen wird. Um dabei die Gefahr zu minimieren die Synchronisation zu verlieren, wird von demjenigen Symbolmittelpunkt der aktuellen Zeile mit höchster Konfidenz (Verfahrensschritt 165) durch Inkrementieren seines Positionszeigers die neue logische Zeile betreten. Es ist zu erwarten, dass in der Umgebung eines solchen Symbols, nur geringe Störungen auftreten und keine zerstörten Bereiche ohne oder mit stark verrauschter Mittelpunktsinformation anzutreffen sind. Auf diese Weise werden alle zusammenhängenden Zeilen der Symbolmatrix erwandert, wobei beispielhaft zunächst alle unterhalb (Verfahrensschritt 168) des Symbols mit maximaler Konfidenz liegende Zeilen abgearbeitet werden und anschließend diejenigen, die oberhalb (Verfahrensschritt 167) dieses Symbols angeordnet sind, jeweils bis die aktuelle Pixelposition aus dem Bild fällt.

Zur robusten Synchronisation der Zeilen und zur Nachbarschätzung kann eine zweite unabhängige Schätzung des Mittelpunkts erfolgen, indem die Position des Nachbarsymbols nicht nur vom vorhergehenden Symbol der gleichen logischen Zeile aus, sondern zusätzlich von einer bereits vollständig erwanderten logisch über (Verfahrensschritte 143, 142 gemäß Fig. 24) oder unter der aktuellen Zeile liegenden Symbolposition. Ideal führen beide Schätzungen zum selben Ergebnis. Wenn nicht, muss eines der Ergebnisse ausgewählt werden (Verfahrensschritt 141).

Möglicherweise ist einer der beiden Versuche fehlgeschlagen, das aufgespannte Rechteck (Verfahrensschritt 129 bzw. 136) so zu positionieren (Verfahrensschritte 132 bzw. 139), dass die Forderung aus den Verfahrensschritten 131 bzw. 138 erfüllt ist, wonach alle Eckpunkte innerhalb eines Symbols liegen sollen. Dann wird derjenige Zentrumspixel ausgewählt, der unter der Bedingung (Verfahrensschritte 131 bzw. 138) gefunden worden ist bzw. diese Bedingung erfüllt. Als weiteres Kriterium für die Schätzung eines gültigen Mittelpunktes kann gelten, dass einer der beiden gefundenen Zentrumspixel näher an der erwarteten Steigungsgeraden der Zeile bzw. Spalte liegt. Dazu kann während der Erwanderung beispielsweise zu jedem markierten Zentrumspixel (Verfahrensschritt 142) die Steigung in diesem Punkt relativ zu seinen bereits erlaufenen Nachbarsymbolen gemerkt werden. In Verfahrensschritt 141 kann dann aus einer Anzahl von zwei oder drei vorherigen Steigungswerten ein Mittelwert gebildet werden. Dies kann in Zeilen- und Spaltenrichtung erfolgen. Es wird dann in Verfahrensschritt 142 derjenige Zentrumspixel markiert, der sich am nächsten zu den beiden Steigungsgeraden befindet.

In Verfahrensschritt 141 können die Ergebnisse der bisherigen Erwanderung der aktuellen logischen Symbolzeile erfindungsgemäß auch nachträglich verifiziert werden. Denn wenn beispielsweise in Spaltenrichtung (Verfahrensschritte 129 bis 133) ein Zentrumspixel gefunden wird, welches die Forderung aus Verfahrensschritt 131 erfüllt, aber in Zeilenrichtung (Verfahrensschritte 134 bis 140) ein Zentrumspixel gefunden wird, welches so weit von dem aktuell markierten Symbolmittelpunkt entfernt ist, dass es zwei Schrittweiten darstellt, ist möglich, dass aufgrund von Mittelpunktsrauschen zwei Mittelpunkte innerhalb derselben logischen Symbolzelle markiert worden sind. Die letzte Markierung der aktuellen Zeile kann somit wieder rückgängig gemacht und korrigiert werden. Der bereits erfolge Eintrag (Verfahrensschritt 158 bzw. 163 gemäß Fig. 31) in der Wortmatrix wird dann ebenfalls entsprechend korrigiert.

Nachdem nun der Bildausschnitt vollständig erwandert wurde (Verfahrensschritt 169 gemäß Fig. 1), kann die Wortmatrix ausgegeben werden, welche die Informationen über die räumliche Verteilung der Worte und deren jeweilige Konfidenz enthält.

Eine so erstellte Wortmatrix enthält möglicherweise Werte an logischen Positionen, an denen tatsächlich keine Symbole in der Symbolmatrix vorhanden sind. Dies kommt daher, dass zur Erhaltung der Synchronisation erfindungsgemäß teilweise Zentrumspixel erzwungen werden. Diese müssen eventuell nachträglich herausgefiltert werden. Dazu kann die Wortmatrix zeilen- und spaltenweise abgelaufen werden, und es wird für jede Zeile bzw. Spalte gezählt wie viele der vorhandenen Worte aus Symbolzellen gelesen wurden, deren Mittelpunkt beim Erwandern erzwungen worden ist. Dies bedeutet, dass der Mittelpunkt in dem Mittelpunktsbild nicht vorhanden war. Liegt die festgestellte Zahl über einem Schwellenwert, beispielsweise 60 Prozent der Gesamtzahl der logischen Symbole in einer Zeile bzw. Spalte, so kann diese Zeile bzw. Spalte vollständig aus der Wortmatrix entfernt oder als nicht gelesen markiert werden, um Fehlinformationen bei der Rekonstruktion zu vermeiden. Eine mit großer Wahrscheinlichkeit weitestgehend falsche Rekonstruktion sollte vermieden werden, da es durch eine erfindungsgemäß eingebaute Redundanz häufig möglich ist, die Informationen auch bei dem Fehlen einer rekonstruierten Zeile oder Spalte zu erhalten.

In Fig. 38 ist ein alternatives Verfahren zum Erwandern wahrscheinlicher Symbolmittelpunkte beschrieben, das insbesondere bei starkem Mittelpunktrauschen angewendet werden kann. Dieses Verfahren erwandert zu jedem Zentrumspixel im Mittelpunktsbild seine Vier-Nachbarschaft, d.h. die Datenzellen rechts und links sowie oben und unten bzw. im Norden, Süden, Westen, Osten, zu der Datenzelle mit dem Zentrumspixel. Anschließend werden diese Vier-Nachbarschaften zu einem Bereich oder zu mehreren zusammenhängenden Bereichen zusammengefügt werden, die dann die Symbolmatrix und deren korrespondierende Wortmatrix angeben.

Nachdem das Mittelpunktsbild (Verfahrensschritt 126 gemäß Fig. 24) erstellt worden ist, werden die darin extrahierten Mittelpunkte als Symbolzentren erfassen (Verfahrensschritt 202 gemäß Fig. 38) und nach absteigender Konfidenz sortiert (Verfahrensschritt 203). Die zu einem Mittelpunkt korrespondierenden Konfidenzwerte werden aus dem Betragsbild K2 (Verfahrensschritt 124 gemäß Fig. 24) erhalten. In einem Quick-Sort-Verfahren können dazu beispielweise vom Kopf der Liste an die Listenelemente iteriert werden.

Zum Erwandern wird ein Speicher ähnlich einer Matrix in denselben Dimensionen des Mittelpunktsbildes angelegt. Der Speicher enthält als Elemente einer Datenstruktur, die ein Symbol so repräsentiert, dass in ihm die vier Nachbarn sowie die vier Symbole, deren Nachbar der Mittelpunkt selbst ist, als Symbolzeiger abgelegt werden können. Weitere Eigenschaften der Datenstruktur sind die Pixelkoordinaten des Zentrumspixel des Symbols, das zugeordnete Wort und der Konfidenzwert aus dem Korrelationsbild (Verfahrensschritt 123 gemäß Fig. 24), ein Wert, der angibt, ob der Mittelpunkt erzwungen oder extrahiert worden ist, die Abweichung des Mittelpunkts bezüglich der ersten Schätzung, Steigungsinformation in Ost-West- sowie Nord-Süd-Richtung der Matrix, die aus den Nachbarschaften abgeleitet wird, ein Wert der angibt, ob dieses Symbol gültig ist, d.h. dass alle Nachbarschaftszeiger belegt sind und dass alle Relationen wie "gehe zum Symbol nach Osten, gehe von dort nach Westen, komme beim Ausgangssymbol an" wahr sind, sowie ein Wert, der anzeigt, dass dieses Symbol bereits besucht worden ist und in die Wortmatrix aufgenommen wurde.

Die Instanzen der Datenstrukturen werden dem Mittelpunktsbild entsprechend vorinitialisiert und in den nächsten Schritten aktualisiert. Da die Symbolzellen innerhalb der Symbolmatrix gitterförmig angeordnet sind, hat ein innen liegendes Symbol direkte Nachbarn im Osten, Süden, Westen und Norden. Die Koordinaten der vier Nachbarn werden jeweils geschätzt (Verfahrensschritt 205 gemäß Fig. 38). Bei der Schätzung wird die Mittelpunktskoordinate des aktuellen Symbols bzw. der aktuellen Datenzelle entsprechend inkrementiert, wobei angenommen wird, dass in einer solchen lokalen Nachbarschaft die gitterähnliche Struktur der Anordnung der Symbole auch bei perspektivischer Verzerrung gegeben ist. Ist das Mittelpunktsbild registriert oder perspektivisch entzerrt, so erfolgt die Inkrementierung achsenparallel. Alternativ kann der Rotationsparameter aus den Verfahrensschritten 185 bzw. 182 gemäß Fig. 37 verwendet werden. Die Schrittweite leitet sich ebenfalls aus den Abmessungen der Symbolvorlage ab.

Ist an der geschätzten Position ein Mittelpunkt gefunden worden (Verfahrensschritt 206 gemäß Fig. 38), so wird der zugehörige Nachbarsymbolzeiger des aktuellen Symbols auf eben diesen gesetzt (Verfahrensschritt 207). Der Nachbar selbst bekommt das aktuelle Symbol referenziert (Verfahrensschritt 209), aber nur dann, wenn die Referenz nicht bereits belegt ist (Verfahrensschritt 208). Diese Zuweisungen werden nun für alle Nachbarschaftsrichtungen (Verfahrensschritt 210) und alle wahrscheinlichen Mittelpunkte (Verfahrensschritt 211) durchgeführt.

Durch die Abfrage, ob der Nachbar bereits markiert ist (Verfahrensschritt 208), können Ambiguitäten innerhalb einer Nachbarschaftsbeziehung entstehen, denn die Referenz in Verfahrensschritt 209 wird nicht zwingend auf das aktuelle Symbol zeigen, obwohl das aktuelle Symbol umgekehrt immer diesen Nachbarn referenziert (Verfahrensschritt 207).

In diesem Zusammenhang erfolgte die vorangegangene Sortierung nach absteigender Konfidenz (Verfahrensschritt 203), weil vermutet wird, dass Mittelpunkte von hoher

Konfidenz sehr nahe an wirklichen Symbolzentren liegen. Es wird weiter angenommen, dass Koordinaten der Nachbarzellen ausgehend von solchen Mittelpunkten mit hoher Konfidenz zuverlässiger geschätzt werden können, als von Mittelpunkten mit niedriger Konfidenz.

Da Ambiguitäten wahrscheinlich durch Symbolzentren mit niedriger Konfidenz verursacht wurden, können diese anschließend herausgefiltert werden (Verfahrensschritt 212). Da davon auszugehen ist, dass von Mittelpunktsrauschen stark betroffene Datenzellen innerhalb einer Symbolmatrix nur niedrige Konfidenzwerte aufweisen, können diese falschen Mittelpunkte zuverlässig identifiziert werden und verursachen keine Fehler bei der Synchronisation der Symbolzellen. Das Mittelpunktsrauschen innerhalb der relevanten Bereiche, in denen sich der Symbolcode befindet, wird somit entfernt. Weiteres Mittelpunktsrauschen außerhalb des Codebereichs kann jedoch nicht gänzlich gefiltert werden.

Die Suche nach einem Mittelpunkt in lokaler Umgebung der Schätzung in Verfahrensschritt 206 unterteilt sich in drei Schritte. Zunächst wird genau die geschätzte Position auf einen Mittelpunkt überprüft. Ist dort kein Mittelpunkt vorhanden, so wird die Ein-Pixel-Nachbarschaft der Schätzung abgesucht, sodass Quantisierungsfehler bei der Schätzung abgedeckt werden. Ist auch dort kein Mittelpunkt vorhanden, wird mit der Schätzung als Zentrum innerhalb eines Rechtecks entsprechend der Symbolvorlage (Verfahrensschritt 185 bzw. 182) nach dem Mittelpunkt mit maximaler Konfidenz gesucht, welcher dann ausgewählt wird.

Während des Markierens der Symbole ohne Nachbarschaftsambiguitäten in Verfahrensschritt 212 können für gültige Symbole die Steigungsparameter aktualisiert werden. Danach sind nur noch diejenigen Symbole in der Liste aufgeführt, die mit hoher Wahrscheinlichkeit wirklichen Symbolzentren bzw- -mittelpunkten zuzuordnen sind. Die Sortierung wird beibehalten und beginnend mit dem ersten gültigen Symbol wird der erste zusammenhängende Bereich abgelaufen und der dazu korrespondierende Teil der logischen Wortmatrix erstellt (Verfahrensschritt 213). Der resultierende Teilbereich ist hauptsächlich das Ergebnis der Nachbarschaftszuweisungen in Verfahrensschritt 207, sodass zumeist nur noch die Nachbarschaftszeiger verfolgt werden müssen (Verfahrensschritt 219 bzw. 220 gefolgt von Verfahrensschritt 225).

Zu Beginn wird die Wortmatrix initialisiert und ein Zeiger auf das aktuelle logische Element gesetzt (Verfahrensschritt 214). Die Position des ersten Elements in der Wortmatrix kann durch Quantisierung der Pixelkoordinate des initialen Mittelpunkts (Verfahrensschritt 213) unter Berücksichtigung der Abmessungen der Symbolvorlage (Verfahrensschritt 185 bzw. 182 gemäß Fig. 37) gesetzt werden. Das Wort und der Konfidenzwert werden aus der aktuellen Symbolinstanz an die aktuelle Position der Wortmatrix kopiert (Verfahrensschritt 215 gemäß Fig. 38). Die Symbolinstanz wird anschließend als besucht markiert (Verfahrensschritt 216). Dann werden zunächst die Symbolzeiger der östlichen Nachbarn verfolgt (Verfahrensschritt 217), wobei dies eine beliebige Auswahl darstellt. In Verfahrensschritt 220 wird der östliche Nachbar der aktuellen Symbolinstanz adressiert und wird dann selbst als aktuelles Symbol gesetzt (Verfahrensschritt 225). Der Positionszeiger der logischen Wortmatrix wird entsprechend der Laufrichtung um eine Schrittweite inkrementiert (Verfahrensschritt 226). Das Wort und der Konfidenzwert werden von der aktuellen Symbolinstanz an die aktuelle Position der Wortmatrix kopiert (Verfahrensschritt 227). Anschließend wird das aktuelle Symbol als besucht markiert (Verfahrensschritt 228). Hat das aktuelle Symbol weitere östliche Nachbarn oder ist das Ende des Mittelpunktsbildes nicht erreicht, so wird die Iteration in östlicher Richtung fortgesetzt (Verfahrensschritt 229). Ist das Ende des Bildes erreicht, so wird die Richtung umgekehrt und es wird von dem Symbol, bei dem die Iteration dieser logischen Zeile begonnen wurde, in umgekehrter westlicher Richtung gesucht (Verfahrensschritt 229). Ist auch hier das Bildende erreicht, so ist eine logische Zeile vollständig in die Wortmatrix aufgenommen worden. Es wird nun die nächste südlich gelegene Zeile abgelaufen (Verfahrensschritt 230). Dazu wird irgendein Symbol der aktuellen Zeile markiert, welches einen gültigen südlichen Nachbarn hat und diesem Zeiger gefolgt (Verfahrensschritt 231). Ist kein Symbol mit gültigem südlichen Nachbarn gefunden worden, so wird von demjenigen Symbol der aktuellen Zeile mit höchster Konfidenz aus ein Mittelpunkt in südlicher Richtung unter durch die Symbol-vorlage vorgegebener Schrittweite festgesetzt. Befindet sich genau dort oder in einer durch Quantisierungsfehler verursachten direkten lokalen Umgebung ein (ungültiger) Mittelpunkt, so wird dieser zu einem gültigen erhoben, andernfalls wird an dieser Position ein Mittelpunkt erzwungen.

Korrespondierend zu dieser Position wird in der Speichermatrix der Symbolinstanzen die dort befindliche Instanz initialisiert bzw. aktualisiert. Nach der Festlegung des folgenden Symbols (Verfahrensschritt 231) wird der Positionszeiger der Wortmatrix entsprechend inkrementiert (Verfahrensschritt 232), das Wort und der Konfidenzwert in die Wortmatrix kopiert (Verfahrensschritt 215) sowie das aktuelle Symbol als besucht markiert (Verfahrensschritt 216).

Nun erfolgt die Iteration auch dieser Zeile. Weitere südlichere Zeilen werden iteriert, bis sich keine weiteren Zeilen mehr im Bild befinden (Verfahrensschritt 230). Anschließend wird jede nicht bereits iterierte nördlichere Zeile nach dem gleichen Muster wie die südlichen abgelaufen (Verfahrensschritt 233). So ist der erste zusammenhängende Teil der logischen Wortmatrix erwandert worden. In Verfahrensschritt 236 wird geprüft, ob weitere gültige Symbole vorhanden sind, die noch nicht besucht bzw. erwandert worden sind. Diese könnten den Beginn eines weiteren zusammenhängenden Teils der Wortmatrix markieren, falls der Symbolcode in mehrere voneinander unabhängige Flächen aufgeteilt vorliegt. So werden auch weitere Teilbereiche nach gleichem Schema in die Wortmatrix eingetragen, wobei sichergestellt ist, dass keine logischen Positionen der Wortmatrix mehrfach adressiert werden.

Sind alle Teilbereiche des Symbolcodes erwandert (Verfahrensschritt 236), so wird die resultierende Wortmatrix mit Konfidenzwerten ausgegeben (Verfahrensschritt 239). Während der Iteration zusammenhängender Flächen können Lücken verbleiben, weshalb nicht jedes Symbol einen gültigen Nachbarn hat, sodass das Erwandern der Teilbereiche unter bloßer Verfolgung der Zeiger auf Nachbarsymbole nicht ausreichend ist. Derartige Lücken können bei flächigen Beschädigungen des Symbolcodes oder bei sehr starkem innerem Mittelpunktsrauschen auftreten. Sie sind dadurch verursacht, dass Nachbarschaftsambiguitäten eingetreten sind oder es sind keine Nachbarn existent. Auch an der Umgrenzung einer Symbolmatrix treten Lücken auf, da hier keine Nachbarn außerhalb des Codebereichs existieren, was verhindert, dass Randsymbole als gültig markiert werden.

Tritt eine Lücke auf, so wird die Position des Nachbarmittelpunkts geschätzt (Verfahrensschritt 221). Das Schätzen erfolgt, indem die Nachbarschaftszeiger des aktuellen Symbols so verfolgt werden, dass eine benachbarte Zeile betreten und dann in der neuen Zeile über oder unter dem zu schätzenden Symbol gestoppt wird. Die Position des dortigen Symbolzentrums wird mit der Position des aktuellen Symbolzentrums zur Schätzung verwendet. Zur Bildung eines eng gefassten Suchbereichs kann die Varianz der beiden bekannten Symbolmittelpunkte zu ihrer vorherigen Schätzung verwendet werden. Diese Information ist in jeder Symbolinstanz abgelegt.

Wird in dieser lokalen Umgebung ein (ungültiger) Mittelpunkt gefunden (Verfahrensschritt 222), so wird dieser zu einem gültigen erhoben und dessen Symbolinstanz neu initialisiert. Diese Symbolinstanz wird dann aktiv gesetzt (Verfahrensschritt 225). In dem Fall, dass dort kein Mittelpunkt gefunden wurde, wird an der geschätzten Position ein solcher Mittelpunkt erzwungen (Verfahrensschritt 224). Die dortige Symbolinstanz wird initialisiert und als gültig markiert. Die Symbolnachbarn werden soweit möglich aus den bekannten Nachbarschaften der Umgebung abgeleitet und gesetzt oder unmittelbar im Iterationsschritt darauf aktualisiert. Die neue Symbolinstanz wird auch von den Nachbarinstanzen aus referenziert. Die Schätzung der Position kann mit den für jedes gültige Symbol der Nachbarschaft vorhanden Steigungsinformationen verbessert oder verifiziert werden, um größere Lücken sicher zu überbrücken. Die so erhaltene Symbolinstanz wird anschließend als aktives Symbol aktuell gesetzt (Verfahrensschritt 225).

Dieses "Region Merging" Verfahren ist von seiner Zuverlässigkeit vergleichbar mit zuvor beschriebenen "Region Growing", hat jedoch eine geringere Laufzeit, wenn viele Ausreißer vorhanden sind. Da Laufzeit und Zuverlässigkeit zwei hier gegensätzliche Anforderungen sind, können alle Variationen der zuvor beschriebenen Merkmale in den Verfahren kombiniert und implementiert werden.

Erfindungsgemäß soll adaptiv entschieden werden, welches der implementierten Verfahren in einer spezifischen Instanz verwendet und wie dieses Verfahren ggf. durch Auswahl bestimmter Parameter angepasst wird. Ziel dieser Entscheidung ist ein Reduzieren der Laufzeit unter der Bedingung, dass die Zuverlässigkeit nicht abnimmt. Zur Entscheidung werden die Konfidenzwerte der wahrscheinlichen Mittelpunkte berücksichtigt. Dazu kann ein Schwellenwert gebildet werden, denn eine allgemein hohe Konfidenz ist ein Anzeichen für wenig Mittelpunktsrauschen. Dazu kann beispielsweise der Median aller Konfidenzwerte berechnet werden. Bei einer Symbolgröße von 16 mal 16 Pixel lässt sich auch geringeres Mittelpunktsrauschen erwarten als bei einer Symbolgröße mit Seitenlängen von 6 mal 6 Pixel, weshalb dann ein aufwendiges Verfahren wie in Fig. 38 oder der optionale Teil in Fig. 24 nicht angewandt werden muss. Ein weiteres Argument für ein einfacheres Verfarhren ist eine geringe relative Anzahl von wahrscheinlichen Mittelpunkten bezogen auf die Größe des Bildausschnittes. Auch kann eine geringe zu erwartende perspektivische Verzerrung einfachere Verfahren ermöglichen. Unter Berücksichtigung dieser Überlegungen können optionale Teile des Verfahrens gemäß Fig. 24 ausgelassen werden oder es kann das Verfahren aus Fig. 38 angewandt werden, um eine hohe Zuverlässigkeit zu gewährleisten.

Sind beispielsweise auf einem Transportband mehrere Objekte (ähnlich wie Fig. 5 dargestellt) mit Symbolcodes mit verschiedener Aufbringungsfläche unterwegs, so soll eine Möglichkeit bestehen, jede Ausprägung des Symbolcodes nach seiner Form zu identifizieren. Nachdem die Wortmatrix mit Konfidenzwerten erstellt worden ist (Verfahrensschritt 170 gemäß Fig. 31, Verfahrensschritt 193 gemäß Fig. 37, Verfahrensschritt 239 gemäß Fig. 38), wird im Verlaufe des weiteren Verfahrens zum Lesen des Symbolcodes eine Zuordnung erfolgen, zu welchem der auf verschiedenartigen Objekten aufgebrachten Symbolcodes die gerade vorliegende Wortmatrix korrespondiert. Die Wortmatrix kann auch in Datenzellen, die nicht einem Symbol zuzuordnen sind, einen Wert enthalten, der aus einem lokalen Maximum im Korrelationsbild oder aus einem erzwungenen Mittelpunkt herrührt, der während des Erwanderns zur Überbrückung von Lücken gesetzt worden ist. Gegebenenfalls ist auch aufgrund der Besetztheit oder Unbesetztheit einer Datenzelle die Aufbringungsfläche des Symbolcodes nicht direkt ersichtlich. Zudem kann der extrahierten Wortmatrix eine nicht bestimmte Verschiebung der logischen Symbolzellen zu ihrer Vorlage - der nach dem Enkodieren erstellten Symbolmatrix - inneliegen.

Es ist jedoch erforderlich der gelesenen Wortmatrix eindeutig ihre originale Vorlage zuordnen zu können, denn die auszuführende Dekodierung ist möglicherweise an eine bestimmte Symbolmatrix gebunden, sodass die Zusatzinformation über die vorliegende Form der Wortmatrix zum erfolgreichen Dekodieren eine Voraussetzung ist. Da die grafischen Symbole in jedem Symbolcode ihr Erscheinungsbild unverändert beibehalten und keine speziellen Abfolgen von Symbolen zur Identifizierung einer Version des Symbolcodes eingearbeitet sind, wird zu jedem der von äußerer oder innerer Form verschiedenen Symbolcodes (Verfahrensschritt 61 gemäß Fig. 7) bzw. dessen Aufbringungsfläche ein Flächen-Histogramm angelegt, wie es in Fig. 15 ausschnittsweise und beispielhaft dargestellt ist. Dazu wird zunächst der geometrische Schwerpunkt der Symbolmatrix, dargestellt durch das Kreuz in Fig. 15, bestimmt (Verfahrensschritt 62 gemäß Fig. 7). Die Lage des Schwerpunkts wird dabei in logischen Zeilen- und Spalten-Indizes der Symbolmatrix angegeben, wobei Spalten und Zeilen die Anordnung der grafischen Symbole beschreiben.

Von dem erhaltenen Schwerpunkt als Zentrum ausgehend wird der gesamte Symbolcode in quadratische gleichgroße Teilflächen unterteilt, die ebenso in Fig. 15 einzeichnet sind. Die Rasterung der Symbolmatrix in Teilflächen ist so gewählt, dass mehrere Symbole einer Fläche zugewiesen werden können. Würde die Rasterung genau eins Betragen, so enthielte jeder Block höchstens ein einziges Symbol und wäre damit der Symbolmatrix äquivalent. Aber hier ist eine gröbere Rasterung erwünscht, um die Form des Symbolcodes robust zu charakterisieren.

Enthält eine Teilfläche mindestens ein Symbol oder mehrere Symbole, so wird ihr der Wert Eins zugewiesen. Ist kein Symbol in einer Teilfläche enthalten, so wird ihr der Wert Null zugewiesen. Das so entstandene Histogramm wird in einer Datenbank oder einem statischen Speicher abgelegt (Verfahrensschritt 64 gemäß Fig. 7). Die Datenbank enthält die Flächen-Histogramme aller auf Objekten angebrachter Symbolcodes (Verfahrensschritt 65) und eine Zuordnung der Flächen-Histogramme zu den jeweiligen Symbolcodes.

Wurde eine nicht bekannte Version eines Symbolcodes in einer Erfassungsstation erwandert (Verfahrensschritt 66), soll anschließend dessen Version anhand seiner Aufbringungsfläche bestimmt werden, bevor die Dekodierung der Wortmatrix erfolgt. In Verfahrensschritt 67 wird die Matrix aus Symbolinstanzen (Verfahrensschritt 66) iteriert, um den Schwerpunkt zu berechnen (Verfahrensschritt 68). Dabei werden nur Symbole betrachtet, deren Mittelpunkt zuvor nicht erzwungen worden ist. Zur weiteren Verbesserung der Berechnung können auch Symbole aussortiert werden, deren Mittelpunkt nicht exakt oder nur mit Quantisierungsfehler beim Erwandern geschätzt worden ist. Alternativ dazu kann anhand der Quantisierung des erfassten Bildbereichs durch Einheiten der Abmessungen der Symbolvorlage eine Obergrenze der Anzahl zu erwartender Symbolmittelpunkte im Bild definiert werden, sofern der Bildausschnitt nicht signifikant perspektivisch verzerrt ist.

Aus der Liste der ansteigend nach Konfidenz sortierten Symbolmittelpunkte, wird dann genau diese Anzahl erster Symbolmittelpunkte berücksichtigt. Nach der gleichen Weise wie in Verfahrensschritt 63 wird nun in Verfahrensschritt 69 das Flächen-Histogramm erstellt. Weil der zuvor ermittelte der Schwerpunkt Zentrum des Histogramms ist und das Histogramm selbst grob auflösend ist, kann kompensiert werden, dass die Symbolmatrix im erfassten Bild zu ihrem Original verschoben ist und dass der eben berechnete Schwerpunkt durch ein nicht gänzlich entferntes, aber durch die Auswahl bestimmter Symbole stark reduziertes Mittelpunktsrauschen nicht exakt berechnet worden ist.

Wurden einzelne Symbole an Begrenzungen des Symbolcodes nicht berücksichtigt, so trägt dies zusätzlich zu möglicherweise gestörten Werten im Histogramm bei. In Verfahrensschritt 70 wird nun dasjenige Flächen-Histogramm in der angelegten Datenbank gesucht, welches dem gerade vorliegenden am nächsten kommt bzw. weitestgehend entspricht. Da alle vorhandenen Symbolcodes dort ihr Flächen-Histogramm abgelegt haben (Verfahrensschritt 60 bis 65), muss das gerade gesuchte dort enthalten sein. Zum Histogramm-Vergleich werden jeweils zwei Histogramme mit ihrem Schwerpunkt übereinandergelegt, und dann werden die Differenz aller Werte enthaltenen Datenzellen eines Histogramms zu dem zuvor ermittelten aktuellen Histogramm (Verfahrensschritt 69) berechnet und deren Absolutbeträge aufsummiert. Dasjenige Histogramm aus der Datenbank mit der niedrigsten Fehlersumme wird als nächstes ausgewählt (Verfahrensschritt 70).

Ferner können aus der Datenbank weitere Informationen entnommen werden, die den zugehörigen Symbolcode beschreiben und zur Dekodierung des Symbolcodes notwendig bzw. hilfreich sind (Verfahrensschritt 71). Mit dieser Zusatzinformation wird das Dekodierverfahren parametrisiert (Verfahrensschritt 72) und anschließend ein Versuch zur Dekodierung gemacht (Verfahrensschritt 73). Schlägt dieser Versuch fehl, weil die Histogramm-Zuordnung (70) fehlerhaft war (74), so kann ein weiteres nächstliegendes Histogramm aus der Datenbank gelesen werden. Dies kann dann der Fall sein, wenn Symbolcodes in ihrer Aufbringungsfläche zu ähnlich zueinander sind.

Die Bildverarbeitung gibt zum Ende ihres erfindungsgemäßen Dekodierverfahrens eine Wortmatrix aus, die zusätzlich Konfidenzwerte zur Bestimmung der Erkennungsqualität und Erkennungssicherheit enthält. Die Konfidenzwerte sind zu jedem Wort statistisch unabhängig durch einen einzigen Filter erstellt. Ein weiterführendes Verfahren zur Dekodierung dieser Wortmatrix kann die Konfidenzwerte nutzen, um eine effiziente Fehlerkorrektur zu ermöglichen.

Ein mögliches Verfahren ist in Fig. 40 vorgeschlagen. Zunächst wird die Wortmatrix durch eine Enkodierung aus einem binären Datenstrom (Verfahrensschritt 90) erstellt. Beispielsweise ist die zu erzeugende Wortmatrix in lokal unabhängige Wortblöcke unterteilt, die jeweils eine fixe Wortlänge des binären Datenstroms enkodieren (Verfahrensschritt 91). Zur Fehlerkorrektur können zusätzliche Kopien solcher Wortblöcke in die resultierende Wortmatrix (Verfahrensschritt 94) eingefügt werden (Verfahrensschritt 93).

Zur Dekodierung wird eine so enkodierte Wortmatrix mit Konfidenzwerten vom Bildverarbeitungssystem erhalten (Verfahrensschritt 95). Der Algorithmus zur Dekodierung identifiziert die unabhängigen Codeblöcke innerhalb der Wortmatrix. Es werden aufgrund der eingeführten Redundanz zur Dekodierung jedoch nicht alle diese Codeblöcke benötigt. Nun können redundante Codeblöcke absteigend nach der festgestellten Konfidenz sortiert werden (Verfahrensschritt 96), sodass beim Dekodieren der Codeblöcke (Verfahrensschritt 97) zunächst nur solche mit hoher Erkennungssicherheit berücksichtigt werden. Da diese aufgrund ihrer Erkennungsqualität mit größerer Wahrscheinlichkeit fehlerfrei von der Bildverarbeitung extrahiert und in der Wortmatrix vorhanden sind, werden so nur gültige Codeblöcke zur Dekodierung verwendet, was deren Laufzeit reduziert, da nicht unnötigerweise versucht wird, einen fehlerhaften Codeblock zu dekodieren. Die Rekonstruktion des enkodierten binären Datenstroms (Verfahrensschritt 99) erfolgt somit effizient.

Aus dem vorbeschrieben, sehr detailliert dargestellten Beispiel des erfindungsgemäßen Symbolcodes und eines zugehörigen Verfahrens zu seinem Lesen ergeben sich wesentliche Vorzüge sowohl des Symbolcodes als auch des Dekodierverfahrens, welche sehr robust handhabbar sind und das Aufbringen von Informationen auf Bauteile in einem Direkt Part Marking Verfahren (DPM) auch im Bereich üblicher Produktionsstra-βen ermöglichen. Auch in dem konkreten Anwendungsbeispiel sind eine Vielzahl von vorteilhaften Merkmalen und Funktionen beschrieben, die jede für sich in Zusammenhang mit dem erfindungsgemäßen Symbolcode eingesetzt werden können, auch losgelöst von anderen Merkmalen, in deren Zusammenhang sie beschrieben sind, da sie auch losgelöst von diesen anderen Merkmale einen wesentlichen Beitrag für die Lesbarkeit und Robust des Symbolcodes leisten.

Nachfolgend werden noch einige konkrete Anwendungsbeispiele beschrieben.

Ein erfindungsgemäßer Symbolcode kann auf einer gekrümmten reflektierenden Oberfläche, mit oder ohne translatorische Transformation, mit und ohne Skalierungsänderung aufgebracht werden. In Fig. 5 sind zylindrische Objekte metallischer Oberfläche mit einem Symbolcode versehen. Sie befinden sich auf einem Transportband und werden in der Reihenfolge A, B, C von der Station erfasst. Der von der Erkennungsstation erfasste Bildausschnitt ist durch ein gestricheltes Rechteck bei Position A markiert. Die äußerlich ähnlichen Objekte sind zur Unterscheidung mit einem Symbolcode markiert.

Die Station steuert eine Produktionsweiche. Der Symbolcode selbst ist im erfassten Bild durch die zylindrische Form der Oberfläche perspektivisch verzerrt. Aufgrund des Transportbandes tritt keine Änderung der Rotations- und Skalierungsparameter auf, sodass diese fixiert werden können. Jedoch sind möglicherweise nur Teile der Symbolmatrix sichtbar, wie in den Positionen B und C. Da der grafische Symbolcode unabhängig von speziellen Ankersymbolen zur Lageerkennung und Entzerrung ist, kann der Symbolcode erfolgreich extrahiert werden. Aufgrund der redundanten Fehlerkorrektur, die ein Enkodierungs- und Dekodierungsalgorithmus bietet, kann auch der binäre Datensatz wiederhergestellt werden.

In Fig. 6 ist ein weiteres Anwendungsbeispiel gezeigt. Dort sind mehrere Symbolcodes auf matter oder reflektierender und gekrümmter Oberfläche aufgebracht, mit rotatorischer und translatorischer Transformation sowie unterschiedlicher Skalierung. Der obere Teil der Fig. 6 zeigt das Objekt aus Sicht einer Videokamera zur bildgebenden Erfassung. Im unteren Teil der Fig. 6 ist eine seitliche Ansicht desselben Objekts dargestellt. Die Station mit der in Draufsicht ausgerichteten Videokamera dient zur Qualitätskontrolle. Wegen örtlichen Beschränkungen der Prüfstation und der Anforderung, dass das zu prüfende zusammengesetzte Bauteil in einer einzigen Aufnahme ausgewertet wird, wurde der Kopf einer Schraubverbindung zur Markierung mit einem Symbolcode ausgewählt. Eine Anbringung auf den Seitenflächen der Schraubverbindungen hätte zur Folge, dass einige dieser Objekte durch davorliegende Teile perspektivisch verdeckt würden, sodass bei seitlicher Ausrichtung der Kamera nicht jeder Symbolcode zugleich erfasst werden kann.

Das Aufbringen des Symbolcodes auf dem Kopf der Schraubverbindungen erfordert einen kompakten Symbolcode, um die gewünschte Information auf kleiner Fläche unterbringen zu können. Einige der Schraubverbindungen weisen eine gewölbte Form des Kopfes auf, die perspektivische Verzerrungen des Symbolcodes verursacht. Alle Köpfe sind metallisch, einige glänzend, andere matt. Außerdem sind die Köpfe von verschiedener Materialstärke, sodass beim Aufbrennen durch Laser nicht der bestmögliche Kontrast erreicht werden kann. Die Schraubverbindungen weisen eine unterschiedliche Höhe auf, sodass die Symbolcodes im erfassten Bild unterschiedlich skaliert sind. Aufgrund des Verschraubens weist jeder Symbolcode im Bild unterschiedliche Rotationsparameter auf.

Hier wird jeder der Symbolcodes eines Kopfes unabhängig voneinander dekodiert, wozu jeweils ein Bildausschnitt definiert wird, welcher nur einen der Symbolcodes enthält. Die Eigenschaften des in der Erfindung beschriebenen Symbolcodes und dessen Extraktionsverfahren, insbesondere die verwendete normalisierte Korrelation, erlauben es, jeden der Symbolcodes zuverlässig zu dekodieren.

Mit der Erfindung werden ein grafischer Symbolcode und Verfahren zu dessen Extraktion in einem Bildverarbeitungsprozess beschrieben. Die beiden grafischen Symbole zur binären Enkodierung selbst weisen eine komplementäre Helligkeit bzw. Heiligkeitsverteilung auf und kodieren jeweils ein einzelnes Wort, d.h. einen binären Wert. Ihre innere Kontur ist derart optimiert, dass die Symbole nicht nur sicher und zuverlässig gelesen werden können, sondern in einem DPM-Verfahren durch Aufbrennen mittels eines Lasers auf eine meist metallische oder kunststoffartige Objektoberfläche auf einem Bauteil aufgebracht werden können. Dabei sind spezifische Eigenschaften des Brennvorgangs analysiert worden, um eine robuste grafische Form der Symbole zu erreichen, die auch bei üblichen Brennfehlern eine Erkennung und Unterscheidung ermöglicht. Zudem werden bei dieser Form Auftragungszeiten minimiert, da jedes Symbol in einem Zug ohne Absetzen eines Stifts in vektororientierter Weise gezeichnet werden kann.

Mit einer grauwertnormalisierten Korrelation wird gemäß einem weiteren Aspekt der Erfindung eine Extraktionsmethode gewählt, die lokale Veränderungen der Kontrastverhältnisse berücksichtigt, wie sie durch inhomogene Beleuchtung, lokale Verschmutzung, lokale Reflexion des Oberflächenmaterials und/oder durch Beschränkungen der Materialstärke verursacht werden können.

Um relative lokale Maxima als Evidenz für ein grafisches Symbol zu erfassen, wird gemäß einem weiteren Aspekt der Erfindung ein Dilatations-Filter auf ein Grauwertbild von Konfidenzwerten angewandt, sodass keine fixe Schwellenwerte gesetzt werden müssen und sich die Feststellung eines Maximum adaptiv an die lokale Grauwertumgebung im Korrelationsbild anpasst.

Der vorgeschlagene Symbolcode ist erfindungsgemäß ein Symbolcode ohne spezifische Symbole zur Synchronisation oder Lageerkennung und zur perspektivischen Entzerrung, wodurch dessen Dichte hoch ist und keine Single-Point-of-Failure Situation vorliegt, wenn solche Symbole nicht extrahiert werden können.

Nachteile im Laufzeitverhalten der aufwendigeren Korrelation im Vergleich zu morphologischen Operatoren werden erfindungsgemäß dadurch minimiert, dass bei vorzugsweise komplementärer Helligkeit der grafischen Symbole nur eine einzige Filterung notwendig ist, um beide Typen grafischer Symbole zu lokalisieren. Vorverarbeitungsschritte zur Bildaufbereitung entfallen völlig, und dies reduziert die Ausführungszeit zusätzlich.

Mit der Einführung von unabhängigen Konfidenzwerten zu jedem extrahierten grafischen Symbol hat dieser Symbolcode eine Eigenschaft, die von einem erfindungsgemäßen Dekodierungsalgorithmus zum effizienten Einsatz redundanter Information zur Fehlerkorrektur genutzt werden kann. Die Konfidenzwerte ermöglichen es erfindungsgemäß adaptiv zu entscheiden, ob bei guter Qualität ein schneller, aber nicht ganz so robuster Algorithmus zur Erwanderung der grafischen Symbole und deren Transformation in eine Wortmatrix angewandt werden kann, oder aufgrund schlechter Qualität ein robuster, aber zeitaufwändiger Algorithmus angewandt wird.

Die Aufbringungsfläche eines Symbolcodes sowie deren interne Kodierung sind frei wählbar. Die Dekodierung erfolgt nach der Zuordnung der extrahierten Symbole zu einer der vorbestimmten möglichen Formen des Symbolcodes.

## Patentansprüche

1. Zweidimensionaler Symbolcode zur Darstellung binärer Daten, der aus mehreren nebeneinander angeordneten grafischen Symbolen aufgebaut ist, wobei der Symbolcode aus genau zwei verschiedenen Symbolen gleicher Fläche gebildet ist, die sich in ihrer flächigen Helligkeitsverteilung unterscheiden und jeweils einen Wert eines binären Datenworts kodieren, wobei die Symbole eine komplementäre Helligkeitsverteilung aufweisen,
**dadurch kennzeichnet,**
**dass** jedes Symbol aus genau zwei Bereichen besteht, wobei den beiden Bereichen jeweils ein unterschiedlicher Helligkeitswert zugeordnet ist.

2. Zweidimensionaler Symbolcode nach Anspruch 1
**dadurch kennzeichnet,**
**dass** der Symbolcode mehrere Symbolpaare komplementärer Helligkeitsverteilung aufweist, die sich in ihrer Farbe unterscheiden.

3. Verfahren zum Lesen eines zweidimensionalen Systemcodes, der aus mehreren nebeneinander angeordneten grafischen Symbolen aufgebaut ist, wobei der Symbolcode aus genau zwei verschiedenen Symbolen gleicher Fläche gebildet ist, die sich in ihrer flächigen Helligkeitsverteilung unterscheiden und jeweils einen Wert eines binären Datenworts kodieren, wobei die beiden Symbole eine komplementäre Helligkeitsverteilung aufweisen,
**dadurch kennzeichnet,**
**dass** jedes Symbol aus genau zwei Bereichen besteht, wobei den beiden Bereichen jeweils ein unterschiedlicher Helligkeitswert zugeordnet ist und dass auf den Systemcode ein Filter angewendet wird, welcher mit der Helligkeitsverteilung eines der beiden komplementären Symbole übereinstimmt, wobei im Falle einer Übereinstimmung das eine Symbol und im Falle einer Nicht-Übereinstimmung das andere Symbol erkannt wird.

4. Verfahren nach Anspruch 3, **dadurch gekennzeichnet, dass** als Filter ein Korrelationsfilter verwendet wird, der das Ergebnis einer Abstandsfunktion ermittelt, welche die Entfernung der vorliegenden Helligkeitsverteilung von der Helligkeitsverteilung des Korrelationsfilters angibt.

5. Verfahren nach Anspruch 4,
**dadurch kennzeichnet,**
**dass** das Korrelationsergebnis nach Anwendung des Korrelationsfilters als Konfidenzwert ermittelt wird.

6. Verfahren nach Anspruch 5
**dadurch kennzeichnet,**
**dass** bei dem Abtasten des Systemcodes mit dem Korrelationsfilter ein Konfidenzwert für jede Abtastposition ermittelt und zum Erkennen der Symbole in dem Systemcode verwendet wird.

7. Verfahren nach Anspruch 6,
**dadurch kennzeichnet,**
**dass** aus den Konfidenzwerten die wahrscheinlichsten Mittelpunkte der Symbole in dem Symbolcode ermittelt werden.

8. Verfahren nach Anspruch 7,
**dadurch kennzeichnet,**
**dass** ausgehend von einem wahrscheinlichen Mittelpunkt die anderen Mittelpunkte des Symbole erwandert und deren Symbole gelesen werden.

9. Verfahren nach einem der Ansprüche 3 bis 8
**dadurch kennzeichnet,**
**dass** die Farbe der Symbole ausgewertet wird.

10. Verfahren nach Anspruch 9,
**dadurch kennzeichnet,**
**dass** ein Konfidenzwert für eine Farbverteilung der Symbole ermittelt wird.

11. Verfahren nach einem der Ansprüche 3 bis 10,
**dadurch kennzeichnet,**
**dass** der zeitliche Verlauf der Konfidenzwerte in einem Bereich des Systemcodes ausgewertet wird.

12. Verfahren nach einem der Ansprüche 3 bis 11,
**dadurch kennzeichnet,**
**dass** der Filter und der Symbolcode durch ein Abbildungsverfahren aufeinander abgebildet werden.

13. Verwendung eines zweidimensionalen Systemcodes gemäß einem der Ansprüche 1 oder 2, der auf Bauteile eines Produktes in einer automatisierten Produktionslinie aufgebracht ist und Informationen zur Kennzeichnung der Bauteile und/oder zur Steuerung des Produktionsablaufs aufweist,
**dadurch kennzeichnet,**
**dass** der Systemcode durch an der Produktionslinie positionierten Lesegeräten erfasst und durch ein übergeordnetes Steuerungssystem ausgewertet wird.

14. Vorrichtung zum Lesen eines zweidimensionalen Systemcodes mit einer optischen Aufnahmeeinrichtung und einer Auswerteeinrichtung mit einem Prozessor, der zur Verarbeitung der von der Aufnahmeeinrichtung gelieferten optischen Signale und zur Dekodierung des zweidimensionalen Symbolcodes eingerichtet ist,
**dadurch kennzeichnet,**
**dass** in den Prozessor der Auswerteeinheit ein Verfahren nach einem der Ansprüche 3 bis 12 implementiert ist.

## Claims

1. Two-dimensional symbol code for representing binary data, which symbol code is constructed from a plurality of graphical symbols arranged next to one another, wherein the symbol code is formed from precisely two different symbols having the same surface area which differ in their areal brightness distribution and each code a value from a binary data word, wherein the symbols have a complementary brightness distribution,
**characterized**
**in that** each symbol comprises precisely two regions, wherein the two regions each have a different associated brightness value.

2. Two-dimensional symbol code according to Claim 1,
**characterized**
**in that** the symbol code has a plurality of symbol pairs with a complementary brightness distribution which differ in their color.

3. Method for reading a two-dimensional system code which is constructed from a plurality of graphical symbols arranged next to one another, wherein the symbol code is formed from precisely two different symbols having the same surface area which differ in their areal brightness distribution and each code a value from a binary data word, wherein the two symbols have a complementary brightness distribution,
**characterized**
**in that** each symbol comprises precisely two regions, wherein the two regions each have a different associated brightness value and in that the system code has a filter applied to it which matches the brightness distribution of one of the two complementary symbols, wherein in the event of a match one symbol is recognized and in the event of no match the other symbol is recognized.

4. Method according to Claim 3, **characterized in that** the filter used is a correlation filter which ascertains the result of an interval function which indicates the distance of the present brightness distribution from the brightness distribution of the correlation filter.

5. Method according to Claim 4,
**characterized**
**in that** the correlation result is ascertained as a confidence value following application of the correlation filter.

6. Method according to Claim 5,
**characterized**
**in that** when the system code is scanned with the correlation filter a confidence value is ascertained for each scan position and is used to recognize the symbols in the system code.

7. Method according to Claim 6,
**characterized**
**in that** the confidence values are used to ascertain the most probable centers of the symbols in the symbol code.

8. Method according to Claim 7,
**characterized**
**in that** from a probable center the other centers of the symbols are explored and the symbols thereof are read.

9. Method according to one of Claims 3 to 8,
**characterized**
**in that** the color of the symbols is evaluated.

10. Method according to Claim 9,
**characterized**
**in that** a confidence value is ascertained for a color distribution of the symbols.

11. Method according to one of Claims 3 to 10,
**characterized**
**in that** the time profile of the confidence values in a region of the system code is evaluated.

12. Method according to one of Claims 3 to 11,
**characterized**
**in that** the filter and the symbol code are mapped onto one another by a mapping method.

13. Use of a two-dimensional system code according to either of Claims 1 or 2 which has been applied to components of a product in an automated production line and has information for denoting the components and/or for controlling the production flow,
**characterized**
**in that** the system code is captured by readers positioned on the production line and is evaluated by a superordinate control system.

14. Apparatus for reading a two-dimensional system code having an optical recording device and an evaluation device having a processor which is set up to process the optical signals delivered by the recording device and to decode the two-dimensional symbol code,
**characterized**
**in that** the processor in the evaluation unit has a method according to one of Claims 3 to 12 implemented in it.

## Revendications

1. Code de symbole bidimensionnel destiné à représenter des données binaires, lequel code est construit à partir d'une pluralité de symboles graphiques disposés côte à côte, dans lequel le code de symbole est formé de seulement deux symboles différents de même surface, qui se différencient par leur distribution de luminosité surfacique et qui codent respectivement une valeur d'un mot de données binaire, dans lequel les symboles présentent une distribution de luminosité complémentaire, **caractérisé en ce que** chaque symbole est constitué de seulement deux zones, une valeur de luminosité différente étant respectivement affectée aux deux zones.

2. Code de symbole bidimensionnel selon la revendication 1, **caractérisé en ce que** le code de symbole comprend une pluralité de paires de symboles ayant des distributions de luminosité complémentaires, qui se différencient par leur couleur.

3. Procédé ce lecture d'un code système bidimensionnel, qui est construit à partir d'une pluralité de symboles graphiques disposés côte à côte, dans lequel le code de symbole est formé de seulement deux symboles différents de même surface, qui se différencient par leur distribution de luminosité surfacique et qui codent respectivement une valeur d'un mot de données binaire, dans lequel les deux symboles présentent une distribution de luminosité complémentaire, **caractérisé en ce que** chaque symbole est constitué de seulement deux zones, une valeur de luminosité différente étant respectivement affectée aux deux zones et **en ce qu'**on applique au code de symbole un filtre qui concorde avec la distribution de luminosité de l'un des deux symboles complémentaires, dans lequel, dans le cas d'une concordance, l'un des symboles est reconnu et dans le cas d'une non-concordance, l'autre symbole est reconnu.

4. Procédé selon la revendication 3, **caractérisé en ce qu'**on utilise en tant que filtre un filtre de corrélation qui détermine le résultat d'une fonction de distance qui donne la distance de la distribution de luminosité effective par rapport à la distribution de luminosité du filtre de corrélation.

5. Procédé selon la revendication 4, **caractérisé en ce que** le résultat de corrélation est déterminé par utilisation du filtre de corrélation en tant que valeur de confiance.

6. Procédé selon la revendication 5, **caractérisé en ce que** lors de balayage du code système au moyen du filtre de corrélation, on détermine une valeur de confiance pour chaque position de balayage et on l'utilise pour reconnaître les symboles dans le code système.

7. Procédé selon la revendication 6, **caractérisé en ce qu'**on détermine à partir des valeurs de confiance le point central le plus probable des symboles du code de symbole.

8. Procédé selon la revendication 7, **caractérisé en ce que**, à partir d'un point central probable, les autres points centraux du symbole sont parcourus et leurs symboles sont lus.

9. Procédé selon l'une quelconque des revendications 3 à 8, **caractérisé en ce que** la couleur des symboles est évaluée.

10. Procédé selon la revendication 9, **caractérisé en ce qu'**une valeur de confiance d'une distribution de couleur des symboles est déterminée.

11. Procédé selon l'une quelconque des revendications 3 à 10, **caractérisé en ce que** l'évolution temporelle des valeurs de confiance est évaluée dans une région du code système.

12. Procédé selon l'une quelconque des revendications 3 à 11, **caractérisé en ce que** des images du filtre et du code de symbole peuvent être formées l'une sur l'autre par un procédé de formation d'images.

13. Utilisation d'un code système bidimensionnel selon l'une quelconque des revendications 1 ou 2, qui est appliqué à un composant d'un produit dans une chaîne de production automatisée et qui comprend des informations destinées à identifier les composants et/ou à commander le processus de production, **caractérisé en ce que** le code système est détecté par des appareils de lecture positionnés sur la chaîne de production et est évalué par un système de commande de niveau supérieur.

14. Dispositif destiné à lire un code système bidimensionnel au moyen d'un dispositif d'acquisition optique et d'un dispositif d'évaluation comportant un processeur, qui est conçu pour traiter les signaux optiques délivrés par le dispositif d'acquisition et pour décoder le code de symbole bidimensionnel, **caractérisé en ce qu'**un procédé selon l'une quelconque des revendications 3 à 12 est mis en oeuvre dans le processeur de l'unité d'évaluation.
